# EUROPÄISCHE PATENTSCHRIFT

(11) **EP 4 168 865 B1**
(45) Veröffentlichungstag und Bekanntmachung des Hinweises auf die Patenterteilung: **13.09.2023**
(21) Anmeldenummer: 21749823.7
(22) Anmeldetag: 27.07.2021
(51) Int. Cl.: G05B 19/042, G06F 16/903, G06F 11/34, G06F 11/30, G06F 11/36

(54) **VERFAHREN ZUM STEUERN EINES AUTOMATISIERUNGSSYSTEMS MIT VISUALISIERUNG VON PROGRAMMOBJEKTEN EINES STEUERPROGRAMMS DES AUTOMATISIERUNGSSYSTEMS UND AUTOMATISIERUNGSSYSTEM**
METHOD FOR CONTROLLING AN AUTOMATION SYSTEM WITH VISUALISATION OF PROGRAM OBJECTS OF A CONTROL PROGRAM OF THE AUTOMATION SYSTEM, AND AUTOMATION SYSTEM
PROCÉDÉ DE COMMANDE D'UN SYSTÈME D'AUTOMATISATION AVEC VISUALISATION D'OBJETS DE PROGRAMME D'UN PROGRAMME DE COMMANDE DU SYSTÈME D'AUTOMATISATION, ET SYSTÈME D'AUTOMATISATION

(30) Priorität: 28.07.2020 DE 102020119853
(43) Veröffentlichungstag der Anmeldung: 26.04.2023
(73) Patentinhaber: Beckhoff Automation GmbH, 33415 Verl (DE)
(72) Erfinder: DREESEN, Ralf, 33397 Rietberg (DE)
(74) Vertreter: Patentanwaltskanzlei WILHELM & BECK
(86) Internationale Anmeldenummer: PCT/EP2021/070993
(87) Internationale Veröffentlichungsnummer: WO 2022/023338

(56) Entgegenhaltungen:
- US-A1- 2013 275 908
- US-A1- 2019 052 563
- Anonymous ET AL: "The Stack Frame", , 22. Juni 2020 (2020-06-22), Seiten 1-6, XP055844126, Gefunden im Internet: URL:https://web.archive.org/web/2020062211 0921/http://www.cs.uwm.edu/classes/cs315/B acon/Lecture/HTML/ch10s07.html [gefunden am 2021-09-23]

## Beschreibung

Die Erfindung betrifft ein Verfahren zum Steuern eines Automatisierungssystems, das eine Visualisierung von Programmobjekten eines Steuerprogramms des Automatisierungssystems ermöglicht. Die Erfindung betrifft ferner ein Automatisierungssystem zum Ausführen des Verfahrens.

Diese Patentanmeldung beansprucht die Priorität der deutschen Patentanmeldung DE 10 2020 119 853.1, deren Offenbarungsgehalt hiermit durch Rückbezug aufgenommen wird.

In der Automatisierungstechnik werden Teilnehmer eines Automatisierungssystems für gewöhnlich durch eine Steuerung des Automatisierungssystems mittels zyklischen Ausführens eines entsprechenden Steuerprogramms angesteuert. Für jeden Zyklus, in dem die jeweiligen Teilnehmer den jeweiligen Steueranweisungen des Steuerprogramms entsprechend gesteuert werden, werden von der Steuerung Informationen aufgenommen und gespeichert, die den Zustand des Automatisierungssystems und des Steuerprogramms beschreiben. Ein sogenannter Programmzustand umfasst die vollständige Information, die notwendig ist, den Zustand des Automatisierungssystems und des Steuerprogramms wiederzugeben. Ein Programmzustand kann beispielsweise die im Steuerprogramm verwendeten Variablen, Funktionen, Datenbanken oder sonstige Objekte umfassen. Ferner kann der Programmzustand Informationen bezüglich der Teilnehmer des Automatisierungssystems oder bezüglich im Automatisierungssystem ablaufender Prozesse umfassen.

Ein derartiger Programmzustand kann nach Abschluss jedes Steuerzyklus neu erstellt werden, sodass jederzeit der aktuelle Zustand des Automatisierungssystems und des Steuerprogramms wiedergegeben werden kann.

Bei erneutem Ausführen des Steuerprogramms in einem folgenden Steuerzyklus kann das Steuerprogramm auf die im globalen Zustand gespeicherten Daten zurückgreifen und somit die Steuerung des Automatisierungssystems in dem folgenden Zyklus auf Basis des Zustands des Automatisierungssystems des vorherigen Steuerzyklus fortsetzen.

Im laufenden Betrieb eines Automatisierungssystems ergeben sich häufig Situationen, in denen verschiedene Parameter nachgeregelt oder Abläufe verändert oder angepasst werden müssen, um einen optimalen beziehungsweise optimierten Ablauf des Automatisierungssystems erreichen oder gewährleisten zu können. Um dem Nutzer zu ermöglichen, bestimmte Parameter des durch das Steuerprogramm gesteuerten Automatisierungsprozesses zu verfolgen, um so den Verlauf des Automatisierungsprozesses beobachten zu können, ergibt sich das Problem, dem Nutzer entsprechende im Programmzustand gespeicherte Parameter oder Objekte des Steuerprogramms inklusive der jeweiligen Werte anzuzeigen. Um dem Nutzer eine aussagekräftige Anzeige bereitstellen zu können, die eine unmittelbar selbsterklärende Information bezüglich des Zustands des Automatisierungsprozesses beziehungsweise des ausgeführten Steuerprogramms bereitstellen zu können, bedarf es einer Anzeige von vollqualifizierten Bezeichnungen der anzuzeigenden Parameter oder Objekte. Vollqualifizierte Bezeichnungen können hierbei den vollständigen Namen des jeweiligen Parameters oder Objektes umfassen.

Problematisch ist die Darstellung der vollqualifizierten Bezeichnungen insbesondere bei Zeigervariablen. Hier stellt sich das Problem, dass der Wert einer Zeigervariable eine Speicheradresse des durch die Zeigervariable referenzierten Objekts ist. Das Anzeigen der referenzierten Adresse als Wert der Zeigervariablen ermöglicht jedoch keine Bereitstellung unmittelbar selbsterklärender Information für den Nutzer, da anhand der referenzierten Adresse nicht unmittelbar bestimmbar ist, welches Objekt durch die Zeigervariable referenziert wird.

Aus der Druckschrift US 2013/275908 A1 ist Verfahren zum Abbilden zwischen Hierarchien in einem industriellen Automatisierungssystem bekannt. Aus der Druckschrift Jason W. Bacon "The Stack Frame", 11. November 2020, Seiten 1-6, XP055844100, UEL:https://web.archive.org/web/20201111165200/https://www.cs.uwm.edu/classes/cs31 5/Bacon/Lecture/HTML/ch10s07.htmls ist ein Stack Frame bekannt.

Es besteht daher die Notwendigkeit, die Information von Objekten des Programmzustands und gegebenenfalls des Stacks, in dem lokale Objekte des Steuerprogramms gespeichert sind, inklusive von Zeigervariablen beziehungsweise von Zeigerelementen des Steuerprogramms in unmittelbar verständlicher Weise darzustellen. Dies ist insbesondere während der Ausführung des Steuerprogramms zum Steuern eines Automatisierungsprozesses und während des Ausführens eines Debugging-Prozesses eines Steuerprogramms von Interesse.

Es ist daher eine Aufgabe der Erfindung, ein verbessertes Verfahren zum Steuern eines Automatisierungssystems mit Visualisierung von Programmobjekten eines Steuerprogramms des Automatisierungssystems und ein Automatisierungssystem zum Ausführen des Verfahrens bereitzustellen.

Die Aufgabe wird durch ein Verfahren und ein Automatisierungssystem gemäß den unabhängigen Ansprüchen gelöst. Bevorzugte Ausführungsformen sind Gegenstand der abhängigen Ansprüche.

Nach einem Aspekt der Erfindung wird ein Verfahren zum Steuern eines Automatisierungssystems mit Visualisierung von Programmobjekten eines Steuerprogramms des Automatisierungssystems bereitgestellt, wobei eine Steuerung des Automatisierungssystems ein Steuerprogramm umfasst, wobei in einem ersten Speicherbereich der Steuerung ein Programmzustand des Steuerprogramms gespeichert ist, wobei der Programmzustand eine Mehrzahl von Programmobjekten des Steuerprogramms umfasst, wobei die Programmobjekte in einer vorbestimmten Anordnungsstruktur des Programmzustands relativ zueinander angeordnet sind, wobei über die Anordnungsstruktur jedem Programmobjekt eine Speicherposition und eine Speichergröße zugeordnet sind, wobei eine Speicherposition eines Programmobjekts eine Anzahl von Speicherstellen definiert, um die ein Programmobjekt in einem Speicherbereich zu einer ersten Speicherstelle des Programmzustands beabstandet gespeichert ist, wobei eine Speichergröße eines Programmobjekts eine Anzahl von Speicherstellen definiert, die ein Speicherobjekt in einem Speicherbereich belegt, wobei der Programmzustand wenigstens ein Zeigerelement umfasst, wobei durch das Zeigerelement ein Zeigerobjekt referenziert ist, wobei das Zeigerobjekt ein Programmobjekt des Steuerprogramms ist, wobei in einem zweiten Speicherbereich der Steuerung ein Stack des Steuerprogramms eingerichtet ist, und wobei im Stack während einer Laufzeit des Steuerprogramms Programmobjekte speicherbar sind, umfassend: Ausführen des Steuerprogramms in einem Ausführschritt;
Ermitteln einer Zeigeradresse des Zeigerelements in einem Zeigeradressenermittlungsschritt, wobei die Zeigeradresse einer durch das Zeigerelement referenzierten Speicheradresse entspricht;
Überprüfen, ob die Zeigeradresse des Zeigerelements im ersten Speicherbereich des Programmzustands oder im zweiten Speicherbereich des Stacks angeordnet ist, in einem ersten Überprüfungsschritt;
Falls die Zeigeradresse des Zeigerelements im ersten Speicherbereich des Programmzustands angeordnet ist, Bestimmen eines ersten Adressenoffsets der Zeigeradresse des Zeigerelements in einem ersten Adressenoffsetbestimmungsschritt, wobei der erste Adressenoffset eine Anzahl von Speicherstellen definiert, um die die Zeigeradresse des Zeigerelements zu einer ersten Speicheradresse des Programmzustands im ersten Speicherbereich beabstandet ist;
Identifizieren eines Programmobjekts, das gemäß der Anordnungsstruktur des Programmzustands um den ersten Adressenoffset zu der ersten Speicherstelle des Programmzustands beabstandet ist, als ein erstes Programmobjekt, dessen Speicheradresse im ersten Speicherbereich der Zeigeradresse des Zeigerelements entspricht, in einem ersten Programmobjektidentifizierungsschritt;
Identifizieren des ersten Programmobjekts mit dem durch das Zeigerelement referenzierten Zeigerobjekt in einem Zeigerobjektidentifizierungsschritt;
Bestimmen einer vollqualifizierten Bezeichnung des identifizierten Zeigerobjekts in einem Vollbezeichnungsbestimmungsschritt; und
Anzeigen der vollqualifizierten Bezeichnung des durch das Zeigerelement referenzierten Zeigerobjekts auf einem mit der Steuerung verbundenen Displayelement in einem Anzeigeschritt.

Hierdurch wird der technische Vorteil erreicht, dass ein Verfahren zum Steuern eines Automatisierungssystems mit Visualisierung von Programmobjekten eines Steuerprogramms zum Steuern des Automatisierungssystems bereitgestellt werden kann, bei dem während des Ausführens des Steuerprogramms durch eine Steuerung des Automatisierungssystems Programmobjekte eines Programmzustands in vollqualifizierten Bezeichnungen der jeweiligen Programmobjekts in einem mit der Steuerung verbundenen Displayelement angezeigt werden können. Hierdurch kann einem Nutzer des Automatisierungssystems eine unmittelbar verständliche Information des jeweils angezeigten Programmobjekts bereitgestellt werden. Insbesondere ermöglicht das Verfahren eine Darstellung eines durch ein Zeigeelement des Programmzustands des Steuerprogramms referenzierte Programmobjekts in der entsprechenden vollqualifizierten Bezeichnung.

Ein Programmzustand eines Steuerprogramms ist im Sinne der Anmeldung eine umfassende Menge von Programmobjekten des Steuerprogramms, die in einer vorbestimmten Anordnungsstruktur angeordnet sind. Die Programmobjekte können hierbei beliebige Variablen oder Datenobjekte des Steuerprogramms sein und verschiedene Datentypen wie Feldtypen, Verbundtypen, Zeichenkettentypen oder Zahlentypen aufweisen. Innerhalb der fest vorbestimmten Anordnungsstruktur sind die einzelnen Programmobjekte innerhalb des Programmzustands zueinander angeordnet, wobei hierüber Relationen zwischen einzelnen Programmobjekten, Referenzierungen verschiedener Programmobjekte sowie Verschachtelungen beziehungsweise Vererbungszuordnungen mehrerer Programmobjekte umfasst ist, bei der eine Mehrzahl von Programmobjekten als übergeordnete und untergeordnete Programmobjekte ineinander verschachtelt angeordnet sind. Die Anordnungsstruktur des Programmzustands bleibt während des Ausführens des Steuerprogramms unverändert, sodass Relationen zwischen Programmobjekten, Referenzierungen von Programmobjekten und Verschachtelungen mehrerer Programmobjekte während des Ausführens des Steuerprogramms unverändert bleiben.

Ein Zeigerelement ist im Sinne der Anmeldung eine Zeigervariable, die ein Zeigerobjekt referenziert. Ein Zeigerobjekt ist im Sinne der Anmeldung ein beliebiges Programmobjekt des Steuerprogramms.

Ein Stack ist im Sinne der Anmelder ein Laufzeitkeller, in dem lokale Variable und Funktionen während der Laufzeit des Steuerprogramms beziehungsweise während einer Laufzeit von Unterprogrammen des Steuerprogramms gespeichert sind.

Eine Zeigeradresse ist im Sinne der Anmeldung eine durch das Zeigerelement referenzierte Speicheradresse des Zeigerobjekts.

Eine Speicherstelle ist im Sinne der Anmeldung eine Einheit des Speichers, in der eine Dateneinheit gespeichert werden kann. Eine Speicheradresse ist im Sinne der Anmeldung eine mit einer Adresse versehene Speicherstelle des Speichers, die zur Referenzierung bzw. Adressierung eines in der jeweiligen Speicherstelle des Speichers gespeicherten Datenobjekts verwendbar ist.

Während des Ausführens des Steuerprogramms werden die Programmobjekte des Steuerprogramms mit Werten versehen, die im Programmzustand gespeichert werden und den Zustand des ausgeführten Steuerprogramms beziehungsweise den Zustand eines durch das Steuerprogramm gesteuerten Automatisierungsprozesses wiedergeben. Die Werte der Programmobjekte stellen hierbei einen aktuellen Zustand des zu steuernden Automatisierungsprozesses dar. Hierauf wird eine durch ein Zeigerelement des Programmzustands referenzierte Zeigeradresse eines Zeigerobjekts ermittelt und bestimmt, ob diese Zeigeradresse in einem Speicherbereich des Programmzustands angeordnet ist. Hierzu kann einfach der Wert der jeweiligen Zeigervariablen beziehungsweise des jeweiligen Zeigerelements ausgelesen werden.

Falls die Zeigeradresse im Speicherbereich des Programmzustands angeordnet ist, wird ein erster Adressenoffset der Zeigeradresse zu einer ersten Speicheradresse des Programmzustands bestimmt. Der erste Adressenoffset beschreibt hierbei eine Differenz zwischen der Zeigeradresse und der ersten Speicheradresse des Programmzustands. Der Programmzustand mit der während des Ausführens des Steuerprogramms unveränderbaren Anordnungsstruktur der Mehrzahl von Programmobjekten kann als ein umfassendes Datenobjekt beispielsweise eines Verbundtyps interpretiert werden, das in einem hierfür vorgesehenen ersten Speicherbereich des Speichers gespeichert ist. Innerhalb der Adressenstruktur des Speichers umfasst der erste Speicherbereich des Programmzustands somit eine bekannte absolute erste Speicherstelle, die der ersten Speicheradresse des für die Speicherung des Programmzustands reservierten Speicherbereichs innerhalb des Speichers entspricht.

Auf Basis des bestimmten ersten Adressenoffsets und der Anordnungsstruktur des Programmzustands, in der jedem Programmobjekt eine Speicherposition und eine Speichergröße innerhalb des Programmzustands zugeordnet ist, wird im Folgenden ein erstes Programmobjekt identifiziert, dessen Speicheradresse im Speicherbereich des Programmzustands der Zeigeradresse entspricht. Hierzu wird für jedes Programmobjekt des Programmzustands auf Basis der jeweiligen Speicherposition und Speichergröße eine Anzahl von Speicherstellen bestimmt, um die das jeweilige Programmobjekt zur ersten Speicheradresse des Programmzustands beabstandet ist. Das Programmobjekt, das zur ersten Speicheradresse des Programmzustands um die Anzahl von Speicherstellen beabstandet ist, die durch den ersten Adressenoffset bestimmt wurde, wird als erstes Programmobjekt identifiziert, dessen Speicheradresse im Speicherbereich des Programmzustands der Zeigeradresse entspricht.

Da die absoluten Speicheradressen der einzelnen Datenobjekte des Programmzustands unbekannt sind, werden über die bekannte Anordnungsstruktur des Programmzustands, die jedem Programmobjekte eine Speicherposition innerhalb des Programmzustand zuordnet, und der bekannten absoluten ersten Speicheradresse des Programmzustands jedem Programmobjekt des Programmzustands somit über den Abstand zur ersten Speicheradresse eine relative Adresse relativ zur absoluten ersten Speicheradresse des Programmzustands zugeordnet. Über den ersten Adressenoffset wird die Zeigeradresse in eine relative Adresse relativ zur ersten Speicheradresse des Programmzustands umgewandelt, sodass das Programmobjekt, das innerhalb des Programmzustands eine relative Adresse aufweist, die der relativen Adresse der Zeigeradresse, sprich dem ersten Adressenoffset, entspricht als das Programmobjekt des Programmzustands identifizierbar ist, das eine absolute Adresse aufweist, die der Zeigeradresse entspricht.

Darauf folgend wird das erste Programmobjekt mit dem durch das Zeigerelement referenzierten Zeigerobjekt identifiziert.

Hierauf folgend wird eine vollqualifizierte Bezeichnung des referenzierten Zeigerobjekts in einem Displayelement angezeigt.

Eine vollqualifizierte Bezeichnung eines Programmobjekts ist im Sinne der Anmeldung eine Bezeichnung, die eine eindeutige Identifizierung des jeweiligen Programmobjekts ermöglicht. Eine vollqualifizierte Bezeichnung kann beispielsweise einen Namen bzw. eine sprechende Bezeichnung sein und eine vollständige Auflistung von Referenzen bzw. Verschachtelungen des Programmobjekts umfassen.

Hierdurch kann ein Verfahren bereitgestellt werden, das für beliebige Zeigerelemente eines Programmzustands eines Steuerprogramms eines Automatisierungssystems eine vollqualifizierte Bezeichnung der jeweils referenzierten Zeigerobjekte angeben und somit eine unmittelbar verständliche Information der Inhalte der jeweiligen Zeigerelemente bereitstellen kann.

Nach einer Ausführungsform ist ein Programmobjekt des Programmzustands als ein übergeordnetes zweites Programmobjekt ausgebildet, wobei das übergeordnete zweite Programmobjekte wenigstens ein untergeordnetes Teilprogrammobjekt umfasst, wobei das erste Programmobjekt als ein untergeordnetes Teilprogrammobjekt vom übergeordneten zweiten Programmobjekt umfasst ist, und wobei der erste Programmobjektidentifizierungsschritt umfasst:
Identifizieren eines Programmobjekts des Programmzustands, für das gemäß der jeweiligen Speicherposition und Speichergröße ein Speicherbereich definiert ist, der eine Speicherstelle umfasst, die um den ersten Adressenoffset zur ersten Speicherstelle des Programmzustands beabstandet ist, als das übergeordnete zweite Programmobjekt und Identifizieren des übergeordneten zweiten Programmobjekts als das Programmobjekt, das im ersten Speicherbereich des Programmzustands einen Speicherbereich belegt, der die Zeigeradresse des Zeigerelements umfasst, in einem zweiten Programmobjektidentifizierungsschritt;
Bestimmen eines zweiten Adressenoffsets in einem zweiten Adressenoffsetbestimmungsschritt, wobei der zweite Adressenoffset durch eine Differenz zwischen dem ersten Adressenoffset und der ersten relativen Speicheradresse des zweiten Programmobjekts bestimmt ist;
Bestimmen eines Datentyps des übergeordneten zweiten Programmobjekts in einem zweiten Datentypbestimmungsschritt, wobei der Datentyp eine Datenstruktur des übergeordneten zweiten Programmobjekts bestimmt, in der eine Anzahl von untergeordneten Teilprogrammobjekten des übergeordneten zweiten Programmobjekts definiert ist und für jedes untergeordnete Teilprogrammobjekt eine Speichergröße und eine Speicherposition innerhalb der Datenstruktur des übergeordneten zweiten Programmobjekts bestimmt sind; Identifizieren eines untergeordneten Teilprogrammobjekts des übergeordneten zweiten Programmobjekts, das gemäß der Datenstruktur des zweiten Programmobjekts um den zweiten Adressenoffset zu einer ersten Speicherstelle des übergeordneten zweiten Programmobjekts beabstandet ist, und Identifizieren des untergeordneten Teilprogrammobjekts des übergeordneten zweiten Programmobjekts als das erste Programmobjekt, dessen Speicheradresse der Zeigeradresse des Zeigerelements entspricht.

Hierdurch wird der technische Vorteil erreicht, dass eine vollqualifizierte Bezeichnung eines Zeigerobjekts bereitgestellt werden kann, das eine erste Schachtelungstiefe aufweist und ein untergeordnetes Programmobjekt eines übergeordneten Programmobjekts ist.

Hierzu wird zunächst auf Basis des ersten Adressenoffsets und der Anordnungsstruktur des Programmzustands ein übergeordnetes zweites Programmobjekt identifiziert, das im Speicherbereich des Programmzustands einen Bereich belegt, der die durch das Zeigerelement referenzierte Zeigeradresse umfasst. Hierzu wird wiederum für jedes Programmobjekt des Programmzustands eine Anzahl von Speicherstellen bestimmt, die das jeweilige Programmobjekt von einer ersten Speicheradresse des Programmzustands beabstandet ist. Hierzu werden die Speicherpositionen und die Speichergrößen der einzelnen Programmobjekte gemäß der Anordnungsstruktur berücksichtigt und für im Speicherbereich des Programmzustands nacheinander angeordnete Programmobjekte ein entsprechender Abstand zur ersten Speicheradresse des Programmzustands bestimmt.

Darauffolgend wird ein zweiter Adressenoffset bestimmt, der sich aus einer Differenz zwischen dem ersten Adressenoffset und der ersten relativen Speicheradresse zweiten Programmobjekts ergibt, und eine Anzahl von Speicherstellen definiert, um die die Zeigeradresse des Zeigerelements zu einer ersten relativen Speicheradresse des übergeordneten zweiten Programmobjekts beabstandet ist.

Eine erste relative Speicheradresse eines Programmobjekts ist im Sinne der Anmeldung eine erste Speicheradresse, die von dem jeweiligen Programmobjekt im Speicher belegt wird, die jedoch keine absolute Adresse des Speichers ist, sondern relativ zu dem jeweils übergeordneten Objekt bestimmt wird. Das übergeordnete Objekt kann der Programmzustand, der Stack oder ein übergeordnetes Programmobjekt sein, von dem das jeweilige Programmobjekt umfasst ist. Die erste relative Speicheradresse wird damit relativ zu der jeweiligen Struktur des übergeordneten Objekts bestimmt und gibt einen Abstand des jeweiligen Programmobjekts zu der ersten Speicheradresse des jeweils übergeordneten Objekts an. Falls das übergeordnete Objekt ein übergeordnetes Programmobjekt ist, gibt die erste relative Speicheradresse des vom übergeordneten Programmobjekte umfassten Programmobjekts einen Abstand des umfassten Programmobjekts zur ersten relativen Speicheradresse des jeweils übergeordneten Programmobjekts an. Die erste relative Speicheradresse eines Programmobjekts beschreibt somit eine Anzahl von Speicherstellen, um die eine erste Speicherstelle des jeweiligen Programmobjekts, zu einer ersten Speicherstelle eines jeweils übergeordneten Programmobjekts beabstandet ist. Erste relative Speicherstellen und Adrssenoffsets können somit addiert und subtrahiert werden, da beide Größen Anzahlen von Speicherstellen beschreiben.

Darauffolgend wird ein Datentyp des identifizierten übergeordneten zweiten Programmobjekts bestimmt. Der Datentyp des übergeordneten zweiten Programmobjekts kann beispielsweise ein Feldtyp, ein Verbundtyp oder ein Zeichenkettentyp sein, der wiederum eine Mehrzahl untergeordneter Programmobjekte umfasst. Durch die Bestimmung des Datentyps wird ferner eine Datenstruktur des übergeordneten zweiten Programmobjekts ermittelt, die eine Anzahl der untergeordneten Programmobjekte umfasst und jedem untergeordneten Programmobjekt eine Speicherposition und Speichergröße innerhalb des übergeordneten zweiten Programmobjekts zuordnet.

Unter Berücksichtigung der Datenstruktur des übergeordneten zweiten Programmobjekts wird im Folgenden ein untergeordnetes Programmobjekt des übergeordneten zweiten Programmobjekts identifiziert, das innerhalb der Datenstruktur des übergeordneten zweiten Programmobjekts um die Anzahl von Speicherstellen des zweiten Adressenoffsets zu einer ersten relativen Speicheradresse des übergeordneten zweiten Programmobjekts beabstandet ist. Das identifizierte untergeordnete Programmobjekt des übergeordneten zweiten Programmobjekts wird somit als erstes Programmobjekt identifiziert, das im Speicherbereich des Programmzustands eine Speicheradresse aufweist, die der Zeigeradresse des Zeigerelements entspricht.

Hierdurch kann eine vollqualifizierte Bezeichnung eines Zeigerobjekts bereitgestellt werden, das ein Unterobjekt eines Programmobjekts des Programmzustands ist. Hierdurch kann beispielsweise eine vollqualifizierte Bezeichnung eines durch das Zeigerelement referenzierten Elements eines Feldtyps bzw. eine Komponente eines Verbundtyps bzw. ein Element eines Zeichenkettentyps bereitgestellt werden. Die vollqualifizierte Bezeichnung kann hierbei die Bezeichnung des übergeordneten zweiten Programmobjekts, sprich des Feldtyps, des Verbundtyps oder des Zeichenkettentyps, sowie die Bezeichnung des ersten Programmobjekts, sprich des Elements des Feldtyps, der Komponente des Verbundtyps bzw. des Elements des Zeichenkettentyps umfassen.

Ein übergeordnetes Programmobjekt ist im Sinne der Anmeldung ein Datenobjekt des Programmzustands, das wiederum untergeordnete Programmobjekte umfasst. Ein übergeordnetes Programmobjekt kann daher ein Datenobjekt eines Verbundtyps, eines Feldtyps oder eines Zeichenkettentyps sein, dass wiederum Elemente oder Komponenten umfasst. Untergeordnete Programmobjekte sind im Sinne der Anmeldung Programmobjekte des Programmzustands die von einem übergeordneten Programmobjekt umfasst sind. Diese können somit beispielsweise Elemente oder Komponenten eines Datenobjekts eines Verbundtyps, eines Feldtyps oder eines Zeichenkettentyps sein. Untergeordnete Programmobjekte können wiederum untergeordnete Programmobjekte umfassen und somit relativ zu den umfassten untergeordneten Programmobjekte als übergeordnete Programmobjekte fungieren. Beispielsweise kann eine Datenobjekt eines Verbundtyps Komponenten umfassen, die wiederum von einem Verbundtyp sind und selbst weitere Komponenten umfassen.

Über die Datenstruktur des übergeordneten Programmobjekts, die jedem untergeordneten Programmobjekt innerhalb der Datenstruktur eine Speicherposition und Speichergröße zuordnet, und durch die Bestimmung des zweiten Adressenoffsets, der den relativen Abstand der Zeigeradresse zur ersten relativen Speicheradresse des übergeordneten Programmobjekts bestimmt und sich aus der Differenz aus dem ersten Adressenoffset und der ersten relativen Speicheradresse des zweiten Programmobjekts ergibt, wird die Zeigeradresse des Zeigerelements in eine relative Adresse relativ zur ersten relativen Speicheradresse des übergeordneten Programmobjekts umgewandelt.

Die erste relative Speicheradresse des übergeordneten Programmobjekts ist über die Speicherstruktur und die erste Speicheradresse des Programmzustands bestimmbar. Innerhalb der Datenstruktur des übergeordneten Programmobjekts lassen sich somit jedem untergeordneten Programmobjekt des übergeordneten Programmobjekts eine relative Adresse zuordnen, die einer Anzahl von Speicherstellen entspricht, die das jeweilige untergeordnete Programmobjekt von der ersten relativen Speicheradresse des übergeordneten Programmobjekts beabstandet ist. Dasjenige untergeordnete Programmobjekt, das innerhalb der Datenstruktur des übergeordneten Programmobjekts um eine Anzahl an Speicherstellen zu der ersten relativen Speicheradresse des übergeordneten Programmobjekts beabstandet ist, die dem zweiten Adressenoffset entspricht, wird als das untergeordnete Programmobjekt identifiziert, dessen Speicheradresse der Zeigeradresse entspricht.

Nach einer Ausführungsform ist ein Programmobjekt des Programmzustands als ein übergeordnetes drittes Programmobjekt ausgebildet, wobei das übergeordnete dritte Programmobjekt wenigstens ein untergeordnetes Teilprogrammobjekt umfasst, wobei das übergeordnete zweite Programmobjekt als ein untergeordnetes Teilprogrammobjekt vom übergeordneten dritten Programmobjekt umfasst ist, und wobei der zweite Programmobjektidentifizierungsschritt umfasst:
Identifizieren eines Programmobjekts des Programmzustands, für das gemäß der jeweiligen Speicherposition und Speichergröße ein Speicherbereich definiert ist, der eine Speicherstelle umfasst, die um den ersten Adressenoffset zur ersten Speicherstelle des Programmzustands beabstandet ist, als das übergeordnete dritte Programmobjekt und Identifizieren des übergeordneten dritten Programmobjekts als das Programmobjekt, das im ersten Speicherbereich des Programmzustands einen Speicherbereich belegt, der die Zeigeradresse des Zeigerelements umfasst, in einem dritten Programmobjektidentifizierungsschritt;
Bestimmen eines dritten Adressenoffsets in einem dritten Adressenoffsetbestimmungsschritt, wobei der dritte Adressenoffset durch eine Differenz zwischen dem ersten Adressenoffset und einer ersten relativen Speicheradresse des dritten Programmobjekts bestimmt ist;
Bestimmen eines Datentyps des übergeordneten dritten Programmobjekts in einem dritten Datentypbestimmungsschritt, wobei der Datentyp eine Datenstruktur des übergeordneten dritten Programmobjekts bestimmt, in der eine Anzahl von untergeordneten Teilprogrammobjekten des übergeordneten dritten Programmobjekts definiert ist und für jedes untergeordnete Teilprogrammobjekt eine Speichergröße und eine Speicherposition innerhalb der Datenstruktur des übergeordneten zweiten Programmobjekts bestimmt sind; Identifizieren eines untergeordneten Teilprogrammobjekts des übergeordneten dritten Programmobjekts, das gemäß der Datenstruktur des übergeordneten dritten Programmobjekts um den dritten Adressenoffset zu einer ersten Speicherstelle des übergeordneten dritten Programmobjekts beabstandet ist, und Identifizieren des untergeordneten Teilprogrammobjekts des übergeordneten dritten Programmobjekts als das übergeordnete zweite Programmobjekt, das im ersten Speicherbereich des Programmzustands einen Speicherbereich belegt, der die Zeigeradresse des Zeigerelements umfasst,
wobei der zweite Adressenoffset durch eine Differenz zwischen dem ersten Adressenoffset und einer Summe aus der ersten relativen Speicheradresse des dritten Programmobjekts und einer ersten relativen Speicheradresse des zweiten Programmobjekts bestimmt ist.

Hierdurch wird ein technischer Vorteil erreicht, dass eine vollqualifizierte Bezeichnung eines durch das Zeigerelement referenzierten Zeigerobjekts bereitgestellt werden kann, das ein untergeordnetes Programmobjekt eines Programmobjekts des Programmzustands mit dreifacher Schachtelungstiefe ist.

Hierzu wird zunächst auf Basis der Anordnungsstruktur des Programmzustands und des ersten Adressenoffsets ein übergeordnetes drittes Programmobjekt identifiziert, das im Speicherbereich des Programmzustands einen Bereich belegt, der die Zeigeradresse des Zeigerelements umfasst.

Darauffolgend wird ein dritter Adressenoffset bestimmt, der sich aus einer Differenz zwischen dem ersten Adressenoffset und der ersten relativen Speicheradresse des dritten Programmobjekts ergibt, und eine Anzahl von Speicherstellen definiert, um die die Zeigeradresse zu einer ersten relativen Speicheradresse des identifizierten übergeordneten dritten Programmobjekts beabstandet ist.

Hierauf folgend wird ein Datentyp des übergeordneten dritten Programmobjekts bestimmt, der eine Datenstruktur des übergeordneten dritten Programmobjekts definiert und eine Anzahl von untergeordneten Teilprogrammobjekten des übergeordneten dritten Programmobjekts definiert und jedem untergeordneten Teilprogrammobjekt eine Speichergröße und eine Speicherposition innerhalb der Datenstruktur zuordnet.

Auf Basis der Datenstruktur des Datentyps des übergeordneten dritten Programmobjekts und auf Basis des dritten Adressenoffsets wird im Folgenden das zweite übergeordnete Programmobjekt als ein untergeordnetes Teilprogrammobjekt des übergeordneten dritten Programmobjekts als das untergeordnete Teilprogrammobjekt identifiziert, das in der Datenstruktur des übergeordneten dritten Programmobjekts um den dritten Adressenoffset zur ersten relativen Speicheradresse des übergeordneten dritten Programmobjekts beabstandet ist und somit im Speicherbereich des Programmzustands einen Bereich belegt, der die Zeigeradresse umfasst.

Darauf folgend wird gemäß dem oben Beschriebenen der zweite Adressenoffset und der Datentyp des identifizierten und übergeordneten zweiten Programmobjekts bestimmt und auf Basis des zweiten Adressenoffsets und der Datenstruktur des übergeordneten zweiten Programmobjekts das erste Programmobjekt als das Zeigerobjekt identifiziert. Der zweite Adressenoffset ergibt sich hierbei aus einer Differenz zwischen dem ersten Adressenoffset und einer Summe aus den ersten relativen Speicheradressen der dritten und zweiten Programmobjekte.

Die vollqualifizierte Bezeichnung des Zeigerobjekts kann hierbei den Namen des ersten Programmobjekts, den Namen des übergeordneten zweiten Programmobjekts und den Namen des übergeordneten dritten Programmobjekts sowie eine Verschachtelungshierarchie umfassen. Hierdurch können somit für Zeigerelemente, die beispielsweise Elemente eines Feldtyps, der wiederum ein Element eines Feldtyps ist, vollqualifizierte Bezeichnungen angegeben werden.

Die Vorgehensweise ist analog zu der oben beschriebenen Vorgehensweise für die Ausführungsform im Fall des übergeordneten zweiten Programmobjekts, in der jeweils relative Adressen der umfassten untergeordneten Programmobjekte als Abstande der Speicherpositionen der jeweiligen untergeordneten Programmobjekte relativ zu einer ersten relativen Speicheradresse des jeweils übergeordneten Programmobjekts bestimmt werden. Dasjenige untergeordnete Programmobjekt, dessen relative Adresse dem jeweiligen Adressenoffset entspricht, beziehungsweise einen Speicherbereich belegt, von dem eine Speicheradresse umfasst ist, die zur ersten Speicheradresse um den jeweiligen Adressenoffset beabstandet ist, wird als Programmobjekt identifiziert, dass dessen Speicheradresse der Zeigeradresse entspricht, beziehungsweise dessen Speicherbereich die Zeigeradresse umfasst. Dieser Vorgang wird für die jeweiligen Schachtelungstiefen fortgesetzt, bis das Zeigerobjekt als dasjenige untergeordnete Programmobjekt identifiziert wird, dessen Speicheradresse der Zeigeradresse entspricht.

Nach einer Ausführungsform ist ein Programmobjekt des Programmzustands als ein übergeordnetes n-tes Programmobjekt ausgebildet, wobei das übergeordnete n-te Programmobjekt in n-1-facher Schachtelungstiefe einander umfassende untergeordnete Teilprogrammobjekte umfasst, wobei das übergeordnete zweite Programmobjekt als ein untergeordnetes Teilprogrammobjekt in n-2-ter Schachtelungstiefe vom übergeordneten n-ten Programmobjekt umfasst ist, wobei das erste Programmobjekt als ein untergeordnetes Teilprogrammobjekt in n-1-ter Schachtelungstiefe vom übergeordneten n-ten Programmobjekt umfasst ist, wobei n eine natürlich Zahl und größer oder gleich 4 ist, und wobei der erste Programmobjektidentifizierungsschritt umfasst:
Identifizieren eines Programmobjekts des Programmzustands, für das gemäß der jeweiligen Speicherposition und Speichergröße ein Speicherbereich definiert ist, der eine Speicherstelle umfasst, die um den ersten Adressenoffset zur ersten Speicherstelle des Programmzustands beabstandet ist, als das übergeordnete n-te Programmobjekt und Identifizieren des übergeordneten n-ten Programmobjekts als das Programmobjekt, das im ersten Speicherbereich des Programmzustands einen Speicherbereich belegt, der die Zeigeradresse des Zeigerelements umfasst, in einem n-ten Programmobjektidentifizierungsschritt;
Bestimmen eines n-ten Adressenoffsets in einem n-ten Adressenoffsetbestimmungsschritt, wobei der n-te Adressenoffset durch eine Differenz zwischen dem ersten Adressenoffset und einer ersten relativen Speicheradresse des n-ten Programmobjekts bestimmt ist;
Bestimmen eines Datentyps des übergeordneten n-ten Programmobjekts in einem n-ten Datentypbestimmungsschritt, wobei der Datentyp eine Datenstruktur des übergeordneten n-ten Programmobjekts bestimmt, in der eine Anzahl von untergeordneten Teilprogrammobjekten des übergeordneten n-ten Programmobjekts definiert ist und für jedes untergeordnete Teilprogrammobjekt eine Speichergröße und eine Speicherposition innerhalb der Datenstruktur des übergeordneten n-ten Programmobjekts bestimmt sind;
Identifizieren eines untergeordneten Teilprogrammobjekts des übergeordneten n-ten Programmobjekts, das gemäß der Datenstruktur des übergeordneten n-ten Programmobjekts um den n-ten Adressenoffset zu einer ersten Speicherstelle des übergeordneten n-ten Programmobjekts beabstandet ist, und Identifizieren des untergeordneten Teilprogrammobjekts des übergeordneten n-ten Programmobjekts als ein übergeordnetes n-1-tes Programmobjekt, das im ersten Speicherbereich des Programmzustands einen Speicherbereich belegt, der die Zeigeradresse des Zeigerelements umfasst in einem n-1-ten Programmobjektidentifizierungsschritt;
Bestimmen eines n-1-ten Adressenoffsets in einem n-1-ten Adressenoffsetbestimmungsschritt, wobei der n-1-te Adressenoffset durch eine Differenz zwischen dem ersten Adressenoffset und einer Summe aus der ersten relativen Speicheradresse des n-ten Programmobjekts und einer ersten Speicheradresse des n-1-ten Programmobjekts bestimmt ist;
Bestimmen eines Datentyps des übergeordneten n-1-ten Programmobjekts in einem n-1-ten Datentypbestimmungsschritt, wobei der Datentyp eine Datenstruktur des übergeordneten n-1-ten Programmobjekts bestimmt, in der eine Anzahl von untergeordneten Teilprogrammobjekten des übergeordneten n-1-ten Programmobjekts definiert ist und für jedes untergeordnete Teilprogrammobjekt eine Speichergröße und eine Speicherposition innerhalb der Datenstruktur des übergeordneten n-1-ten Programmobjekts bestimmt sind; Identifizieren eines untergeordneten Teilprogrammobjekts des übergeordneten n-1-ten Programmobjekts, das gemäß der Datenstruktur des übergeordneten n-1-ten Programmobjekts um den n-1-ten Adressenoffset zu einer ersten Speicherstelle des übergeordneten n-1-ten Programmobjekts beabstandet ist, und Identifizieren des untergeordneten Teilprogrammobjekts des übergeordneten n-1-ten Programmobjekts als ein übergeordnetes n-2-tes Programmobjekt, das im ersten Speicherbereich des Programmzustands einen Speicherbereich belegt, der die Zeigeradresse des Zeigerelements umfasst in einem n-2-ten Programmobjektidentifizierungsschritt (141);
Falls gilt, n-2>2, rekursives Ausführen des n-1-ten Adressenoffsetbestimmungsschritt, des n-1-ten Datentypbestimmungsschritts und des n-2-ten Programmobjektidentifizierungsschritt in einem Rekursionsschritt;
Bestimmen des zweiten Adressenoffsets im zweiten Adressenoffsetbestimmungsschritt, wobei der zweite Adressenoffset durch eine Differenz zwischen dem ersten Adressenoffset und einer Summe aus ersten relativen Speicheradressen des n-ten Programmobjekts bis zweiten Programmobjekts bestimmt ist;
Bestimmen eines Datentyps des übergeordneten zweiten Programmobjekts in einem zweiten Datentypbestimmungsschritt, wobei der Datentyp eine Datenstruktur des übergeordneten zweiten Programmobjekts bestimmt, in der eine Anzahl von untergeordneten Teilprogrammobjekten des übergeordneten n-1-ten Programmobjekts definiert ist und für jedes untergeordnete Teilprogrammobjekt eine Speichergröße und eine Speicherposition innerhalb der Datenstruktur des übergeordneten zweiten Programmobjekts bestimmt sind; Identifizieren des untergeordneten Teilprogrammobjekts des übergeordneten zweiten Programmobjekts, das gemäß der Datenstruktur es übergeordneten zweiten Programmobjekts um den zweiten Adressenoffset zu einer ersten Speicherstelle des übergeordneten zweiten Programmobjekts beabstandet ist, und Identifizieren des untergeordneten Teilprogrammobjekts des übergeordneten zweiten Programmobjekts als das erste Programmobjekt, dessen Speicheradresse der Zeigeradresse des Zeigerelements entspricht.
Hierdurch wird der technische Vorteil erreicht, dass eine vollqualifizierte Bezeichnung für Programmobjekte bereitgestellt werden kann, die untergeordnete Programmobjekte übergeordneter Programmobjekte in beliebiger Schachtelungstiefe sind.
Hierzu werden die oben beschriebenen Schritte zum Identifizieren der einzelnen Programmobjekte in n-facher Rekursion ausgeführt.

Durch das rekursive Ausführen der genannten Schritte wird durch Ausführung der Schritte eine weitere Schachtelungstiefe des übergeordneten n-ten Programmobjekts abgearbeitet, bis nach mehrfachem Ausführen der genannten Schritt das zweite Programmobjekt identifiziert wird. Das zweite Programmobjekt ist hierbei das Programmobjekt, das als direkt übergeordnetes Programmobjekt das erste Programmobjekt, sprich das durch das Zeigerelement referenzierte Zeigerobjekt, umfasst.

Zunächst wird auf Basis der Anordnungsstruktur des Programmzustands und des ersten Adressenoffsets ein n-tes übergeordnetes Programmobjekt identifiziert. Für dieses n-te Programmobjekt wird ein n-ter Adressenoffset bestimmt, der eine Differenz der Zeigeradresse und einer ersten relativen Speicheradresse des übergeordneten n-ten Programmobjekts bestimmt. Hierauf folgend wird ein Datentyp des übergeordneten n-ten Programmobjekts bestimmt, der eine Datenstruktur der vom übergeordneten n-ten Programmobjekt umfassten untergeordneten Teilprogrammobjekten definiert. Auf Basis des n-ten Adressenoffsets und der Datenstruktur des übergeordneten n-ten Programmobjekts wird ein untergeordnetes Teilprogrammobjekt des übergeordneten n-ten Programmobjekts identifiziert, das einen Speicherbereich belegt, der die Zeigeradresse umfasst.

Dieses identifizierte untergeordnete Teilprogrammobjekt wird als ein n-1-tes übergeordnetes Programmobjekt identifiziert. Darauf folgend wird ein n-1-ter Adressenoffset und ein Datentyp des übergeordneten n-1-ten Programmobjekts bestimmt, wobei der n-1-te Adressenoffset sich aus einer Differenz zwischen dem ersten Adressenoffset und einer Summe aus den ersten relativen Speicheradressen der n-ten und n-1-ten Programmobjekte ergibt. Auf Basis des n-1-ten Adressenoffsets und des Datentyps des übergeordneten n-1-ten Programmobjekts wird ein untergeordnetes Teilprogrammobjekt des übergeordneten n-1-ten Programmobjekts identifiziert, das von einer ersten relativen Speicheradresse des übergeordneten n-1-ten Programmobjekts um die Anzahl von Speicherstellen des n-1-ten Adressenoffsets beabstandet ist und somit einen Speicherbereich belegt, der die Zeigeradresse umfasst.

Dieses identifizierte untergeordnete Teilprogrammobjekt wird als übergeordnetes n-2-tes Programmobjekt identifiziert. Darauf folgend werden die oben genannten Schritte rekursiv durchgeführt, bis das erste Programmobjekt identifiziert wird, das im Speicherbereich des Programmzustands eine Speicheradresse belegt, die der Zeigeradresse des Zeigerelements entspricht.

Hierdurch kann eine vollqualifizierte Bezeichnung für Zeigerobjekte bereitgestellt werden, die untergeordnete Teilprogrammobjekte übergeordneter Programmobjekte in n-facher Schachtelungstiefe sind. Die jeweilige vollqualifizierte Bezeichnung kann hierbei die Namen und Bezeichnungen aller übergeordneten Programmobjekte des identifizierten Zeigerobjekts sowie die jeweiligen Relationen und Schachtelungen umfassen.

Nach einer Ausführungsform umfasst das Verfahren ferner:
Falls die Zeigeradresse des Zeigerelements im zweiten Speicherbereich des Stacks angeordnet ist, Bestimmen einer Struktur des Stacks in einem Stack-Strukturbestimmungsschritt, wobei über die Struktur des Stacks jedem im Stack gespeicherten Stack-Programmobjekt eine Speicherposition und eine Speichergröße zugeordnet sind, wobei eine Speicherposition eines Stack-Programmobjekts eine Anzahl von Speicherstellen definiert, um die ein Stack-Programmobjekt in einem Speicherbereich zu einer ersten Speicherstelle des Stacks beabstandet gespeichert ist;
Bestimmen eines ersten Stack-Adressenoffsets der Zeigeradresse des Zeigerelements in einem ersten Stack-Adressenoffsetbestimmungsschritt, wobei der erste Stack-Adressenoffset eine Anzahl von Speicherstellen definiert, um die die Zeigeradresse des Zeigerelements zu einer ersten Speicheradresse des Stacks im zweiten Speicherbereich beabstandet ist;
Identifizieren eines Stack-Programmobjekts, das gemäß der Struktur des Stacks, in der jedem Stack-Programmobjekt eine Speicherposition und eine Speichergröße zugewiesen ist, um den ersten Stack-Adressenoffset zu der ersten Speicherstelle des Stacks beabstandet ist, als ein erstes Stack-Programmobjekt, dessen Speicheradresse im zweiten Speicherbereich der Zeigeradresse des Zeigerelements entspricht, in einem ersten Stack-Programmobjektidentifizierungsschritt; und
Identifizieren des ersten Stack-Programmobjekts mit dem durch das Zeigerelement referenzierten Zeigerobjekt im Zeigerobjektidentifizierungsschritt.

Hierdurch wird der technische Vorteil erreicht, dass eine vollqualifizierte Bezeichnung für Zeigerobjekte eines Zeigerelements bereitgestellt werden kann, die im Stack der Steuerung des Automatisierungssystems gespeichert sind. Während das Zeigerelement weiterhin ein Programmobjekt des Programmzustands des Steuerprogramms ist, sind die vom Zeigerelement referenzierten Zeigerobjekte Objekte des Stacks bzw. des Laufzeitkellers und somit keine Programmobjekte des Programmzustands.

Zunächst wird eine Struktur des Stacks bestimmt, in der jedem Programmobjekt des Stacks eine Speicherposition und eine Speichergröße zugewiesen ist. Ähnlich der Anordnungsstruktur des Programmzustands ermöglicht eine Struktur des Stacks eine eindeutige Positionierung der Stack-Programmobjekte.

Stack-Programmobjekte sind im Folgenden Datenobjekte, die während der Ausführung des Steuerprogramms oder eines Unterprogramms des Steuerprogramms oder einer Funktion des Steuerprogramms als lokale Variablen im Stack gespeichert sind.

Nach Bestimmung der Struktur des Stacks wird ein erster Stack-Adressenoffset der Zeigeradresse bestimmt, der eine Anzahl von Speicherstellen definiert, die die Zeigeradresse zu einer ersten Speicheradresse des Stacks beabstandet ist. Hierdurch wird ein Abstand im Speicherbereich angegeben, den das vom Zeigerelement referenzierte und im Stack gespeicherte Zeigerobjekt zum Anfang des Stacks innerhalb des Speicherbereichs des Stacks aufweist.

Auf Basis der Struktur des Stacks und des ersten Stack-Adressenoffsets wird ein erstes Stack-Programmobjekt identifiziert, das innerhalb der Anordnung des Stacks um die Anzahl der Speicherstellen des ersten Stack-Adressenoffsets zu der ersten Speicheradresse des Stacks beabstandet ist. Dieses erste Stack-Programmobjekt wird im Folgenden als das Stack-Programmobjekt identifiziert, das im zweiten Speicherbereich des Stacks eine Speicheradresse aufweist, die der Zeigeradresse des Zeigerelements entspricht.

Darauffolgend wird eine vollqualifizierte Bezeichnung des identifizierten Stack-Programmobjekts als Zeigerobjekt bereitgestellt. Hierdurch kann ein durch das Zeigerelement referenziertes Zeigerobjekt, das im Stack gespeichert ist, mit einer vollqualifizierten Bezeichnung, die wenigstens den Namen der lokalen Variable bzw. des Stack-Programmobjekts umfasst, versehen werden.

Nach einer Ausführungsform umfasst der erste Stack-Programmobjektidentifizierungsschritt:
Identifizieren unter Berücksichtigung des ersten Stack-Adressenoffsets der Zeigeradresse des Zeigerelements und der Anordnungsstruktur des Stacks eines Frames des Stacks, der im zweiten Speicherbereich des Stacks einen Speicherbereich belegt, der die Speicheradresse der Zeigeradresse des Zeigerelements umfasst, in einem Frameidentifizierungsschritt;
Identifizieren einer Funktion des identifizierten Frames des Stacks in einem Funktionsidentifikationsschritt; und
Identifizieren einer lokalen Variable der identifizierten Funktion, dessen Speicheradresse der Zeigeradresse des Zeigerelements entspricht, als erstes Stack-Programmobjekt des Stacks, dessen Speicheradresse der Zeigeradresse des Zeigerelements entspricht.

Hierdurch wird der technische Vorteil erreicht, dass die vollqualifizierte Bezeichnung des im Stack gespeicherten und durch das Zeigerelement referenzierten Zeigerobjekts um die Bezeichnung einer Funktion und eines Frames erweitert werden kann. Hierzu wird zunächst unter Berücksichtigung des ersten Stack-Adressenoffsets und der Struktur des Stacks ein Frame identifiziert, der im Speicherbereich des Stacks das identifizierte erste Stack-Programmobjekt und damit die Zeigeradresse umfasst. Darauf folgend wird eine im identifizierten Frame gespeicherte Funktion des identifizierten ersten Stack-Programmobjekts identifiziert. Sowohl die Bezeichnung des Frames als auch die Bezeichnung der Funktion des ersten Stack-Programmobjekts können in die vollqualifizierte Bezeichnung des durch das erste Stack-Programmobjekt dargestellten Zeigerobjekts aufgenommen werden.

Nach einer Ausführungsform ist ein Stack-Programmobjekt des Stacks als ein übergeordnetes zweites Stack-Programmobjekt ausgebildet, wobei das übergeordnete zweite Stack-Programmobjekt wenigstens ein untergeordnetes Stack-Teilprogrammobjekt umfasst, wobei das erste Stack-Programmobjekt als ein untergeordnetes Stack-Teilprogrammobjekt vom übergeordneten zweiten Stack-Programmobjekt umfasst ist, und wobei der erste Stack-Programmobjektidentifizierungsschritt umfasst:
Identifizieren eines Programmobjekts des Stacks, für das gemäß der jeweiligen Speicherposition und Speichergröße ein Speicherbereich definiert ist, der eine Speicherstelle umfasst, die um den ersten Stack-Adressenoffset zur ersten Speicherstelle des Stacks beabstandet ist, als das übergeordnete zweite Stack-Programmobjekt und Identifizieren des übergeordneten zweiten Stack-Programmobjekts als das Programmobjekt, das im zweiten Speicherbereich des Stacks einen Speicherbereich belegt, der die Zeigeradresse des Zeigerelements umfasst, in einem zweiten Stack-Programmobjektidentifizierungsschritt;
Bestimmen eines zweiten Stack-Adressenoffsets in einem zweiten Stack-Adressenoffsetbestimmungsschritt, wobei der zweite Stack-Adressenoffset durch eine Differenz zwischen dem ersten Stack-Adressenoffset und einer ersten relativen Speicheradresse des zweiten Stack-Programmobjekts bestimmt ist;
Bestimmen eines Datentyps des übergeordneten zweiten Stack-Programmobjekts in einem zweiten Stack-Datentypbestimmungsschritt, wobei der Datentyp eine Datenstruktur des übergeordneten zweiten Stack-Programmobjekts bestimmt, in der eine Anzahl von untergeordneten Stack-Teilprogrammobjekten des übergeordneten zweiten Stack-Programmobjekts definiert ist und für jedes untergeordnete Stack-Teilprogrammobjekt eine Speichergröße und eine Speicherposition innerhalb der Datenstruktur des übergeordneten zweiten Programmobjekts bestimmt sind;
Identifizieren eines untergeordneten Stack-Teilprogrammobjekts des übergeordneten zweiten Stack-Programmobjekts, das gemäß der Datenstruktur des übergeordneten zweiten Stack-Programmobjekts um den zweiten Adressenoffset zu einer ersten Speicherstelle des übergeordneten zweiten Stack-Programmobjekts beabstandet ist, und Identifizieren des untergeordneten Stack-Teilprogrammobjekts des übergeordneten zweiten Stack-Programmobjekts als das erste Stack-Programmobjekt, dessen Speicheradresse der Zeigeradresse des Zeigerelements entspricht.

Hierdurch wird der technische Vorteil erreicht, dass eine vollqualifizierte Bezeichnung für ein Zeigerobjekt bereitgestellt werden kann, das ein untergeordnetes Teilobjekt eines im Stack gespeicherten übergeordneten Programmobjekts ist. Beispielsweise kann das durch das Zeigerelement referenzierte Zeigerobjekt ein Element eines im Stack gespeicherten Feldtyps, eine Komponente eines im Stack gespeicherten Verbundtyps oder ein Element eines im Stack gespeicherten Zeichenkettentyps sein. Die vollqualifizierte Bezeichnung des Zeigerobjekts kann hierbei die Bezeichnung des übergeordneten Stack-Programmobjekts und die Bezeichnung des untergeordneten Stack-Teilprogrammobjekts umfassen. Eine Bestimmung der vollqualifizierten Bezeichnung des Zeigerelements erfolgt hierbei analog zu dem oben beschriebenen Verfahren zur Bestimmung einer vollqualifizierten Bezeichnung eines im Programmzustand gespeicherten Zeigerelements mit einfacher Schachtelungstiefe.

Nach einer Ausführungsform ist ein Stack-Programmobjekt des Stacks als ein übergeordnetes drittes Stack-Programmobjekt ausgebildet, wobei das übergeordnete dritte Stack-Programmobjekt wenigstens ein untergeordnetes Stack-Teilprogrammobjekt umfasst, wobei das übergeordnete zweite Stack-Programmobjekt als ein untergeordnetes Stack-Teilprogrammobjekt vom übergeordneten dritten Stack-Programmobjekt umfasst ist, und wobei der zweite Stack-Programmobjektidentifizierungsschritt umfasst:
Identifizieren eines Programmobjekts des Stacks, für das gemäß der jeweiligen Speicherposition und Speichergröße ein Speicherbereich definiert ist, der eine Speicherstelle umfasst, die um den ersten Stack-Adressenoffset zur ersten Speicheradresse des Stacks beabstandet ist, als das übergeordnete dritte Stack-Programmobjekt und Identifizieren des übergeordneten dritten Stack-Programmobjekts als das Programmobjekt, das im zweiten Speicherbereich des Stacks einen Speicherbereich belegt, der die Zeigeradresse des Zeigerelements umfasst, in einem dritten Stack-Programmobjektidentifizierungsschritt;
Bestimmen eines dritten Stack-Adressenoffsets in einem dritten Stack-Adressenoffsetbestimmungsschritt, wobei der dritte Stack-Adressenoffset durch eine Differenz zwischen dem ersten Stack-Adressenoffset und einer ersten relativen Speicheradresse des dritten Stack-Programmobjekts bestimmt ist;
Bestimmen eines Datentyps des übergeordneten dritten Stack-Programmobjekts in einem dritten Stack-Datentypbestimmungsschritt, wobei der Datentyp eine Datenstruktur des übergeordneten dritten Stack-Programmobjekts bestimmt, in der eine Anzahl von untergeordneten Stack-Teilprogrammobjekten des übergeordneten dritten Stack-Programmobjekts definiert ist und für jedes untergeordnete Stack-Teilprogrammobjekt eine Speichergröße und eine Speicherposition innerhalb der Datenstruktur des übergeordneten dritten Stack-Programmobjekts bestimmt sind;
Identifizieren eines untergeordneten Stack-Teilprogrammobjekts des übergeordneten dritten Stack-Programmobjekts, das gemäß der Datenstruktur des übergeordneten dritten Stack-Programmobjekts um den dritten Stack-Adressenoffset zu einer ersten Speicherstelle des übergeordneten dritten Stack-Programmobjekts beabstandet ist, und Identifizieren des untergeordneten Stack-Teilprogrammobjekts des übergeordneten dritten Stack-Programmobjekts als das übergeordnete zweite Stack-Programmobjekt, das im zweiten Speicherbereich des Stacks einen Speicherbereich belegt, der die Zeigeradresse des Zeigerelements umfasst; und
wobei der zweite Stack-Adressenoffset durch eine Differenz zwischen dem ersten Stack-Adressenoffset und einer Summe aus der ersten relativen Speicheradresse des dritten Programmobjekts und der ersten relativen Speicheradresse des zweiten Stack-Programmobjekts bestimmt ist.

Hierdurch wird der technische Vorteil erreicht, dass eine vollqualifizierte Bezeichnung eines im Stack gespeicherten Zeigerobjekts bereitgestellt werden kann, das ein Unterobjekt eines im Stack gespeicherten Stack-Programmobjekts mit zweifacher Schachtelungstiefe ist. Die Bestimmung der qualifizierten Bezeichnung erfolgt analog zu dem oben beschriebenen Verfahren zur Bestimmung einer qualifizierten Bezeichnung eines im Programmzustand gespeicherten und als Unterobjekt eines übergeordneten Programmobjekts zweifacher Schachtelungstiefe ausgebildeten Zeigerobjekts.

Nach einer Ausführungsform ist ein Stack-Programmobjekt des Stacks als ein übergeordnetes n-tes Stack-Programmobjekt ausgebildet, wobei das übergeordnete n-te Stack-Programmobjekt in n-1-facher Schachtelungstiefe einander umfassende untergeordnete Stack-Teilprogrammobjekte umfasst, wobei das übergeordnete zweite Stack-Programmobjekt als ein untergeordnetes Stack-Teilprogrammobjekt in n-2-ter Schachtelungstiefe vom übergeordneten n-ten Stack-Programmobjekt umfasst ist, wobei das erste Stack-Programmobjekt als ein untergeordnetes Stack-Teilprogrammobjekt in n-1-ter Schachtelungstiefe vom übergeordneten n-ten Stack-Programmobjekt umfasst ist, wobei n eine natürlich Zahl und größer oder gleich 4 ist, und wobei der zweite Stack-Programmobjektidentifizierungsschritt umfasst:
Identifizieren eines Programmobjekts des Stacks, für das gemäß der jeweiligen Speicherposition und Speichergröße ein Speicherbereich definiert ist, der eine Speicherstelle umfasst, die um den ersten Stack-Adressenoffset zur ersten Speicherstelle des Stacks beabstandet ist, als das übergeordnete n-te Stack-Programmobjekt und Identifizieren des übergeordneten n-ten Stack-Programmobjekts als das Programmobjekt, das im zweiten Speicherbereich des Stack einen Speicherbereich belegt, der die Zeigeradresse des Zeigerelements umfasst, in einem n-ten Stack-Programmobjektidentifizierungsschritt;
Bestimmen eines n-ten Stack-Adressenoffsets in einem n-ten Stack-Adressenoffsetbestimmungsschritt, wobei der n-te Stack-Adressenoffset durch eine Differenz zwischen dem ersten Stack-Adressenoffset und einer ersten relativen Speicheradresse des n-ten Stack-Programmobjekts bestimmt ist;
Bestimmen eines Datentyps des übergeordneten n-ten Stack-Programmobjekts in einem n-ten Stack-Datentypbestimmungsschritt, wobei der Datentyp eine Datenstruktur des übergeordneten n-ten Stack-Programmobjekts bestimmt, in der eine Anzahl von untergeordneten Stack-Teilprogrammobjekten des übergeordneten n-ten Stack-Programmobjekts definiert ist und für jedes untergeordnete Stack-Teilprogrammobjekt eine Speichergröße und eine Speicherposition innerhalb der Datenstruktur des übergeordneten n-ten Stack-Programmobjekts bestimmt sind;
Identifizieren eines untergeordneten Stack-Teilprogrammobjekts des übergeordneten n-ten Stack-Programmobjekts, das gemäß der Datenstruktur des übergeordneten n-ten Stack-Programmobjekts um den n-ten Stack-Adressenoffset zu einer ersten Speicherstelle des übergeordneten n-ten Stack-Programmobjekts beabstandet ist, und Identifizieren des untergeordneten Stack-Teilprogrammobjekts des übergeordneten n-ten Stack-Programmobjekts als ein übergeordnetes n-1-tes Stack-Programmobjekt, das im zweiten Speicherbereich des Stacks einen Speicherbereich belegt, der die Zeigeradresse des Zeigerelements umfasst in einem n-1-ten Stack-Programmobjektidentifizierungsschritt; Bestimmen eines n-1-ten Stack-Adressenoffsets in einem n-1-ten Stack-Adressenoffsetbestimmungsschritt, wobei der n-1-te Stack-Adressenoffset durch eine Differenz zwischen dem ersten Stack-Adressenoffset und einer Summe aus der ersten relativen Speicheradresse des n-ten Stack-Programmobjekts und einer ersten relativen Speicheradresse des n-1-ten Stack-Programmobjekts bestimmt ist;
Bestimmen eines Datentyps des übergeordneten n-1-ten Stack-Programmobjekts in einem n-1-ten Stack-Datentypbestimmungsschritt, wobei der Datentyp eine Datenstruktur des übergeordneten n-1-ten Stack-Programmobjekts bestimmt, in der eine Anzahl von untergeordneten Stack-Teilprogrammobjekten des übergeordneten n-1-ten Stack-Programmobjekts definiert ist und für jedes untergeordnete Stack-Teilprogrammobjekt eine Speichergröße und eine Speicherposition innerhalb der Datenstruktur des übergeordneten n-1-ten Stack-Programmobjekts bestimmt sind;
Identifizieren eines untergeordneten Stack-Teilprogrammobjekts des übergeordneten n-1-ten Stack-Programmobjekts, das gemäß der Datenstruktur des übergeordneten n-1-ten Stack-Programmobjekts um den n-1-ten Stack-Adressenoffset zu einer ersten Speicherstelle des übergeordneten n-1-ten Stack-Programmobjekts beabstandet ist, und Identifizieren des untergeordneten Stack-Teilprogrammobjekts des übergeordneten n-1-ten Stack-Programmobjekts als ein übergeordnetes n-2-tes Stack-Programmobjekt, das im zweiten Speicherbereich des Programmzustands einen Speicherbereich belegt, der die Zeigeradresse des Zeigerelements umfasst in einem n-2-ten Stack-Programmobjektidentifizierungsschritt;
Falls gilt, n-2>2, rekursives Ausführen des n-1-ten Stack-Adressenoffsetbestimmungsschritt und des n-2-ten Stack-Programmobjektidentifizierungsschritt in einem weiteren Rekursionsschritt;
Bestimmen eines zweiten Stack-Adressenoffsets in einem zweiten Stack-Adressenoffsetbestimmungsschritt, wobei der zweite Stack-Adressenoffset durch eine Differenz zwischen dem ersten Stack-Adressenoffset und einer Summe aus ersten relativen Speicheradressen des n-ten Stack-Programmobjekts bis zweiten Stack-Programmobjekts bestimmt ist;
Bestimmen eines Datentyps des übergeordneten zweiten Stack-Programmobjekts in einem zweiten Stack-Datentypbestimmungsschritt, wobei der Datentyp eine Datenstruktur des übergeordneten zweiten Stack-Programmobjekts bestimmt, in der eine Anzahl von untergeordneten Stack-Teilprogrammobjekten des übergeordneten zweiten Stack-Programmobjekts definiert ist und für jedes untergeordnete Stack-Teilprogrammobjekt eine Speichergröße und eine Speicherposition innerhalb der Datenstruktur des übergeordneten zweiten Stack-Programmobjekts bestimmt sind;
Identifizieren eines untergeordneten Stack-Teilprogrammobjekts des übergeordneten zweiten Stack-Programmobjekts, das gemäß der Datenstruktur des übergeordneten zweiten Stack-Programmobjekts um den zweiten Adressenoffset zu einer ersten Speicherstelle des übergeordneten zweiten Stack-Programmobjekts beabstandet ist, und Identifizieren des untergeordneten Stack-Teilprogrammobjekts des übergeordneten zweiten Stack-Programmobjekts als das erste Stack-Programmobjekt, dessen Speicheradresse der Zeigeradresse des Zeigerelements entspricht.

Hierdurch wird der technische Vorteil erreicht, dass eine qualifizierte Bezeichnung eines im Stack gespeicherten Zeigerelements bereitgestellt werden kann, das als ein Unterelement eines im Stack gespeicherten übergeordneten Stack-Programmobjekts n-facher Schachtelungstiefe ist. Die Bestimmung der vollqualifizierten Bezeichnung des im Stack gespeicherten und als Unterobjekt eines übergeordneten Stack-Programmobjekts n-facher Schachtelungstiefe ausgebildeten Zeigerelements erfolgt analog zu dem oben beschriebenen Verfahren zur Bestimmung einer vollqualifizierten Bezeichnung eines im Programmzustand gespeicherten und als Unterobjekt eines übergeordneten Programmobjekts n-facher Schachtelungstiefe ausgebildeten Zeigerobjekts.

Nach einer Ausführungsform umfasst das Verfahren ferner:
Bestimmen eines Datentyps des ersten Programmobjekts in einem ersten Datentypbestimmungsschritt, wobei der Datentyp des ersten Programmobjekts eine Datenstruktur des ersten Programmobjekts bestimmt; und/oder
Bestimmen eines Datentyps des ersten Stack-Programmobjekts in einem ersten Stack-Datentypbestimmungsschritt, wobei der Datentyp des ersten Programmobjekts eine Datenstruktur des ersten Programmobjekts bestimmt.

Hierdurch wird der technische Vorteil erreicht, dass die vollqualifizierte Bezeichnung des im Programmzustand bzw. im Stack gespeicherten Zeigerobjekts der Datentyp des Zeigerobjekts mit aufgenommen werden kann. Hierdurch kann der durch die vollqualifizierte Bezeichnung des Zeigerobjekts bereitgestellte Informationsgehalt über das Zeigerobjekt erhöht werden.

Nach einer Ausführungsform umfasst die vollqualifizierte Bezeichnung des durch das Zeigerelement referenzierten Zeigerobjekts die Bezeichnungen ersten Programmobjekts und/oder der übergeordneten Programmobjekte oder die Bezeichnungen des ersten Stack-Programmobjekts und/oder der übergeordneten Stack-Programmobjekte und/oder des identifizierten Frames und/oder einen Namen der identifizierten Funktion.

Hierdurch wird der technische Vorteil erreicht, dass eine umfassende vollqualifizierte Bezeichnung des referenzierten Zeigerobjekts bereitgestellt werden kann, die jegliche Information bezüglich des referenzierten Zeigerobjekts insbesondere in Bezug auf gegebenenfalls gegebene Relationen zu übergeordneten Programmobjekten des Zeigerobjekts inklusive einer Schachtelungstiefe und entsprechenden Datentypen bzw. gegebenenfalls Namen von Funktionen der Zeigerobjekte umfasst. Somit kann dem Nutzer eine umfassende Information über das durch das Zeigerelement referenzierte Zeigerobjekt bereitgestellt werden.

Nach einer Ausführungsform ist ein übergeordnetes Programmobjekt oder ein übergeordnetes Stack-Programmobjekt von einem Verbundtyp, einem Feldtyp oder einem Zeichenkettentyp.

Hierdurch wird der technische Vorteil erreicht, dass eine vollqualifizierte Bezeichnung eines Zeigerelements für verschiedene Datentypen bereitgestellt werden kann. Hierdurch ist eine breite Anwendbarkeit des erfindungsgemäßen Verfahrens ermöglicht.

Nach einer Ausführungsform umfasst das Verfahren ferner:
Auswählen einer Mehrzahl von Programmobjekten des Programmzustands in einem Auswahlschritt, wobei ein ausgewähltes Programmobjekt das Zeigerelement ist;
Bestimmen von vollqualifizierten Bezeichnungen der ausgewählten Programmobjekte im Vollbezeichnungsbestimmungsschritt; und
Anzeigen der vollqualifizierten Bezeichnungen der ausgewählten Programmobjekte auf dem mit der Steuerung verbundenen Displayelement im Anzeigeschritt.

Hierdurch wird der technische Vorteil erreicht, dass eine Auswahlmöglichkeit der Programmobjekte des Programmzustands, für die eine vollqualifizierte Bezeichnung bestimmt und im Displayelement angezeigt werden soll, bereitgestellt werden kann. Dem Nutzer ist somit ermöglicht, die Programmobjekte des Programmzustands, die bei der Ausführung des Steuerprogramms von Interesse sind, auszuwählen und eine vollqualifizierte Bezeichnung gemäß den oben beschriebenen Verfahrensschritten für die ausgewählten Programmobjekte zu bestimmen und diese während des Ausführens des Steuerprogramms anzeigen zu lassen. Der Nutzer ist somit in der Lage, individuell die Programmobjekte auszuwählen und sich eine vollqualifizierte Bezeichnung und entsprechende Werte der Programmobjekte anzeigen zu lassen, die für eine Beurteilung des Automatisierungsprozesses bzw. des ausgeführten Steuerprogramms von Interesse sind.

Nach einer Ausführung wird im Anzeigeschritt zusätzlich zu der vollqualifizierten Bezeichnung ein Wert des jeweiligen Programmobjekts angezeigt, wobei das Verfahren ferner umfasst:
Anpassen wenigstens eines Werts eines Programmobjekts in einem Anpassungsschritt; und
Steuern eines Automatisierungsprozesses durch das Steuerprogramm unter Berücksichtigung des wenigstens einen geänderten Werts des wenigstens einen Programmobjekts in einem Steuerschritt.

Hierdurch wird der technische Vorteil erreicht, dass eine Steuerung eines Automatisierungsprozesses des Automatisierungssystems auf Basis der angezeigten Informationen der Programmobjekte, insbesondere auf Basis der angezeigten vollqualifizierten Bezeichnungen und der entsprechenden Werte der Programmobjekte, angepasst und modifiziert werden kann. Durch die angezeigten vollqualifizierten Bezeichnungen der Programmobjekte in Zusammenhang mit den entsprechenden Werten der Programmobjekte kann der Nutzer unmittelbar den Zustand des zu steuernden Automatisierungsprozesses beurteilen und gegebenenfalls entsprechenden Anpassungen durchführen, wenn der Nutzer feststellt, dass Werte von Programmobjekten beziehungsweise von Parametern des Automatisierungsprozesses nicht den gewünschten Werten entsprechen. Hierdurch ist eine unmittelbare Anpassungsmöglichkeit des Automatisierungsprozesses ermöglicht, wodurch eine verbesserte und präzisere Steuerung des Automatisierungsprozesses beziehungswiese des Automatisierungssystems erreicht wird. Durch die Angabe der vollqualifizierten Bezeichnungen in Kombination mit den Werten der jeweiligen Programmobjekte kann der Nutzer unmittelbar feststellen, für welche Programmobjekte eine Änderung der Werte vorgenommen werden muss, um eine bestimmte Anpassung beziehungsweise Modifikation des Automatisierungsprozesses zu erreichen.

Nach einer Ausführungsform ist das Verfahren in einem Debuggingprozess und/oder in einem Steuerungspozess des Automatisierungssystems ausführbar.

Hierdurch wird der technische Vorteil erreicht, dass eine breite Anwendbarkeit des erfindungsgemäßen Verfahrens bereitgestellt werden kann. Das erfindungsgemäße Verfahren kann während des Ausführens des Steuerprogramms zum Steuern des Automatisierungsprozesses durchgeführt werden, sodass während des Steuerns des Automatisierungsprozesses dem Nutzer beliebige Programmobjekte und entsprechende Werte der jeweiligen Programmobjekte angezeigt werden können. Hierüber kann eine Verfolgung des gesteuerten Automatisierungsprozesses ermöglicht werden, die eine Überwachung des Automatisierungsprozesses erlaubt und gegebenenfalls Fehlverläufe des Automatisierungsprozesses ermittelt und behoben werden können.

Alternativ kann das erfindungsgemäße Verfahren während eines Debuggingprozesses durchgeführt werden, bei dem eine Funktionsfähigkeit des Steuerprogramms überprüft wird. Hierzu kann der Nutzer sich verschiedene Programmobjekte des Steuerprogramms anzeigen lassen, um anhand der angezeigten Werte der Programmobjekte eine Funktionsfähigkeit des ausgeführten Steuerprogramms zu ermitteln.

Nach einer Ausführungsform ist das Displayelement als eine Mensch-Maschinen-Schnittstelle ausgebildet und in die Steuerung integriert.

Hierdurch wird der technische Vorteil erreicht, dass eine möglichst komfortable Darstellung der qualifizierten Bezeichnungen der Programmobjekte des Programmzustands des Steuerprogramms ermöglicht ist. Ein Nutzer kann hierbei insbesondere während der Steuerung eines Automatisierungsprozesses durch das Steuerprogramm sich die entsprechenden Programmobjekte mit den dazugehörigen Werten direkt an der Steuerung des Automatisierungssystems anzeigen lassen.

Nach einem zweiten Aspekt der Erfindung wird ein Automatisierungssystem mit einer Steuerung und einem mit der Steuerung verbundenen Displayelement bereitgestellt, wobei die Steuerung ausgebildet ist, das erfindungsgemäße Verfahren auszuführen.

Hierdurch wird der technische Vorteil erreicht, dass ein Automatisierungssystem bereitgestellt wird, dass eingerichtet ist, das erfindungsgemäße Verfahren mit den oben genannten technische Vorteilen auszuführen.

Die Erfindung wird anhand der beigefügten Figuren näher erläutert. Hierbei zeigen:
- Fig. 1: eine schematische Darstellung eines Automatisierungssystems gemäß einer Ausführungsform;
- Fig. 2: ein Flussdiagramm eines Verfahrens zum Steuern eines Automatisierungssystems mit Visualisierung von Programmobjekten eines Steuerprogramms gemäß einer Ausführungsform;
- Fig. 3: ein weiteres Flussdiagramm des Verfahrens zum Steuern eines Automatisierungssystems mit Visualisierung von Programmobjekten eines Steuerprogramms gemäß einer weiteren Ausführungsform;
- Fig. 4: eine schematische Darstellung einer Bestimmung eines Zeigerobjekts gemäß einer Ausführungsform des Verfahrens in Fig. 2;
- Fig. 5: ein weiteres Flussdiagramm des Verfahrens zum Steuern eines Automatisierungssystems mit Visualisierung von Programmobjekten eines Steuerprogramms gemäß einer weiteren Ausführungsform;
- Fig. 6: ein weiteres Flussdiagramm des Verfahrens zum Steuern eines Automatisierungssystems mit Visualisierung von Programmobjekten eines Steuerprogramms gemäß einer weiteren Ausführungsform;
- Fig. 7: eine schematische Darstellung einer Bestimmung eines Zeigerobjekts gemäß einer Ausführungsform des Verfahrens in Fig. 6;
- Fig. 8: ein weiteres Flussdiagramm des Verfahrens zum Steuern eines Automatisierungssystems mit Visualisierung von Programmobjekten eines Steuerprogramms gemäß einer weiteren Ausführungsform.

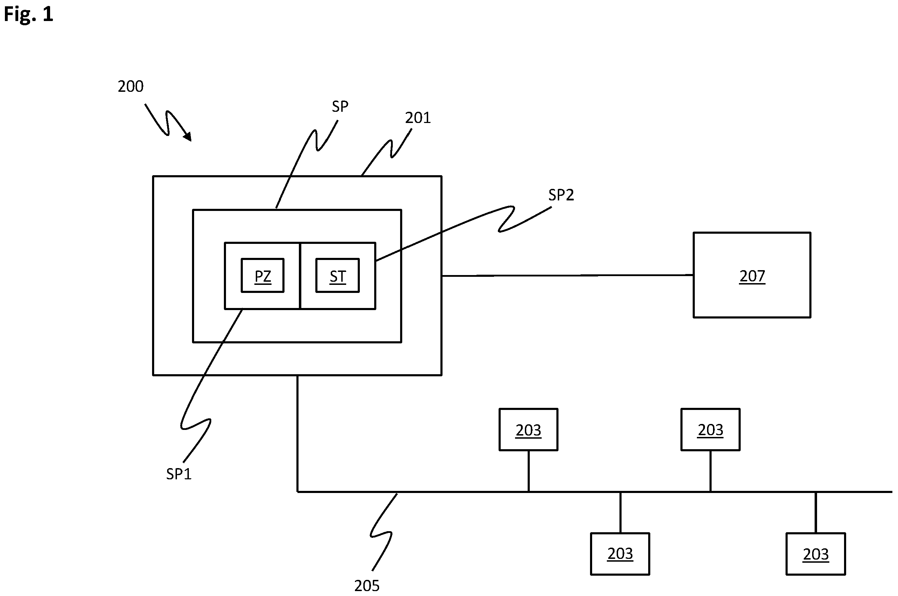

Fig. 1 zeigt eine schematische Darstellung eines Automatisierungssystems 200 gemäß einer Ausführungsform.

In Fig. 1 ist ein Automatisierungssystem 200 dargestellt mit einer Steuerung 201, die über ein Bussystem 205 mit Automatisierungsgeräten 203 verbunden ist. Die Steuerung 201 umfasst einen Speicher SP, der einen ersten Speicherbereich SP1 und einen zweiten Speicherbereich SP2 umfasst. Im ersten Speicherbereich SP1 ist ein Programmzustand PZ eines Steuerprogramms der Steuerung gespeichert. Im zweiten Speicherbereich SP2 ist ein Stack ST gespeichert. Das Automatisierungssystem 200 umfasst ferner ein Displayelement 207, das in der Ausführungsform in Fig. 1 mit der Steuerung 201 verbunden ist.

Das dargestellte Automatisierungssystem 200 kann ein beliebiges Automatisierungssystem sein und die Automatisierungsgeräte 203 können beliebige Sensoren und Aktoren sein, die zur Durchführung eines Automatisierungsprozesse dienen.

Der Automatisierungsprozess kann insbesondere durch ein zyklisches Ausführen eines Steuerprogramms durch die Steuerung 201 gesteuert werden.

Das in Fig. 1 gezeigte Automatisierungssystem 200 ist lediglich beispielhaft und soll keine Beschränkung der vorliegenden Erfindung sein. Zu der in Fig. 1 gezeigten Ausführungsform des Automatisierungssystems 200 können verschiedene Änderungen vorgenommen werden, die ausnahmslos von dem Schutzbereich der vorliegenden Erfindung umfasst sind.

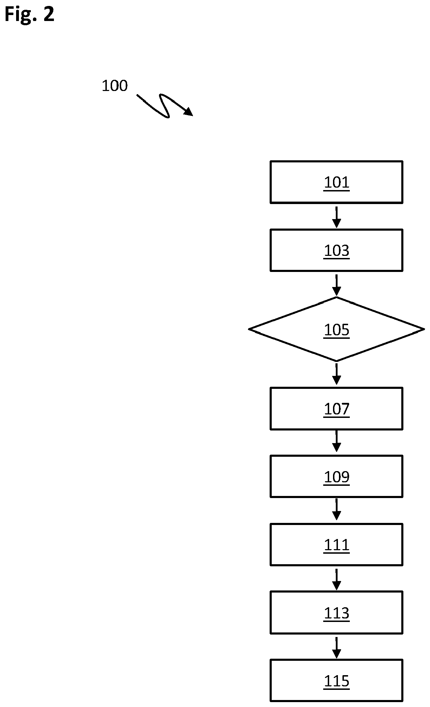

Fig. 2 zeigt ein Flussdiagramm eines Verfahrens 100 zum Steuern eines Automatisierungssystems 200 mit Visualisierung von Programmobjekten eines Steuerprogramms gemäß einer Ausführungsform.

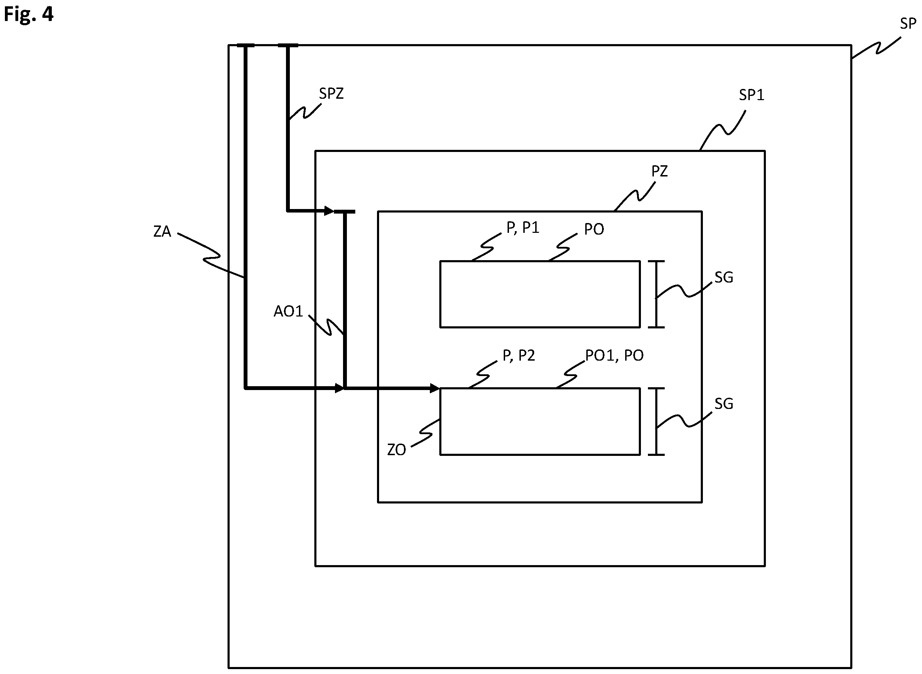

Die in Fig. 2 gezeigte Ausführungsform des Verfahrens 100 wird mit Bezug auf die Fig. 4 beschrieben.

Die in Fig. 2 dargestellte Ausführungsform des Verfahrens 100 ist auf ein Automatisierungssystem 200 gemäß der in Fig. 1 gezeigten Ausführungsform anwendbar.

Insbesondere ist das Verfahren 100 auf ein Automatisierungssystem 200 anwendbar, das eine Steuerung 201 mit einem in einem Speicher SP gespeicherten Steuerprogramm umfasst, wobei in einem ersten Speicherbereich SP1 der Steuerung 201 ein Programmzustand PZ des Steuerprogramms gespeichert ist, wobei der Programmzustand PZ eine Mehrzahl von Programmobjekten des Steuerprogramms umfasst, wobei die Programmobjekte PO in einer vorbestimmten Anordnungsstruktur des Programmzustands PZ relativ zueinander angeordnet sind, wobei über die Anordnungsstruktur jedem Programmobjekt PO eine Speicherposition P und eine Speichergröße SG zugeordnet sind, wobei eine Speicherposition P eines Programmobjekts PO eine Anzahl von Speicherstellen definiert, um die ein Programmobjekt PO in einem Speicherbereich zu einer ersten Speicherstelle des Programmzustands PZ beabstandet gespeichert ist, wobei eine Speichergröße SG eines Programmobjekts PO eine Anzahl von Speicherstellen definiert, die ein Speicherobjekt in einem Speicherbereich belegt, wobei der Programmzustand PZ wenigstens ein Zeigerelement umfasst, wobei durch das Zeigerelement ein Zeigerobjekt ZO referenziert, wobei das Zeigerobjekt ZO ein Programmobjekt PO des Steuerprogramms ist, wobei in einem zweiten Speicherbereich SP2 der Steuerung ein Stack des Steuerprogramms eingerichtet ist, und wobei im Stack während einer Laufzeit des Steuerprogramms Programmobjekte PO speicherbar sind.

Zur Durchführung des Verfahrens 100 wird zunächst in einem Ausführschritt 101 das Steuerprogramm auf der Steuerung 201 des Automatisierungssystems 200 ausgeführt. Das Steuerprogramm kann im Ausführschritt 101 zum Steuern eines Automatisierungsprozesses des Automatisierungssystems 200 ausgeführt werden. Hierbei wird auf Basis des Steuerprogramms ein Steuerprozess durchgeführt, indem die Automatisierungsgeräte 203 dem Steuerprogramm entsprechend angesteuert werden. Alternativ kann das Steuerprogramm im Ausführschritt 101 zur Durchführung eines Debuggingprozesses ausgeführt werden, bei dem eine Funktionsfähigkeit des Steuerprogramms nachvollzogen beziehungsweise überprüft wird.

Durch das Ausführen des Steuerprogramms werden den einzelnen Programmobjekten des Steuerprogramms Werte zugeordnet, die im Programmzustand gespeichert werden und die einen Ausführungszustand des Steuerprogramms wiederspiegeln beziehungsweise Zustand des gesteuerten Automatisierungsprozesses des Automatisierungssystems 200 wiedergeben. Die Werte der einzelnen Programmobjekten können auf Messwerten von Sensorelementen des Automatisierungssystems 200 basieren.

Zum Steuern des Automatisierungsprozesses werden somit zunächst durch Sensoren des Automatisierungssystems 200 Messwerte aufgenommen. Auf Basis dieser Messwerte werden durch Ausführen des Steuerprogramms entsprechende Steuerwerte bestimmt, die zum Ansteuern von entsprechenden Aktoren des Automatisierungssystems 200 zum Steuern des Automatisierungsprozesses genutzt werden. Die bestimmten Steuerwerte können als Werte entsprechender Programmobjekte des Steuerprogramms im Programmzustand gespeichert werden. Zusätzlich können Messwerte der Sensorelemente als Werte entsprechender Programmobjekte im Programmzustand gespeichert sein. Zusätzlich können Werte, die auf Zwischenergebnissen der Ausführung des Steuerprogramms basieren und für weitere Ausführung des Steuerprogramms benötigt werden, als entsprechende Werte entsprechender Programmobjekte im Programmzustand gespeichert sein.

In einem Zeigeradressenermittlungsschritt 103 wird eine Zeigeradresse ZA eines Zeigerelements ermittelt. Die Zeigeradresse ZA entspricht hierbei einer durch das Zeigerelement referenzierten Speicheradresse innerhalb des Speichers SP der Steuerung 201. Das Zeigerelement kann hierbei ein Programmobjekt des Steuerprogramms und im Programmzustand PZ des Steuerprogramms gespeichert sein. Zur Bestimmung der Zeigeradresse ZA kann diese als Wert des Zeigerelements ausgelesen werden.

In einem Überprüfungsschritt 105 wird überprüft, ob die Zeigeradresse ZA in einem ersten Speicherbereich SP1 des Programmzustands PZ angeordnet ist. In Abhängigkeit welches Programmobjekt durch das Zeigerelement referenziert wird, kann die Zeigeradresse in verschiedenen Bereichen des Speichers SP angeordnet sein. Die Einteilung des Speichers SP in die ersten und zweiten Speicherbereiche ist bekannt, sodass eine Zuordnung der Zeigeradresse zu einem der zwei Speicherbereiche ermöglicht ist.

Falls die Zeigeradresse ZA im ersten Speicherbereich SP1 des Programmzustands PZ angeordnet ist, wird in einem ersten Adressenoffsetbestimmungsschritt 107 ein erster Adressenoffset AO1 bestimmt. Der erste Adressenoffset AO1 beschreibt hierbei eine Anzahl von Speicherstellen, um die die Zeigeradresse ZA zu einer ersten Speicheradresse SPZ des Programmzustands PZ beabstandet ist.

Dass die Zeigeradresse ZA im ersten Speicherbereich SP1 angeordnet ist, bedeutet, dass durch das Zeigerelement ein Programmobjekt innerhalb des Programmzustands PZ referenziert ist. Eine Anordnung der Zeigeradresse ZA im zweiten Speicherbereich bedeutet hingegen, dass durch das Zeigerelement ein Programmobjekt PO innerhalb des Stacks referenziert ist.

Der erste Adressenoffset AO1 kann somit als eine Differenz der Zeigeradresse ZA des Zeigerelements und der ersten Speicheradresse SPZ des Programmzustands PZ im ersten Speicherbereich SP1 des Speichers SP gesehen werden. Über den ersten Adressenoffset AO1 kann die Zeigeradresse ZA, die eine absolute Speicheradresse innerhalb des Speichers SP ist, als eine relative Speicheradresse innerhalb des durch den Programmzustand PZ belegten ersten Speicherbereich SP1 ausgedrückt werden, die eine Adressierung relativ zu einer ersten Speicheradresse SPZ des Programmzustands PZ beschreibt. Die relative Adresse kann durch einen Abstand zur ersten Speicheradresse SPZ des Programmzustands PZ definiert werden.

In einem ersten Programmobjektidentifizierungsschritt 109 wird ein Programmobjekt PO des Programmzustands PZ identifiziert, das zur ersten Speicheradresse SPZ des Programmzustands PZ um die durch den ersten Adressenoffset AO1 definierte Anzahl von Speicherstellen beabstandet ist. Da die Zeigeradresse ZA ebenfalls um den ersten Adressenoffset AO1 zu der ersten Speicheradresse SPZ des Programmzustands PZ beabstandet ist, wird das identifizierte Programmobjekt PO darüber hinaus als ein erstes Programmobjekt PO1 identifiziert, das im ersten Speicherbereich SP1 des Programmzustands PZ eine Speicheradresse aufweist, die identisch zur Zeigeradresse ZA des Zeigerelements ist.

Über die Anordnungsstruktur des Programmzustands PZ ist jedem Programmobjekt PO des Programmzustands PZ eine Speicherposition P und eine Speichergröße SG zugeordnet, wobei die Speichergröße SG eine Anzahl von Speicherstellen definiert, die vom jeweiligen Programmobjekt PO im jeweiligen Speicherbereich eingenommen wird. Auf Basis der jeweiligen Speicherpositionen P und Speichergrößen SG der einzelnen Programmobjekte PO kann für jedes der nacheinander im ersten Speicherbereich SP1 des Programmzustands PZ gespeicherten Programmobjekte PO ein Abstand zur ersten Speicheradresse SPZ des Programmzustands PZ bestimmt werden. Der Abstand beschreibt jeweils eine Anzahl von Speicherstellen, um die einer erste Speicheradresse des jeweiligen Programmobjekts von der ersten Speicheradresse SPZ des Programmzustands entfernt im Speicher SP angeordnet ist. Dasjenige Programmobjekt PO, dessen Abstand zur ersten Speicheradresse SPZ des Programmzustands PZ dem ersten Adressenoffset AO1 entspricht, wird als erstes Programmobjekt PO1 identifiziert. Da der Abstand des ersten Programmobjekts PO1 zur ersten Speicherstelle SPZ des Programmzustands PZ dem ersten Adressenoffset AO1 entspricht, ist das erste Programmobjekt PO1 an einer Speicheradresse gespeichert, die der Zeigeradresse ZA entspricht. Somit wird das identifizierte erste Programmobjekt PO durch das Zeigerelement referenziert.

Somit wird in einem Zeigerobjektidentifizierungsschritt 111 das identifizierte erste Programmobjekt PO1 als das durch das Zeigerelement referenzierte Zeigerobjekt ZO identifiziert. Hierdurch ist der Zeigeradresse ZA des Zeigerelements eindeutig ein Programmobjekt PO des Programmzustands PZ zugeordnet.

Darauffolgend wird in einem Vollbezeichnungsbestimmungsschritt 113 dem durch das erste Programmobjekt PO1 dargestellten Zeigerobjekt ZO eine vollqualifizierte Bezeichnung zugewiesen. Die vollqualifizierte Bezeichnung des Zeigerobjekts ZO stellt sich hierbei durch wenigstens den Namen bzw. die Bezeichnung des identifizierten ersten Programmobjekts PO1 des Programmzustands PZ dar. Der Name des identifizierten ersten Programmobjekts PO1 kann hierbei ein im Steuerprogramm definierter Name der durch das erste Programmobjekt PO1 dargestellten Variable oder des dargestellten Datenobjekts sein.

Hierauf folgend kann die vollqualifizierte Bezeichnung des Zeigerobjekts ZO in einem Anzeigeschritt 115 auf einem Displayelement des Automatisierungssystems 200 angezeigt werden. Das Displayelement 207 ist hierzu mit der Steuerung 201 verbunden. Das Displayelement 207 kann beispielsweise ein Desktopcomputer, ein Laptop oder ein Mobilgerät sein. Alternativ kann das Displayelement 207 in die Steuerung 201 als eine Mensch-Maschine-Schnittstelle integriert sein.

Neben den bestimmten Zeigerobjekten ZO können im Anzeigeschritt vollqualifizierte Bezeichnungen einer Mehrzahl von Programmobjekte PO angezeigt werden. Die jeweiligen Programmobjekte PO müssen keine durch ein Zeigerelement referenzierten Zeigerobjekte ZO sein und können beliebige Variablen des Steuerprogramms oder Parameter des zu steuernden Automatisierungsprozesses sein.

Über die Anzeige der vollqualifizierten Bezeichnungen der Programmobjekte PO des Programmzustands PZ kann dem Nutzer unmittelbar auslesbare Information bezüglich der Werte der Programmobjekte PO des Programmzustands PZ bereitgestellt werden. Neben den vollqualifizierten Bezeichnungen der einzelnen Programmobjekte PO kann auf dem Displayelement 207 zu jedem angezeigten Programmobjekt PO der jeweilige Wert des Programmobjekts angezeigt werden, den dieses während der Ausführung des Steuerprogramms aufweist. Während des Steuerns eines Automatisierungsprozesses des Automatisierungssystems 200 auf Basis der Ausführung des Steuerprogramms ist anhand der Werte der Programmobjekte somit eine Beurteilung eines Ablaufs des Automatisierungsprozesses ermöglicht.

Somit kann auf Basis der angezeigten vollqualifizierten Bezeichnungen der Programmobjekte PO auf dem Displayelement 207 eine Evaluierung des Steuerprogramms und des durch das Steuerprogramm gesteuerten Automatisierungsprozesses des Automatisierungssystems 200 vorgenommen werden. Ferner können gemäß den angezeigten vollqualifizierten Bezeichnungen Modifikation des Steuerprogramms vorgenommen und eine Steuerung des Automatisierungssystems 200 auf Basis des modifizierten Steuerprogramms bewirkt werden.

Alternativ kann auf Basis der angezeigten Werte und der vollqualifizierten Bezeichnungen der Programmobjekte der Automatisierungsprozess über eine Eingabe entsprechend geänderter Steuerungsparameter angepasst oder modifizierte werden. Steuerungsparameter sind in diesem Zusammenhang Parameterwerte, auf Basis derer der Automatisierungsprozess steuerbar ist.

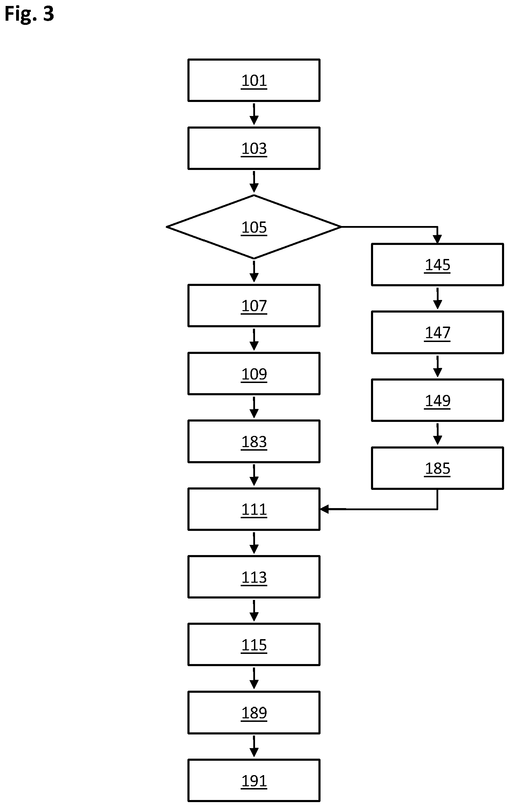

Fig. 3 zeigt ein weiteres Flussdiagramm des Verfahrens 100 zum Steuern eines Automatisierungssystems 200 mit Visualisierung von Programmobjekten eines Steuerprogramms gemäß einer weiteren Ausführungsform.

Die Ausführungsform in Fig. 3 basiert auf der Ausführungsform in Fig. 2 und umfasst alle dort dargestellten Verfahrensschritte. Sofern diese in der Ausführungsform in Fig. 3 unverändert bleiben, wird von einer erneuten Beschreibung abgesehen.

Abweichend von der Ausführungsform in Fig. 2 umfasst das Verfahren 100 in der Ausführungsform in Fig. 3 einen Anpassungsschritt 189 und einen Steuerschritt 191.

Im Anpassungsschritt werden auf Basis der im Anzeigeschritt 115 angezeigten vollqualifizierten Bezeichnungen von Programmobjekten des Steuerprogramms Anpassungen an den Werten der Programmobjekte vorgenommen. Hierzu werden im Anzeigeschritt 115 zusätzlich zu den vollqualifizierten Bezeichnungen der Programmobjekte Werte der jeweiligen Programmobjekte PO angezeigt. Auf Basis der vollqualifizierten Bezeichnungen und der Werte der Programmobjekte kann eine Beurteilung des durch das Steuerprogramm gesteuerten Automatisierungsprozesses des Automatisierungssystems 200 vorgenommen werden. Auf Basis der Beurteilung können Werte der Programmobjekte PO angepasst beziehungsweise geändert werden, um hierdurch den Automatisierungsprozess neu auszurichten oder an geänderte Bedingungen anzupassen. Die Anpassung der Werte der Programmobjekte PO kann hierbei von der Art des jeweiligen Programmobjekts PO und des jeweiligen zu steuernden Automatisierungsprozesses abhängen. Die Programmobjekte PO, deren vollqualifizierte Bezeichnungen im Anzeigeschritt 115 angezeigt werden, und deren Werte im Anpassungsschritt 189 angepasst werden, können beliebige Programmobjekte PO des Steuerprogramms sein, und sind nicht auf durch Zeigerelemente referenzierte Zeigerobjekte ZO beschränkt.

Im Steuerschritt 191 wird darauffolgend auf Basis der angepassten beziehungsweise geänderten Werte der Programmobjekte PO der Automatisierungsprozess gesteuert. Das Steuern umfasst hierbei das Ansteuern entsprechender Aktoren des Automatisierungssystems 200 durch entsprechende auf dem Steuerprogramm basierenden Steuerbefehlen. Das Steuern umfasst ferner das Aufnehmen von Messwerten der Sensoren des Automatisierungssystems 200 und das verarbeiten der Sensorwerte als Eingabewerte der Steuerung durch das Ausführen des Steuerprogramms und das entsprechende Generieren von Steuerbefehlen für die Aktoren in Form von Ausgabewerten der Steurung.

Abweichend von der Ausführungsform in Fig. 2 umfasst das Verfahren 100 in der Ausführungsform in Fig. 3 ferner einen ersten Datentypbestimmungsschritt 183, der nach dem ersten Programmobjektidentifizierungsschritt 109 ausgeführt wird. Im ersten Datentypbestimmungsschritt 183 wird der Datentyp des identifizierten ersten Programmobjekts PO1 bestimmt. Der Datentyp des ersten Programmobjekts PO1 kann darauffolgend als zusätzliche Information neben dem Namen beziehungsweise der Bezeichnung des Programmobjekts in die vollqualifizierte Bezeichnung des Zeigerobjekts ZO im Vollbezeichnungsbestimmungsschritt 113 mit aufgenommen werden.

Unabhängig davon, ob das erste Programmobjekt PO1 im Programmzustand PZ oder im Stack angeordnet ist, kann dieses einen beliebigen Datentyp aufweisen, beispielsweise einen Integer-Typ, eine Float-Typ, einen Boolean-Typ, oder einen anderen Skalartyp. Alternativ kann das erste Programmobjekt von einem Verbundtyp, einem Feldtyp oder einem Zeichenkettentyp sein. Alternativ kann das erste Programmobjekt auch von einem Zeigertyp sein.

Darüber hinaus umfasst die Ausführungsform in Fig. 3 den Fall, dass im Überprüfungsschritt 105 festgestellt wird, dass die Zeigeradresse ZA des Zeigerelements im zweiten Speicherbereich SP2 des Stacks ST gespeichert ist.

In diesem Fall wird in einem Stack-Strukturbestimmungsschritt 145 eine Struktur des Stacks bestimmt. Die Struktur des Stacks beschreibt hierbei analog zur Anordnungsstruktur des Programmzustands PZ eine Anordnung der einzelnen Stack-Programmobjekte und ordnet jedem Stack-Programmobjekt des Stacks ST eine Speicherposition und eine Speichergröße zu, die das jeweilige Stack-Programmobjekt in der Struktur des Stacks einnimmt.

In einem ersten Stack-Adressenoffsetbestimmungsschritt 147 wird ein erster Stack-Adressenoffset bestimmt, der eine Anzahl von Speicherstellen definiert, die die Zeigeradresse ZA von einer ersten Speicheradresse des Stacks im zweiten Speicherbereich SP2 beabstandet ist. Dieser Schritt erfolgt analog zu dem ersten Adressenoffsetbestimmungsschritt 107.

Darauf folgend wird in einem ersten Stack-Programmobjektidentifizierungsschritt 149 unter Berücksichtigung der Struktur des Stacks und dem ersten Stack-Adressenoffset ein erstes Stack-Programmobjekt identifiziert, das zur ersten Speicheradresse des Stacks um die im ersten Stack-Adressenoffset definierte Anzahl von Speicherstellen beabstandet ist.

Analog zu der oben beschriebenen Ausführungsform werden für jedes im Stack gespeicherte Stack-Programmobjekt gemäß der jeweiligen in der Struktur des Stacks bestimmten Speicherpositionen und Speichergrößen jeweils Abstände zur ersten Speicheradresse des Stacks bestimmt. Das Stack-Programmobjekt, dessen Abstand zur ersten Speicheradresse des Stacks der im ersten Stack-Adressenoffset bestimmten Anzahl an Speicherstellen entspricht, wird als erstes Stack-Programmobjekt identifiziert, das eine Speicheradresse im zweiten Speicherbereich SP2 des Stacks ST aufweist, die der Zeigeradresse ZA des Zeigerobjekts entspricht.

In einem ersten Stack-Datentypbestimmungsschritt 185 wird der Datentyp des identifizierten ersten Stack-Programmobjekts bestimmt.

Im Zeigerobjektidentifizierungsschritt 111 wird das identifizierte erste Stack-Programmobjekt mit dem Zeigerobjekt ZO des Zeigerelements identifiziert.

Die Bestimmung des ersten Stack-Adressenoffsets im ersten Stack-Adressenoffsetbestimmungsschritt 147, sowie die Bestimmung des ersten Stack-Programmobjekts im ersten Stack-Programmobjektidentifizierungsschritt 149 erfolgen analog zu den entsprechenden Verfahrensschritten bezüglich der Bestimmung des ersten Adressenoffsets bzw. der Identifizierung des ersten Programmobjekts des Programmzustands PZ.

Fig. 4 zeigt eine schematische Darstellung einer Bestimmung eines Zeigerobjekts ZO gemäß einer Ausführungsform des Verfahrens 100 in Fig. 2.

In Fig. 4 ist eine Anordnung von Programmobjekten PO des Programmzustands PZ innerhalb des ersten Speicherbereichs SP1 des Speichers SP der Steuerung 201 dargestellt. Die Fig. 4 dient zur Illustration der Identifizierung des ersten Programmobjekts PO1 als das durch das Zeigerelement referenzierte Zeigerobjekt ZO, das im ersten Speicherbereich SP1 des Programmzustands PZ an der Zeigeradresse ZA gespeichert ist.

In Fig. 4 ist der erste Speicherbereich SP1 innerhalb des Speichers SP dargestellt. Im ersten Speicherbereich SP1 ist der Programmzustand PZ als ein zusammenhängender Bereich innerhalb des ersten Speicherbereichs SP1 dargestellt. In der Ausführungsform in Fig. 4 umfasst der Programmzustand PZ ein erstes Programmobjekt PO1 und ein weiteres Programmobjekt PO. Die in Fig. 4 dargestellten Größenverhältnisse sind aus illustrativen Zwecken verfälscht dargestellt. Darüber hinaus sind die durch den Programmzustand PZ umfassten Programmobjekte PO in einer rein beispielhaften Anzahl dargestellt. Beides dient lediglich zu illustrativen Zwecken.

Das Programmobjekt PO ist innerhalb einer Anordnungsstruktur des Programmzustands PZ an einer ersten Speicherposition P1 angeordnet, während das erste Programmobjekt PO1 in einer zweiten Speicherposition P2 angeordnet ist. Beide Programmobjekte weisen eine Speichergröße SG auf, die eine Anzahl von Speicherstellen beschreibt, die die jeweiligen Programmobjekte PO, PO1 im ersten Speicherbereich SP1 des Programmzustands PZ einnehmen. Alternativ können die Speichergrößen des Programmobjekts PO und des ersten Programmobjekts PO1 unterschiedlich sein.

In der Ausführungsform in Fig. 4 entspricht das erste Programmobjekt PO1 dem Zeigerobjekt ZO und ist in dem ersten Speicherbereich SP1 des Programmzustands PZ an einer Speicheradresse gespeichert, die der Zeigeradresse ZA des Zeigerobjekts ZO entspricht. Die Zeigeradresse ZA entspricht der absoluten Speicheradresse innerhalb des Adressenraums des Speichers SP.

Darüber hinaus ist in Fig. 4 ein erster Adressenoffset AO1 dargestellt, der einen Abstand zwischen der Zeigeradresse ZA und einer ersten Speicheradresse SPZ des Programmzustands PZ beschreibt. Der erste Adressenoffset AO1 beschreibt somit einen Abstand, den die Zeigeradresse ZA relativ zu einer ersten Speicheradresse SPZ des Programmzustands PZ aufweist.

Die Speicheradresse ZA und insbesondere die Speicheradresse des ersten Programmobjekts PO1 lässt sich somit als eine Summe der ersten Speicheradresse SPZ des Programmzustands PZ und dem ersten Adressenoffset AO1 ausdrücken.

Durch Bestimmen des ersten Adressenoffsets AO1 im ersten Adressenoffsetbestimmungsschritt 107, als Differenz der Zeigeradresse ZA zur ersten Speicheradresse SPZ des Programmzustands PZ, und unter Berücksichtigung der Anordnungsstruktur des Programmzustands PZ, die jedem Programmobjekt des Programmzustands PZ eine Speicherposition PO1, PO2 innerhalb des Programmzustands PZ und eine Speichergröße SG zuordnet, kann durch Abzählen der Speicherstellen von der ersten Speicheradresse SPZ des Programmzustands PZ, die die einzelnen Programmobjekte PO, PO1 des Programmzustands PZ innerhalb des ersten Speicherbereichs SP1 des Programmzustands PZ einnehmen, dasjenige Programmobjekt, in der Ausführungsform in Fig. 4, das erste Programmobjekt PO1, identifiziert werden, das von der ersten Speicheradresse SPZ des Programmzustands PZ um den ersten Adressenoffset AO1 beabstandet ist, und somit eine Speicheradresse innerhalb des ersten Speicherbereichs SP1 des Programmzustands PZ einnimmt, die der Zeigeradresse ZA des Zeigerobjekts ZO entspricht. Hierdurch kann das Zeigerobjekt ZO in Form eines identifizierten ersten Programmobjekts PO1 des Programmzustands PZ identifiziert werden.

Das in Fig. 4 dargestellte Vorgehen kann auf die Identifizierung eines entsprechenden Stack-Programmobjekts des Stacks für den Fall, dass die Zeigeradresse ZA des Zeigerobjekts ZO im Stack angeordnet ist, analog angewendet werden.

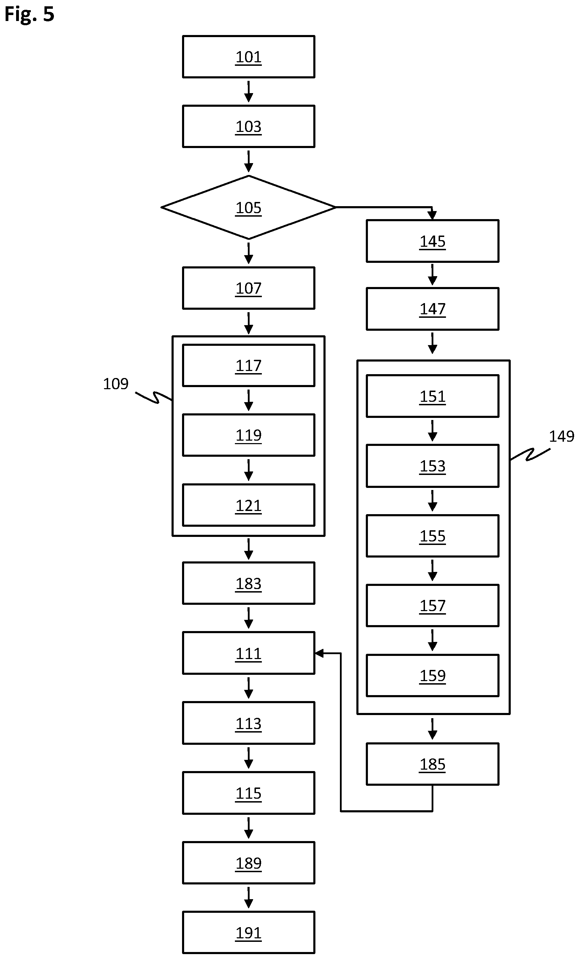

Fig. 5 zeigt ein weiteres Flussdiagramm des Verfahrens 100 zum Steuern eines Automatisierungssystems 200 mit Visualisierung von Programmobjekten PO eines Steuerprogramms gemäß einer weiteren Ausführungsform.

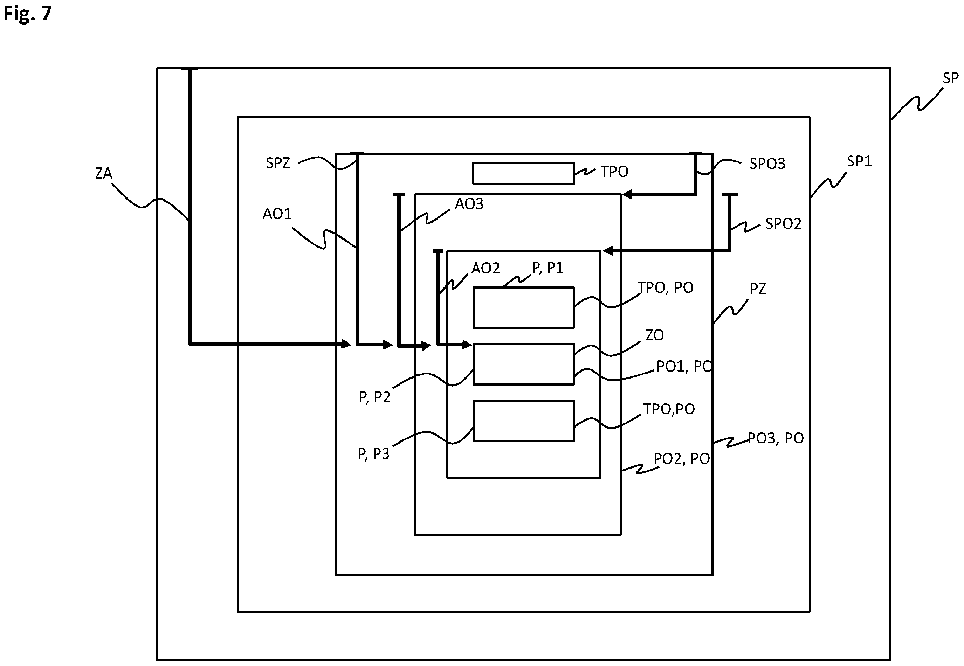

Die Ausführungsform des Verfahrens 100 in Fig. 5 wird mit Bezug auf die Fig. 7 und die hierzu bereitgestellte Beschreibung beschrieben.

Die in Fig. 5 dargestellte Ausführungsform basiert auf der Ausführungsform in Fig. 3 und umfasst alle dort beschriebenen Verfahrensschritte. Sofern diese in der Ausführungsform in Fig. 5 unverändert bleiben, wird von einer erneuten Beschreibung abgesehen.

In der Ausführungsform in Fig. 5 ist der Fall beschrieben, dass das erste Programmobjekt PO1 ein untergeordnetes Teilprogrammobjekt eines übergeordneten zweiten Programmobjekts PO2 ist. Das übergeordnete zweite Programmobjekt PO2 kann beispielsweise vom Datentyp eines Verbundtyps, eines Feldtyps oder eines Zeichenkettentyps sein und das untergeordnete erste Programmobjekt PO1 kann demnach beispielsweise ein Element des Feldtyps, eine Komponente des Verbundtyps oder ein Element des Zeichenkettentyps sein.

Zur Identifizierung des ersten Programmobjekts PO1 umfasst der erste Programmobjektidentifizierungsschritt 109 somit einen zweiten Programmobjektidentifizierungsschritt 117. Im zweiten Programmobjektidentifizierungsschritt 117 wird unter Berücksichtigung der Anordnungsstruktur des Programmzustands PZ und unter Berücksichtigung des ersten Adressenoffsets AO1 ein übergeordnetes zweites Programmobjekt PO2 identifiziert, das im ersten Speicherbereich SP1 des Programmzustands PZ einen Speicherbereich belegt, der die Zeigeradresse ZA umfasst. Das übergeordnete zweite Programmobjekt PO2 wird hierbei dadurch identifiziert, dass gemäß der Anordnungsstruktur des Programmzustands PZ das Programmobjekt PO des Programmzustands PZ identifiziert wird, das einen Speicherbereich belegt, in dem die um den ersten Adressenoffset AO1 zur ersten Speicheradresse SPZ des Programmzustands PZ beabstandete Speicherstelle angeordnet ist.

Die Identifizierung des übergeordneten zweiten Programmobjekts PO2 erfolgt vergleichbar zu der oben beschriebenen Identifizierung des ersten Programmobjekts PO1 durch Ermitteln der Abstände der einzelnen Programmobjekte PO des Programmzustands PZ zur ersten Speicheradresse SPZ des Programzustands PZ. Der Abstand eines Programmobjekts PO ist hierbei eine Anzahl von Speicherstellen, um die eine erste relative Speicheradresse des jeweiligen Programmobjekts von der ersten Speicheradresse SPZ des Programmzustands PZ beabstandet im Speicher SP angeordnet ist. Dasjenige Programmobjekt PO, das gemäß der Anordnungsstruktur des Programmzustands PZ innerhalb des Programmzustands PZ einen Bereich belegt, der eine Speicherstelle umfasst, die um den ermittelten ersten Adressenoffset AO1 zur ersten Speicheradresse SPZ des Programmzustands PZ beabstandet ist, wird als übergeordnetes zweites Programmobjekt PO2 identifiziert.

Darauffolgend wird in einem zweiten Adressenoffsetbestimmungsschritt 119 ein zweiter Adressenoffset AO2 bestimmt, der sich aus einer Differenz zwischen dem ersten Adressenoffset und der ersten relativen Speicheradressen SPO2 des zweiten Programmobjekts PO2 ergibt, und der eine Anzahl von Speicherstellen definiert, um die die Zeigeradresse ZA von einer ersten relativen Speicheradresse SPO2 des übergeordneten zweiten Programmobjekts PO2 beabstandet ist.

In einem zweiten Datentypbestimmungsschritt 121 wird der Datentyp des übergeordneten zweiten Programmobjekts PO2 bestimmt. Der Datentyp des übergeordneten Programmobjekts PO2 umfasst hierbei eine Anzahl von untergeordneten Teilprogrammobjekten des übergeordneten zweiten Programmobjekts PO2. Darüber hinaus beschreibt der Datentyp eine Struktur, in der die einzelnen untergeordneten Teilprogrammobjekte im übergeordneten zweiten Programmobjekt PO2 angeordnet sind. Hierbei wird jedem untergeordneten Teilprogrammobjekt eine Speicherposition und eine Speichergröße innerhalb des durch das übergeordnete zweite Programmobjekt PO2 belegten Speicherbereichs zugeordnet. Die Speicherpositionen sind hierbei jeweils relativ zur ersten Speicherstelle des zweiten Programmobjekts PO2 bestimmt.

Darauf folgend wird unter Berücksichtigung des zweiten Adressenoffsets AO2 und der Struktur des übergeordneten zweiten Programmobjekts PO2 das untergeordnete Teilprogrammobjekt des übergeordneten zweiten Programmobjekts PO2 bestimmt, das zur ersten relativen Speicheradresse SPO2 des übergeordneten zweiten Programmobjekts PO2 um den zweiten Adressenoffset AO2 beabstandet ist. Dieses identifizierte untergeordnete Teilprogrammobjekt wird als erstes Programmobjekt PO1 identifiziert, das innerhalb des Programmzustands PZ des ersten Speicherbereichs SP1 an einer Speicheradresse angeordnet ist, die der Zeigeradresse ZA des Zeigerobjekts ZO entspricht.

Die Identifizierung des ersten Programmobjekts PO1 erfolgt analog beziehungsweise vergleichbar zur Identifizierung des übergeordneten zweiten Programmobjekts PO2, indem für alle untergeordneten Programmteilobjekte des übergeordneten zweiten Programmobjekts PO2 gemäß der jeweiligen Speicherpositionen und Speichergrößen Abstände ermittelt werden, um die die untergeordneten Programmteilobjekte zu einer ersten Speicherstelle des übergeordneten zweiten Programmobjekts PO2 beabstandet sind. Dasjenige untergeordnete Programmteilobjekt, dessen Abstand mit dem zweiten Adressenoffset AO2 übereinstimmt, wird als erstes Programmobjekt PO1 identifiziert, dessen Speicheradresse um den ersten Adressenoffset AO1 zur ersten Speicheradresse SPZ des Programmzustands PZ beabstandet ist und folglich mit der Zeigeradresse ZA übereinstimmt. Abstände sind wie oben bereits beschrieben, Anzahlen von Speicherstellen, um die die ersten relativen Speicheradressen der jeweiligen Programmobjekte PO zu einer ersten relativen Speicheradresse des jeweils direkt übergeordneten Programmobjekts PO im Speicher SP angeordnet sind.

Der erste Adressenoffset AO1 lässt sich hierbei als eine Summe aus dem zweiten Adressenoffset AO2 und der ersten relativen Speicheradresse SPO2 des übergeordneten zweiten Programmobjekts PO2 innerhalb des Programmzustands PZ ausdrücken.

In der vollqualifizierten Bezeichnung des identifizierten Zeigerobjekts im Vollbezeichnungsbestimmungsschritt 113 können sowohl die Bezeichnung des identifizierten ersten Programmobjekts PO1 als auch die Bezeichnung des identifizierten übergeordneten zweiten Programmobjekts PO2 angegeben sein. In einem Fall, in dem somit durch das Zeigerelement ein Element eines Feldtyps bzw. eine Komponente eines Verbundtyps oder ein Element eines Zeichenkettentyps referenziert wird, können somit in der vollqualifizierten Bezeichnung das referenzierte Element bzw. die referenzierte Komponente und der entsprechende Feldtyp, Verbundtyp oder Zeichenkettentyp angegeben sein.

In Fig. 5 ist ferner der Fall beschrieben, dass die Zeigeradresse ZA im zweiten Speicherbereich SP2 des Stacks ST angeordnet ist und durch das Zeigerelement ein untergeordnetes Stack-Teilobjekt eines übergeordneten Stack-Programmobjekts referenziert wird. Analog zu dem oben Beschriebenen wird hiermit der Fall beschrieben, dass durch das Zeigerelement ein Element bzw. eine Komponente eines im Stack gespeicherten Verbundtyps, eines Feldtyps oder eines Zeichenkettentyps referenziert wird.

Hierzu umfasst der erste Stack-Programmobjektidentifizierungsschritt 149 einen Frameidentifizierungsschritt 151. Im Frameidentifizierungsschritt wird ein Frame des Stacks identifiziert, der im zweiten Speicherbereich SP2 des Stacks ST Speicheradressen belegt, von denen eine zur ersten Speicheradresse des Stacks um den ersten Stack-Adressenoffset beabstandet ist. Hierzu kann auf Basis einer Struktur des Stacks, in der jedem Programmobjekt des Stacks eine Speicherposition und Speichergröße zugeordnet sind, der Frame bestimmt werden, der im Stack einen Speicherbereich belegt, der die Zeigeradresse ZA umfasst.

Die Frames des Stacks sind für gewöhnlich in einer Folge angeordnet. Aus dem Inhalt eines Frames kann somit auf den Aufbau eines jeweils folgenden Frames geschlossen werden. Die Struktur des ersten Frames des Stacks ist für gewöhnlich bekannt. Die Struktur eines Frames kann insbesondere durch die entsprechende Funktion des Frames festgelegt sein. Gegebenenfalls kann zur Bestimmung der Struktur des Frames zusätzlich eine Ausführungsposition der Funktion berücksichtigt werden müssen.

In einem Funktionsidentifikationsschritt 153 wird ferner die zugehörige Funktion des identifizierten Frames identifiziert.

In einem zweiten Stack-Programmobjektidentifizierungsschritt 155 wird ein übergeordnetes zweites Stack-Programmobjekt identifiziert, das im zuvor bestimmten Frame Speicheradressen belegt, die zur ersten Speicheradresse des Frames um beabstandet sind.

Die Vorgehensweise im zweiten Stack-Programmobjektidentifizierungsschritt 155 ist vergleichbar zu der im zweiten Programmobjektidentifizierungsschritt 117.

In einem zweiten Stack-Adressenoffsetbestimmungsschritt 157 wird ein zweiter Stack-Adressenoffset bestimmt, der sich aus einer Differenz zwischen dem ersten Stack-Adressenoffset und der ersten relativen Speicheradressen des zweiten Stack-Programmobjekts PO2 ergibt, und der eine Anzahl von Speicherstellen definiert, um die Zeigeradresse ZA zu einer ersten relativen Speicheradresse des übergeordneten zweiten Stack-Programmobjekts beabstandet ist.

In einem zweiten Stack-Datentypbestimmungsschritt 159 wird ein Datentyp des übergeordneten zweiten Stack-Programmobjekts bestimmt.

Auf Basis des zweiten Stack-Adressenoffsets und des Datentyps des übergeordneten zweiten Stack-Programmobjekts, in dem eine Anordnungsstruktur der untergeordneten Stack-Teilprogrammobjekte des übergeordneten zweiten Stack-Programmobjekts definiert ist, wird das erste Stack-Programmobjekt als das untergeordnete Stack-Teilprogrammobjekt des übergeordneten zweiten Stack-Programmobjekts identifiziert, das um den zweiten Stack-Adressenoffset zur ersten relativen Speicheradresse des übergeordneten zweiten Stack-Programmobjekts beabstandet ist.

Die Identifizierung des übergeordneten zweiten Stack-Programmobjekts, die Bestimmung des zweiten Stack-Adressenoffsets und die Identifizierung des ersten Stack-Programmobjekts erfolgt analog zu dem oben beschriebenen Vorgehen zur Bestimmung des entsprechenden Adressenoffsets und Identifizierung des entsprechenden Programmobjekts des Programmzustands.

In der vollqualifizierten Bezeichnung des Zeigerobjekts ZO kann analog zu dem oben Beschriebenen sowohl die Bezeichnung der referenzierten Komponente bzw. des referenzierten Elements als auch die Bezeichnung des übergeordneten Feldtyps, Verbundtyps oder Zeichenkettentyps umfassen. Darüber hinaus kann die vollqualifizierte Bezeichnung des Zeigerobjekts ZO eine Bezeichnung des das Zeigerobjekt ZO umfassenden Frames bzw. der zum Frame gehörenden Funktion umfassen.

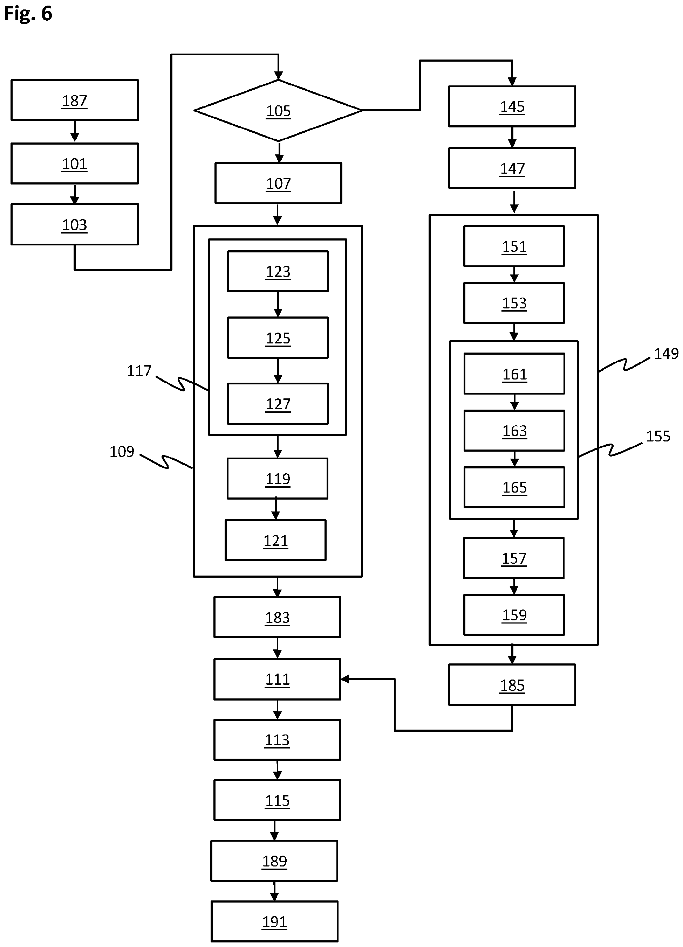

Fig. 6 zeigt ein weiteres Flussdiagramm des Verfahrens 100 zum Steuern eines Automatisierungssystems 200 mit Visualisierung von Programmobjekten PO eines Steuerprogramms gemäß einer weiteren Ausführungsform.

Die Ausführungsform des Verfahrens 100 in Fig. 6 wird mit Bezug auf die Fig. 7 und die hierzu bereitgestellte Beschreibung beschrieben.

Die Ausführungsform in Fig. 6 basiert auf der Ausführungsform in Fig. 5 und umfasst alle dort beschriebenen Verfahrensschritte. Sofern diese in der Ausführungsform in Fig. 6 unverändert bleiben, wird von einer erneuten Beschreibung abgesehen.

Die Ausführungsform in Fig. 6 beschreibt den Fall, dass das durch das Zeigerelement referenzierte Zeigerobjekt ein untergeordnetes Teilprogrammobjekt eines übergeordneten Programmobjekts in zweifacher Schachtelungstiefe ist. In Fig. 6 wird somit der Fall beschrieben, dass durch das Zeigerelement beispielsweise ein Element eines Objektes eines Feldtyps referenziert wird, wobei das Feldtypobjekt wiederum ein Element eines weiteren Objektes eines Feldtyps ist. Analog kann das Zeigerobjekt eine Komponente eines Verbundtyps sein, dessen Objekt wiederum eine Komponente eines übergeordneten Verbundtyps ist. Analog können Feldtypen, Verbundtypen und weitere Typen, auch in Kombination, beliebig ineinander verschachtelt sein, wobei die Schachtelungstiefe beliebig ist.

Hierzu umfasst in der Ausführungsform in Fig. 6 der zweite Programmobjektidentifizierungsschritt 117 einen dritten Programmobjektidentifizierungsschritt 123, in dem das übergeordnete dritte Programmobjekt POS als ein Programmobjekt PO des Programmzustands PZ identifiziert wird, das einen Speicherbereich belegt, in dem die Zeigeradresse ZA angeordnet ist. Das übergeordnete dritte Programmobjekt POS umfasst mehrere untergeordnete Teilprogrammobjekte. Eins der untergeordneten Teilprogrammobjekte ist das übergeordnete zweite Programmobjekt, das wiederum das erste Programmobjekt PO1 umfasst.

Die Identifizierung des übergeordneten dritten Programmobjekts POS erfolgt analog zu der zu Fig. 5 beschriebenen Identifizierung des übergeordneten zweiten Programmobjekts PO2.

In einem dritten Adressenoffsetbestimmungsschritt 125 wird ein dritter Adressenoffset AO3 bestimmt. Der dritte Adressenoffset AO3 beschreibt hierbei den Abstand der Zeigeradresse ZA, sprich der Adresse, die von der ersten Speicheradresse SPZ des Programmzustands PZ um den ersten Adressenoffset AO1 beabstandet ist, zu einer ersten relativen Speicheradresse SPO3 des übergeordneten dritten Programmobjekts PO3. Die Bestimmung erfolgt analog zur zu Fig. 5 beschriebenen Bestimmung des zweiten Adressenoffsets AO2.

Der dritte Adressenoffset AO3 beschreibt hierbei eine Anzahl von Speicherstellen, um die die Zeigeradresse ZA zu einer ersten relativen Speicheradresse SPO3 des übergeordneten zweiten Programmobjekts PO3 beabstandet ist.

Der dritte Adressenoffset AO3 ergibt sich somit aus einer Differenz zwischen dem ersten Adressenoffset AO1 und der ersten relativen Speicheradresse SPO3 des dritten Programmobjekts P03.

In einem dritten Datentypbestimmungsschritt 127 wird der Datentyp des übergeordneten dritten Programmobjekts POS bestimmt.

Auf Basis des Datentyps des übergeordneten dritten Programmobjekts POS und des dritten Adressenoffsets AO3 wird im zweiten Programmobjektidentifizierungsschritt 117 nach Durchführung der Schritte 123,125,127 das übergeordnete zweite Programmobjekt PO2 als das untergeordnete Programmteilobjekt des übergeordneten dritten Programmobjekt POS identifiziert, das die Zeigeradresse ZA umfasst. Die Identifizierung des übergeordneten zweiten Programmobjekts PO2 erfolgt analog zur der zu Fig. 5 beschriebenen Identifizierung des ersten Programmobjekts PO1 im ersten Programmobjektidentifizierungsschritt 109 durch Bestimmen der Abstände der untergeordneten Programmteilobjekte des übergeordneten dritten Programmobjekt PO3 zur ersten Speicherstelle des dritten Programmobjekts PO3 und Ermitteln, desjenigen untergeordneten Programmteilobjekts des übergeordneten dritten Programmobjekts PO3, das gemäß dem ermittelten Abstand und der jeweiligen Speichergröße SG im Speicherbereich des übergeordneten dritten Programmobjekts PO3 einen Bereich einnimmt, der eine Speicheradresse umfasst, die zur ersten relativen Speicheradresse SPO3 des dritten Programmobjekts PO3 um den dritten Adressenoffset AO3 beabstandet ist.

Die Identifizierung des übergeordneten zweiten Programmobjekts PO2 erfolgt somit auf Grundlage des dritten Adressenoffsets AO3 und dem Wissen über die Struktur des bestimmten Typs des dritten Programmobjekts PO3, durch den die Anordnung von untergeordneten Teilprogrammobjekten des dritten Programmobjekts PO3 definiert ist. Demzufolge wird dasjenige untergeordnete Teilprogrammobjekt des dritten Programmobjekts PO3 als zweites Programmobjekt PO2 bestimmt, dessen Speicherbereich eine Speicherstelle umfasst, die zur ersten relativen Speicherstelle des dritten Programmobjekts PO3 um den dritten Adressenoffset A03 beabstandet.

Analog wird zur Bestimmung eines übergeordneten dritten Stack-Programmobjekts im zweiten Stack-Programmidentifizierungsschritt 155 ein dritter Stack-Programmidentifizierungsschritt 161 durchgeführt. Darauffolgend wird in einem dritten Stack-Adressenoffsetbestimmungsschritt 163 ein dritter Stack-Adressenoffset bestimmt, indem ein Abstand zwischen der Zeigeradresse ZA und einer ersten relativen Speicheradresse des übergeordneten dritten Stack-Programmobjekts bestimmt ist. Darauffolgend wird in einem dritten Stack-Datentypbestimmungsschritt 165 der Datentyp des übergeordneten dritten Stack-Programmobjekts bestimmt.

Hierauf basierend wird im zweiten Stack-Programmobjektidentifizierungsschritt 155 das übergeordnete zweite Stack-Programmobjekt identifiziert.

Die Identifizierung des übergeordneten dritten Stack-Programmobjekts bzw. die Bestimmung des dritten Stack-Adressenoffsets bzw. des Datentyps des übergeordneten dritten Stack-Programmobjekts wird analog zur Identifizierung des übergeordneten zweiten Stack-Programmobjekts bzw. analog zur Bestimmung des zweiten Stack-Adressenoffsets bzw. des Datentyps des zweiten Stack-Programmobjekts durchgeführt.

Analog zu der oben beschriebenen Identifizierung des übergeordneten zweiten Programmobjekt PO2 im zweiten Programmobjektidentifizierungsschritt 117 wird auf Basis des dritten Stack-Adressenoffsets und des Datentyps des übergeordneten dritten Stack-Programmobjekts im zweiten Stack-Programmobjektidentifizierungsschritt 155 das zweite Stack-Programmobjekt identifiziert.

Abweichend zu der Ausführungsform in Fig. 5 umfasst das Verfahren 100 in der Ausführungsform in Fig. 6 einen Auswahlschritt 187, in dem Programmobjekte des Programmzustands PZ bzw. Stack-Programmobjekte des Stacks ausgewählt werden, für die eine Bestimmung einer vollqualifizierten Bezeichnung und eine Anzeige der vollqualifizierten Bezeichnung gemäß dem erfindungsgemäßen Verfahren vorgenommen werden.

Fig. 7 zeigt eine schematische Darstellung einer Bestimmung eines Zeigerobjekts ZO gemäß einer Ausführungsform des Verfahrens 100 in Fig. 2.

Die schematische Darstellung des Speicherbereichs des Programmzustands PZ in Fig. 7 basiert auf der schematischen Darstellung in Fig. 4 und beschreibt den zu Fig. 6 beschriebenen Fall, dass das vom Zeigerelement referenzierte Zeigerobjekt ZO ein untergeordnetes Teilprogrammobjekt eines übergeordneten Programmobjekts in zweifacher Schachtelungstiefe ist.

Hierzu ist in Fig. 7 im ersten Speicherbereich SP1 des Speichers SP der Programmzustand PZ angeordnet, der in der Ausführungsform in Fig. 7 ein Programmobjekt PO und ein weiteres Programmobjekt PO umfasst, das als ein übergeordnetes drittes Programmobjekt POS ausgebildet ist, das wiederum weitere untergeordnete Teilprogrammobjekte TPO umfasst. Das übergeordnete dritte Programmobjekt POS umfasst ferner ein untergeordnetes Teilprogrammobjekt in Form des übergeordneten zweiten Programmobjekts PO2. Das übergeordnete zweite Programmobjekt PO2 umfasst wiederum drei untergeordnete Teilprogrammobjekte TPO, von denen ein untergeordnetes Teilprogrammobjekt TPO als das erste Programmobjekt PO1 identifiziert ist.

Analog zu Fig. 4 ist das erste Programmobjekt PO1 als das Zeigerobjekt ZO identifiziert und im ersten Speicherbereich SP1 des Programmzustands PZ an der Zeigeradresse ZA angeordnet.

Ferner ist in Fig. 7 ein erster Adressenoffset AO1 dargestellt, der einen Abstand der Zeigeradresse ZA zu der ersten Speicheradresse SPZ des Programmzustands PZ beschreibt. Darüber hinaus ist ein zweiter Adressenoffset AO2 dargestellt, der sich aus einer Differenz zwischen dem ersten Adressenoffset AO1 und der ersten relativen Speicheradresse SPO2 des zweiten Programmobjekts PO2 und der ersten relativen Speicheradresse SPO3 des dritten Programmobjekts POS ergibt und einen Abstand zwischen der ersten relativen Speicheradresse SPO2 des zweiten Programmobjekts PO2 und einer Speicherstelle beschreibt, die um den ersten Adressenoffset AO1 zur ersten Speicheradresse SPZ des Programmzustands PZ beabstandet ist.

Ferner ist ein dritter Adressenoffset AO3 dargestellt, der sich aus einer Differenz zwischen dem ersten Adressenoffset AO1 und der ersten relativen Speicheradresse SPO3 des dritten Programmobjekts POS ergibt und einen Abstand zwischen der ersten relativen Speicheradresse SPO3 des dritten Programmobjekts PO3 und einer Speicherstelle beschreibt, die um den ersten Adressenoffset AO1 zur ersten Speicheradresse SPZ des Programmzustands PZ beabstandet ist.

Zur Identifizierung eines Programmobjekts PO des Programmzustands PZ als durch das Zeigerelement referenziertes Zeigerobjekt ZO wird zunächst der erste Adressenoffset AO1 bestimmt, der den Abstand der Zeigeradresse ZA zur ersten Speicheradresse SPZ des Programmzustands PZ beschreibt. Darauf folgend wird basierend auf dem ersten Adressenoffset AO1 und einer Anordnungsstruktur des Programmzustands PZ, die jedem Programmobjekt PO des Programmzustands PZ, das selbst kein untergeordnetes Programmobjekt eines übergeordneten Programmobjekts ist, eine Speicherposition P und eine Speichergröße SG zuweist, das übergeordnete dritte Programmobjekt PO3 als das Programmobjekt PO des Programmzustands PZ identifiziert, das im ersten Speicherbereich SP1 des Programmzustands PZ einen Speicherbereich belegt, der eine Speicherstelle umfasst, die um den ersten Adressenoffset AO1 zur ersten Speicheradresse SPZ des Programmzustands PZ beabstandet ist.

Nach Identifizierung des übergeordneten dritten Programmobjekts POS wird ein dritter Adressenoffset AO3 bestimmt, der sich aus der Differenz zwischen dem ersten Adressenoffset AO1 und der ersten relativen Speicheradressen SPO3 des dritten Programmobjekts POS ergibt, und eine Anzahl von Speicherstellen definiert, um die die Zeigeradresse ZA zur ersten relativen Speicheradresse SPO3 des übergeordneten dritten Programmobjekts beabstandet ist. Darüber hinaus wird der Datentyp des übergeordneten dritten Programmobjekts bestimmt, der in der Ausführungsform in Fig. 7 besagt, dass das übergeordnete dritte Programmobjekt POS ein untergeordnetes Teilprogrammobjekt in Form des übergeordneten zweiten Programmobjekts PO2 umfasst.

Darauf folgend wird das übergeordnete zweite Programmobjekt PO2 als das untergeordnete Teilprogrammobjekt des übergeordneten dritten Programmobjekts POS identifiziert, das im Speicherbereich des Programmzustands PZ einen Speicherbereich belegt, der Speicherstellen umfasst, die zur ersten relativen Speicherstelle SPO3 des übergeordneten dritten Programmobjekts POS um den dritten Adressenoffset AO3 beabstandet sind.

Darauf folgend wird ein zweiter Adressenoffset AO2 bestimmt, der sich aus der Differenz zwischen dem ersten Adressenoffset AO1 und einer Summe aus der ersten relativen Speicheradresse SPO3 des dritten Programmobjekts PO3 und der ersten relativen Speicheradressen SPO2 des zweiten Programmobjekts PO2 ergibt, und der eine Anzahl von Speicherstellen beschreibt, um die die Zeigeradresse ZA zur ersten relativen Speicheradresse SPO2 des übergeordneten zweiten Programmobjekts PO2 beabstandet ist. Ferner wird der Datentyp des übergeordneten zweiten Programmobjekts PO2 ermittelt, der in der Ausführungsform in Fig. 7 besagt, dass das übergeordnete zweite Programmobjekt PO2 drei untergeordnete Teilprogrammobjekte TPO umfasst, die in einer ersten Speicherposition P1, einer zweiten Speicherposition P2 und einer dritten Speicherposition P3 innerhalb des Speicherbereichs, der durch das übergeordnete zweite Programmobjekt PO2 belegt wird, angeordnet sind. In Fig. 7 sind lediglich die Speicherpositionen der untergeordneten Teilprogrammobjekte des übergeordneten zweiten Programmobjekts PO2 mit Bezugszeichen versehen. Darüber hinaus weisen aber alle weiteren Programmobjekte PO des Programmzustands PZ, unter Anderem das übergeordnete dritte Programmobjekt PO3 wie auch das übergeordnete zweite Programmobjekt PO2 individuell definierte Speicherpositionen innerhalb des Speicherbereichs des Programmzustands PZ auf.

Auf Basis des zweiten Adressenoffsets AO2 und der Datenstruktur des Datentyps des übergeordneten zweiten Programmobjekts PO2 wird im Folgenden das erste Programmobjekt PO1 als das untergeordnete Teilprogrammobjekt TPO des übergeordneten zweiten Programmobjekts PO2 identifiziert, das von der ersten relativen Speicheradresse SPO2 des übergeordneten zweiten Programmobjekts PO2 um den zweiten Adressenoffset AO2 beabstandet ist. Darüber hinaus wird das erste Programmobjekt PO1 demzufolge als das Programmobjekt PO des Programmzustands PZ identifiziert, das im ersten Speicherbereich SP1 an einer Speicheradresse gespeichert ist, die der Zeigeradresse ZA des Zeigerobjekts ZO entspricht. Damit wird das identifizierte erste Programmobjekt PO1 als das Zeigerobjekt ZO identifiziert.

Die in Fig. 7 illustrierte grafische Darstellung der Identifizierung des Zeigerobjekts dient rein illustrativen Zwecken zur Erläuterung der Vorgehensweise der Identifizierung der einzelnen ineinander verschachtelten Programmobjekte auf Basis der bestimmten Adressenoffsets und der jeweiligen Datenstrukturen bzw. Anordnungsstrukturen der einzelnen Programmobjekte bzw. des Programmzustands PZ. Die in Fig. 7 illustrierte Darstellung des Speicherbereichs des Programmzustands PZ ist rein beispielhaft und weder größengetreu dargestellt noch ist ein Programmzustand dargestellt, der in Realität beim Ausführen eines Steuerprogramms eines Automatisierungssystems zu erwarten wäre.

Die Länge der die Adressenoffsets und ersten relativen Speicheradressen darstellenden Pfeile repräsentieren eine Anzahl von Speicherstellen, um die eine jeweilige Speicheradresse, auf der der jeweilige Pfeil zeigt, von der ersten Speicheradresse des Programmzustands oder eine ersten relativen Adresse eines jeweils übergeordneten Programmobjekts PO beabstandet angeordnet ist.

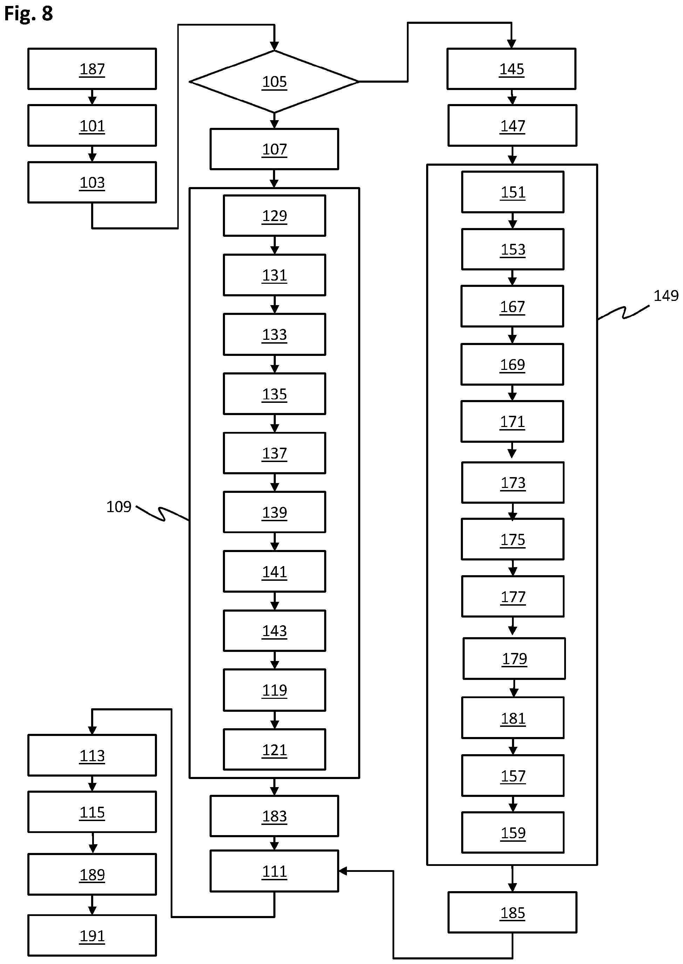

Fig. 8 zeigt ein weiteres Flussdiagramm des Verfahrens 100 zum Steuern eines Automatisierungssystems 200 mit Visualisierung von Programmobjekten PO eines Steuerprogramms gemäß einer weiteren Ausführungsform.

Die in Fig. 8 dargestellte Ausführungsform des Verfahrens 100 basiert auf der Ausführungsform in Fig. 6 und umfasst alle dort beschriebenen Verfahrensschritte. Sofern diese in der Ausführungsform in Fig. 8 unverändert bleiben, wird von einer weiteren Beschreibung abgesehen.

In Fig. 8 ist der Fall dargestellt, dass durch das Zeigerelement ein Zeigerobjekt ZO referenziert wird, das ein untergeordnetes Teilprogrammobjekt eines übergeordneten Programmobjekts PO des Programmzustands PZ in n-facher Schachtelungstiefe darstellt. In der Ausführungsform in Fig. 8 wird die rekursive Ausführbarkeit des Verfahrens 100 dargestellt, indem zur Identifizierung eines Programmobjekts PO, das als untergeordnetes Teilprogrammobjekt eines übergeordneten Programmobjekts PO mit n-facher Schachtelungstiefe ausgebildet ist, das Verfahren 100 n-fach rekursiv anwendbar ist.

Hierzu umfasst der erste Programmobjektidentifizierungsschritt 109 einen n-ten Programmobjektidentifizierungsschritt 129, in dem ein übergeordnetes n-tes Programmobjekt identifiziert wird. Darauf folgend wird in einem n-ten Adressenoffsetbestimmungsschritt 131 ein n-ter Adressenoffset bestimmt, der sich aus einer Differenz zwischen dem ersten Adressenoffset AO1 und der ersten relativen Speicheradresse des n-ten Programmobjekts bestimmt. Ferner wird in einem n-ten Datentypbestimmungsschritt 133 der Datentyp des übergeordneten n-ten Programmobjekts bestimmt.

Darauf folgend wird in einem n-1-ten Programmobjektidentifizierungsschritt 135 ein untergeordnetes Teilprogrammobjekt des übergeordneten n-ten Programmobjekts, das eine Adresse umfasst, die zu einer ersten relativen Speicheradresse des übergeordneten n-ten Programmobjekts um den n-ten Adressenoffset beabstandet ist, als ein übergeordnetes n-1-tes Programmobjekt identifiziert. Darauf folgend wird ein n-1-ter Adressenoffset in einem n-1-ten Adressenoffsetbestimmungsschritt 137 bestimmt, der sich aus einer Differenz zwischen dem ersten Adressenoffset AO1 und einer Summe aus der ersten relativen Speicheradresse des n-ten Programmobjekts und der ersten relativen Speicheradresse des n-1-ten Programmobjekts bestimmt. In einem n-1-ten Datentypbestimmungsschritt 139 wird darauf folgend der Datentyp des übergeordneten n-1-ten Programmobjekts bestimmt.

Hierauf basierend wird in einem n-2-ten Programmobjektidentifizierungsschritt 141 ein untergeordnetes Teilprogrammobjekt des übergeordneten n-1-ten Programmobjekts als ein übergeordnetes n-2-tes Programmobjekt identifiziert.

Für den Fall, dass gilt, dass n-2 größer 2 ist, wird das Verfahren in rekursiver Form weitergeführt, bis das übergeordnete zweite Programmobjekt PO2 identifizierbar ist. Darauf folgend wird im zweiten Adressenoffsetbestimmungsschritt 119 der zweite Adressenoffset bestimmt und im zweiten Datentypbestimmungsschritt 121 der Datentyp des übergeordneten zweiten Programmobjekts PO2 bestimmt. In dieser Ausführungsform ergibt sich der zweite Adressenoffset AO2 aus einer Differenz zwischen dem ersten Adressenoffset AO1 und einer Summe aus den ersten relativen Speicheradresse der n-ten bis zweiten Programmobjekte. Hierauf basierend wird das erste Programmobjekt PO1 als das Programmobjekt identifiziert, das im ersten Speicherbereich SP1 des Programmzustands PZ an einer Speicheradresse gespeichert ist, die der Zeigeradresse ZA entspricht.

In der hier beschriebenen Ausführungsform weist das n-te Programmobjekt eine n-1-fa-che Schachtelungstiefe auf und umfasst das n-1-te Programmobjekt. Das n-1-te Programmobjekt umfasst wiederum ein n-2-tes Programmobjekt. Dieses umfasst wiederum ein n-3-tes Programmobjekt. Die Reihe setzt sich bis zum zweiten Programmobjekt fort, das seinerseits das durch das Zeigerelement referenzierte erste Programmobjekt umfasst. Alle genannten Programmobjekte können neben den genannten weitere Programmobjekte umfassen.

Durch das rekursive Ausführen der genannten Schritte werden nacheinander die jeweils innerhalb des n-Programmobjekts verschachtelten Programmobjekte entsprechender Schachtelungstiefe identifiziert, bis das zweite Programmobjekt und schließlich das durch das Zeigerelement referenzierte erste Programmobjekt identifiziert werden.

Analoges gilt für das n-te Stack-Programmobjekt, das ebenfalls eine n-1-fache Schachtelungstiefe aufweist und analog dem oben beschriebenen verschachtelte Stack-Programmobjekte umfasst.

Analog wird vorgegangen für den Fall, dass durch das Zeigerelement ein Zeigerobjekt ZO referenziert wird, das ein untergeordnetes Teilprogrammobjekt eines im Stack gespeicherten übergeordneten Programmobjekts n-facher Schachtelungstiefe ist.

Hierzu umfasst der erste Stack-Programmobjektidentifizierungsschritt 149 einen n-ten Stack-Programmobjektidentifizierungsschritt 167, in dem das übergeordnete n-te Stack-Programmobjekt identifiziert wird. Darauf folgend wird in einem n-ten Stack-Adressenoffsetbestimmungsschritt 169 der n-te Stack-Adressenoffset bestimmt. Darauf folgend wird in einem n-ten Stack-Datentypbestimmungsschritt 171 der Datentyp des übergeordneten n-ten Stack-Programmobjekts identifiziert.

Darauf folgend wird in einem n-1-ten Stack-Programmobjektidentifizierungsschritt 173 ein untergeordnetes Stack-Teilprogrammobjekt des übergeordneten n-ten Stack-Programmobjekts als ein übergeordnetes n-1-tes Stack-Programmobjekt identifiziert. Darauf folgend wird ein n-1-ter Stack-Adressenoffset in einem n-1-ten Stack-Adressenoffsetbestimmungsschritt 175 bestimmt. Darauf folgend wird der Datentyp des übergeordneten n-1-ten Stack-Programmobjekts in einem n-1-ten Stack-Datentypbestimmungsschritt 177 bestimmt.

Darauf folgend wird in einem zweiten Stack-Programmobjektidentifizierungsschritt 179 ein untergeordnetes Stack-Teilprogrammobjekt des übergeordneten n-1-ten Stack-Programmobjekts als ein übergeordnetes n-2-tes Stack-Programmobjekt identifiziert.

Für den Fall, dass gilt, dass n-2 größer 2 ist, wird das Verfahren in einem weiteren Rekursionsschritt 181 rekursiv durchgeführt, bis ein untergeordnetes Stack-Teilprogrammobjekt als das übergeordnete zweite Stack-Teilprogrammobjekt identifiziert wird. Darauf folgend wird im zweiten Stack-Adressenoffsetbestimmungsschritt 157 der zweite Stack-Adressenoffset bestimmt. Darauf folgend wird in dem zweiten Stack-Datentypbestimmungsschritt 159 der Datentyp des übergeordneten zweiten Stack-Programmobjekts bestimmt. Hierauf basierend wird abschließend das erste Stack-Programmobjekt als das Stack-Programmobjekt identifiziert, das im zweiten Speicherbereich des Stacks an einer Speicheradresse gespeichert ist, die der Zeigeradresse ZA des Zeigerobjekts entspricht.

Im Vollbezeichnungsbestimmungsschritt 113 können darauf folgend alle Bezeichnungen der übergeordneten Programmobjekte bzw. Stack-Programmobjekte und des ersten Programmobjekts bzw. des ersten Stack-Programmobjekts angezeigt werden, sodass eine vollständige Verschachtelungshierarchie der einzelnen Programmobjekte bzw. Stack-Programmobjekte des referenzierten Zeigerobjekts dargestellt werden.

Die Durchführung der einzelnen Programmobjektidentifizierungsschritte und Stack-Programmobjektidentifizierungsschritte wie auch der Adressenoffsetbestimmungsschritte und Stack-Adressenoffsetbestimmungsschritte und der Datentypbestimmungsschritte und Stack-Datentypbestimmungsschritte werden analog zu den oben beschriebenen Ausführungsformen vorgenommen. Die Ausführungsform in Fig. 8 unterscheidet sich von den oben beschriebenen Ausführungsformen ausschließlich in der durchgeführten Rekursionstiefe des Verfahrens 100.

Das vorliegende erfindungsgemäße Verfahren 100 ist rekursiv anwendbar auf eine beliebige Schachtelungstiefe der jeweiligen Programmobjekte PO des Programmzustands PZ. Darüber hinaus können die Programmobjekte und Stack-Programmobjekte sowohl von einem Verbundtyp, als auch von einem Feldtyp oder einem anderen Typ sein, wobei auch Kombination der genannten Datentypen möglich sind.

### Bezugszeichenliste

- 100: Verfahren
- 101: Ausführschritt
- 103: Zeigeradressenermittlungsschritt
- 105: Überprüfungsschritt
- 107: erster Adressenoffsetbestimmungsschritt
- 109: erster Programmobjektidentifizierungsschritt
- 111: Zeigerobjektidentifizierungsschritt
- 113: Vollbezeichnungsbestimmungsschritt
- 115: Anzeigeschritt
- 117: zweiter Programmobjektidentifizierungsschritt
- 119: zweiter Adressenoffsetbestimmungsschritt
- 121: zweiter Datentypbestimmungsschritt
- 123: dritter Programmobjektidentifizierungsschritt
- 125: dritter Adressenoffsetbestimmungsschritt
- 127: dritter Datentypbestimmungsschritt
- 129: n-ter Programmobjektidentifizierungsschritt
- 131: n-ter Adressenoffsetbestimmungsschritt
- 133: n-ter Datentypbestimmungsschritt
- 135: n-1-ter Programmobjektidentifizierungsschritt
- 137: n-1-ter Adressenoffsetbestimmungsschritt
- 139: n-1-ter Datentypbestimmungsschritt
- 141: n-2-ter Programmobjektidentifizierungsschritt
- 143: Rekursionsschritt
- 145: Stack-Strukturbestimmungsschritt
- 147: erster Stack-Adressenoffsetbestimmungsschritt
- 149: erster Stack-Programmobjektidentifizierungsschritt
- 151: Frameidentifizierungsschritt
- 153: Funktionsidentifikationsschritt
- 155: zweiter Stack-Programmobjektidentifizierungsschritt
- 157: zweiter Stack-Adressenoffsetbestimmungsschritt
- 159: zweiter Stack-Datentypbestimmungsschritt
- 161: dritter Stack-Programmobjektidentifizierungsschritt
- 163: dritter Stack-Adressenoffsetbestimmungsschritt
- 165: dritter Stack-Datentypbestimmungsschritt
- 167: n-ter Stack-Programmobjektidentifizierungsschritt
- 169: n-ter Stack-Adressenoffsetbestimmungsschritt
- 171: n-ter Stack-Datentypbestimmungsschritt
- 173: n-1-ter Stack-Programmobjektidentifizierungsschritt
- 175: n-1-ter Stack-Adressenoffsetbestimmungsschritt
- 177: n-1-ter Stack-Datentypbestimmungsschritt
- 179: n-2-ten Stack-Programmobjektidentifizierungsschritt
- 181: weiterer Rekursionsschritt
- 183: erster Datentypbestimmungsschritt
- 185: erster Stack-Datentypbestimmungsschritt
- 187: Auswahlschritt
- 189: Anpassungsschritt
- 191: Steuerschritt

- 200: Automatisierungssystem
- 201: Steuerung
- 203: Automatisierungsgeräte
- 205: Bussystem
- 207: Display

- AO1: erster Adressenoffset
- AO2: zweiter Adressenoffset

- SP: Speicher
- SP1: erster Speicherbereich
- SP2: zweiter Speicherbereich

- PZ: Programmzustand
- PO: Programmobjekt
- PO1: erstes Programmobjekt
- PO2: übergeordnetes zweites Programmobjekt
- PO3: übergeordnetes drittes Programmobjekt
- TPO: untergeordnetes Teilprogrammobjekt
- SPO2: erste relative Speicheradresse zweites Programmobjekt
- SPO3: erste relative Speicheradresse drittes Programmobjekt
- SPZ: erste Speicheradresse des Programmzustands
- P: Speicherposition
- P1: erste Speicherposition
- P2: zweite Speicherposition
- P3: dritte Speicherposition
- SG: Speichergröße

- ST: Stack

- ZO: Zeigerobjekt
- ZA: Zeigeradresse

## Patentansprüche

1. Verfahren (100) zum Steuern eines Automatisierungssystems (200) mit Visualisierung von Programmobjekten eines Steuerprogramms eines Automatisierungssystems (200), wobei eine Steuerung (201) des Automatisierungssystems (200) ein Steuerprogramm umfasst, wobei in einem ersten Speicherbereich (SP1) der Steuerung ein Programmzustand (PZ) des Steuerprogramms gespeichert ist, wobei der Programmzustand (PZ) eine Mehrzahl von Programmobjekten des Steuerprogramms umfasst, wobei die Programmobjekte (PO) in einer vorbestimmten Anordnungsstruktur des Programmzustands (PZ) relativ zueinander angeordnet sind, wobei über die Anordnungsstruktur jedem Programmobjekt (PO) eine Speicherposition (P) und eine Speichergröße (SG) zugeordnet sind, wobei eine Speicherposition (P) eines Programmobjekts (PO) eine Anzahl von Speicherstellen definiert, um die ein Programmobjekt (PO) in einem Speicherbereich zu einer ersten Speicherstelle des Programmzustands (PZ) beabstandet gespeichert ist, wobei eine Speichergröße (SG) eines Programmobjekts (PO) eine Anzahl von Speicherstellen definiert, die ein Speicherobjekt in einem Speicherbereich belegt, wobei der Programmzustand (PZ) wenigstens ein Zeigerelement umfasst, wobei durch das Zeigerelement ein Zeigerobjekt (ZO) referenziert, wobei das Zeigerobjekt (ZO) ein Programmobjekt (PO) des Steuerprogramms ist, wobei in einem zweiten Speicherbereich (SP2) der Steuerung ein Stack des Steuerprogramms eingerichtet ist, und wobei im Stack während einer Laufzeit des Steuerprogramms Programmobjekte (PO) speicherbar sind, umfassend:
Ausführen des Steuerprogramms in einem Ausführschritt (101);
Ermitteln einer Zeigeradresse (ZA) des Zeigerelements in einem Zeigeradressenermittlungsschritt (103), wobei die Zeigeradresse (ZA) einer durch das Zeigerelement referenzierten Speicheradresse entspricht;
Überprüfen, ob die Zeigeradresse (ZA) des Zeigerelements im ersten Speicherbereich (SP1) des Programmzustands (PZ) oder im zweiten Speicherbereich (SP2) des Stacks angeordnet ist, in einem Überprüfungsschritt (105),
**gekennzeichnet durch**,
Falls die Zeigeradresse (ZA) des Zeigerelements im ersten Speicherbereich (SP1) des Programmzustands (PZ) angeordnet ist, Bestimmen eines ersten Adressenoffsets (AO1) der Zeigeradresse (ZA) des Zeigerelements in einem ersten Adressenoffsetbestimmungsschritt (107), wobei der erste Adressenoffset (AO1) eine Anzahl von Speicherstellen definiert, um die die Zeigeradresse (ZA) des Zeigerelements zu einer ersten Speicheradresse des Programmzustands (PZ) im ersten Speicherbereich (SP1) beabstandet ist;
Identifizieren eines Programmobjekts (PO), das gemäß der Anordnungsstruktur des Programmzustands (PZ) um den ersten Adressenoffset (AO1) zu der ersten Speicherstelle des Programmzustands (PZ) beabstandet ist, als ein erstes Programmobjekt (PO1), dessen Speicheradresse im ersten Speicherbereich (SP1) der Zeigeradresse (ZA) des Zeigerelements entspricht, in einem ersten Programmobjektidentifizierungsschritt (109);
Identifizieren des ersten Programmobjekts (PO1) mit dem durch das Zeigerelement referenzierten Zeigerobjekt (ZO) in einem Zeigerobjektidentifizierungsschritt (111);
Bestimmen einer vollqualifizierten Bezeichnung des identifizierten Zeigerobjekts (ZO) in einem Vollbezeichnungsbestimmungsschritt (113), wobei die vollqualifizierte Bezeichnung des identifizierten Zeigerobjekts (ZO) einen Namen des identifizierten ersten Programmobjekts (PO1) umfasst; und
Anzeigen der vollqualifizierten Bezeichnung des durch das Zeigerelement referenzierten Zeigerobjekts (ZO) auf einem mit der Steuerung verbundenen Displayelement in einem Anzeigeschritt (115).

2. Verfahren (100) nach Anspruch 1, wobei ein Programmobjekt (PO) des Programmzustands (PZ) als ein übergeordnetes zweites Programmobjekt (PO2) ausgebildet ist, wobei das übergeordnete zweite Programmobjekte (PO2) wenigstens ein untergeordnetes Teilprogrammobjekt (TPO) umfasst, wobei das erste Programmobjekt (PO1) als ein untergeordnetes Teilprogrammobjekt (TPO) vom übergeordneten zweiten Programmobjekt (PO2) umfasst ist, und wobei der erste Programmobjektidentifizierungsschritt (109) umfasst:
Identifizieren eines Programmobjekts (PO) des Programmzustands (PZ), für das gemäß der jeweiligen Speicherposition (P) und Speichergröße (SG) ein Speicherbereich definiert ist, der eine Speicherstelle umfasst, die um den ersten Adressenoffset (AO1) zur ersten Speicherstelle des Programmzustands (PZ) beabstandet ist, als das übergeordnete zweite Programmobjekt (PO2) und Identifizieren des übergeordneten zweiten Programmobjekts (PO2) als das Programmobjekt (PO), das im ersten Speicherbereich (SP1) des Programmzustands (PZ) einen Speicherbereich belegt, der die Zeigeradresse (ZA) des Zeigerelements umfasst, in einem zweiten Programmobjektidentifizierungsschritt (117);
Bestimmen eines zweiten Adressenoffsets (AO2) in einem zweiten Adressenoffsetbestimmungsschritt (119), wobei der zweite Adressenoffset (AO2) durch eine Differenz zwischen dem ersten Adressenoffset (AO1) und einer ersten relativen Speicheradresse (SPO2) des zweiten Programmobjekts (PO2) bestimmt ist;
Bestimmen eines Datentyps des übergeordneten zweiten Programmobjekts (PO2) in einem zweiten Datentypbestimmungsschritt (121), wobei der Datentyp eine Datenstruktur des übergeordneten zweiten Programmobjekts (PO2) bestimmt, in der eine Anzahl von untergeordneten Teilprogrammobjekten (TPO) des übergeordneten zweiten Programmobjekts (PO2) definiert ist und für jedes untergeordnete Teilprogrammobjekt (TPO) eine Speichergröße (SG) und eine Speicherposition (P) innerhalb der Datenstruktur des übergeordneten zweiten Programmobjekts (PO2) bestimmt sind;
Identifizieren eines untergeordneten Teilprogrammobjekts (TPO) des übergeordneten zweiten Programmobjekts (PO2), das gemäß der Datenstruktur des übergeordneten zweiten Programmobjekts (PO2) um den zweiten Adressenoffset (AO2) zu einer ersten Speicherstelle des übergeordneten zweiten Programmobjekts (PO2) beabstandet ist, und Identifizieren des untergeordneten Teilprogrammobjekts (TPO) des übergeordneten zweiten Programmobjekts (PO2) als das erste Programmobjekt (PO1), dessen Speicheradresse der Zeigeradresse (ZA) des Zeigerelements entspricht.

3. Verfahren (100) nach Anspruch 2, wobei ein Programmobjekt (PO) des Programmzustands (PZ) als ein übergeordnetes drittes Programmobjekt (PO3) ausgebildet ist, wobei das übergeordnete dritte Programmobjekt (PO3) wenigstens ein untergeordnetes Teilprogrammobjekt (TPO) umfasst, wobei das übergeordnete zweite Programmobjekt (PO2) als ein untergeordnetes Teilprogrammobjekt (TPO) vom übergeordneten dritten Programmobjekt (PO3) umfasst ist, wobei der zweite Programmobjektidentifizierungsschritt (117) umfasst:
Identifizieren eines Programmobjekts (PO) des Programmzustands (PZ), für das gemäß der jeweiligen Speicherposition (P) und Speichergröße (SG) ein Speicherbereich definiert ist, der eine Speicherstelle umfasst, die um den ersten Adressenoffset (AO1) zur ersten Speicherstelle des Programmzustands (PZ) beabstandet ist, als das übergeordnete dritte Programmobjekt (PO3) und Identifizieren des übergeordneten dritten Programmobjekts (PO3) als das Programmobjekt (PO), das im ersten Speicherbereich (SP1) des Programmzustands (PZ) einen Speicherbereich belegt, der die Zeigeradresse (ZA) des Zeigerelements umfasst, in einem dritten Programmobjektidentifizierungsschritt (123);
Bestimmen eines dritten Adressenoffsets (AO3) in einem dritten Adressenoffsetbestimmungsschritt (125), wobei der dritte Adressenoffset (AO3) durch eine Differenz zwischen dem ersten Adressenoffset (AO1) und einer ersten relativen Speicheradresse (SPO3) des dritten Programmobjekts (PO3) bestimmt ist;
Bestimmen eines Datentyps des übergeordneten dritten Programmobjekts (PO3) in einem dritten Datentypbestimmungsschritt (127), wobei der Datentyp eine Datenstruktur des übergeordneten dritten Programmobjekts (PO3) bestimmt, in der eine Anzahl von untergeordneten Teilprogrammobjekten (TPO) des übergeordneten dritten Programmobjekts (PO3) definiert ist und für jedes untergeordnete Teilprogrammobjekt (TPO) eine Speichergröße (SG) und eine Speicherposition (P) innerhalb der Datenstruktur des übergeordneten zweiten Programmobjekts (PO3) bestimmt sind;
Identifizieren eines untergeordneten Teilprogrammobjekts (TPO) des übergeordneten dritten Programmobjekts (PO3), das gemäß der Datenstruktur des übergeordneten dritten Programmobjekts (PO3) um den dritten Adressenoffset (AO3) zu einer ersten Speicherstelle des übergeordneten dritten Programmobjekts (PO3) beabstandet ist, und Identifizieren des untergeordneten Teilprogrammobjekts (TPO) des übergeordneten dritten Programmobjekts (PO3) als das übergeordnete zweite Programmobjekt (PO2), das im ersten Speicherbereich (SP1) des Programmzustands (PZ) einen Speicherbereich belegt, der die Zeigeradresse (ZA) des Zeigerelements umfasst;
und wobei der zweite Adressenoffset (AO2) durch eine Differenz zwischen dem ersten Adressenoffset (AO1) und einer Summe aus der ersten relativen Speicheradresse (SPO3) des dritten Programmobjekts (PO3) und der ersten relativen Speicheradresse (SPO2) des zweiten Programmobjekts (PO2) bestimmt ist.

4. Verfahren (100) nach Anspruch 2, wobei ein Programmobjekt (PO) des Programmzustands (PZ) als ein übergeordnetes n-tes Programmobjekt ausgebildet ist, wobei das übergeordnete n-te Programmobjekt in n-1-facher Schachtelungstiefe einander umfassende untergeordnete Teilprogrammobjekte (TPO) umfasst, wobei das übergeordnete zweite Programmobjekt (PO2) als ein untergeordnetes Teilprogrammobjekt (TPO) in n-2-ter Schachtelungstiefe vom übergeordneten n-ten Programmobjekt umfasst ist, wobei das erste Programmobjekt (PO1) als ein untergeordnetes Teilprogrammobjekt (TPO) in n-1-ter Schachtelungstiefe vom übergeordneten n-ten Programmobjekt umfasst ist, wobei n eine natürlich Zahl und größer oder gleich 4 ist, und wobei der erste Programmobjektidentifizierungsschritt (109) umfasst:
Identifizieren eines Programmobjekts (PO) des Programmzustands (PZ), für das gemäß der jeweiligen Speicherposition (P) und Speichergröße (SG) ein Speicherbereich definiert ist, der eine Speicherstelle umfasst, die um den ersten Adressenoffset (AO1) zur ersten Speicherstelle des Programmzustands (PZ) beabstandet ist, als das übergeordnete n-te Programmobjekt und Identifizieren des übergeordneten n-ten Programmobjekts als das Programmobjekt (PO), das im ersten Speicherbereich (SP1) des Programmzustands (PZ) einen Speicherbereich belegt, der die Zeigeradresse (ZA) des Zeigerelements umfasst, in einem n-ten Programmobjektidentifizierungsschritt (129);
Bestimmen eines n-ten Adressenoffsets in einem n-ten Adressenoffsetbestimmungsschritt (131), wobei der n-te Adressenoffset durch eine Differenz zwischen dem ersten Adressenoffset (AO1) und einer ersten relativen Speicheradresse des n-ten Programmobjekts bestimmt ist;
Bestimmen eines Datentyps des übergeordneten n-ten Programmobjekts in einem n-ten Datentypbestimmungsschritt (133), wobei der Datentyp eine Datenstruktur des übergeordneten n-ten Programmobjekts bestimmt, in der eine Anzahl von untergeordneten Teilprogrammobjekten des übergeordneten n-ten Programmobjekts definiert ist und für jedes untergeordnete Teilprogrammobjekt eine Speichergröße (SG) und eine Speicherposition (P) innerhalb der Datenstruktur des übergeordneten n-ten Programmobjekts bestimmt sind;
Identifizieren eines untergeordneten Teilprogrammobjekts (TPO) des übergeordneten n-ten Programmobjekts, das gemäß der Datenstruktur des übergeordneten n-ten Programmobjekts um den n-ten Adressenoffset zu einer ersten Speicherstelle des übergeordneten n-ten Programmobjekts beabstandet ist, und Identifizieren des untergeordneten Teilprogrammobjekts (TPO) des übergeordneten n-ten Programmobjekts als ein übergeordnetes n-1-tes Programmobjekt, das im ersten Speicherbereich (SP1) des Programmzustands (PZ) einen Speicherbereich belegt, der die Zeigeradresse (ZA) des Zeigerelements umfasst in einem n-1-ten Programmobjektidentifizierungsschritt (135);
Wobei der n-1-te Programmobjektidentifizierungsschritt (135) umfasst:
Bestimmen eines n-1-ten Adressenoffsets in einem n-1-ten Adressenoffsetbestimmungsschritt (137), wobei der n-1-te Adressenoffset durch eine Differenz zwischen dem ersten Adressenoffset (AO1) und einer Summe aus der ersten relativen Speicheradresse des n-ten Programmobjekts und einer ersten relativen Adresse des n-1-ten Programmobjekts bestimmt ist;
Bestimmen eines Datentyps des übergeordneten n-1-ten Programmobjekts in einem n-1-ten Datentypbestimmungsschritt (139), wobei der Datentyp eine Datenstruktur des übergeordneten n-1-ten Programmobjekts bestimmt, in der eine Anzahl von untergeordneten Teilprogrammobjekten des übergeordneten n-1-ten Programmobjekts definiert ist und für jedes untergeordnete Teilprogrammobjekt eine Speichergröße (SG) und eine Speicherposition (P) innerhalb der Datenstruktur des übergeordneten n-1-ten Programmobjekts bestimmt sind;
Identifizieren eines untergeordneten Teilprogrammobjekts (TPO) des übergeordneten n-1-ten Programmobjekts, das gemäß der Datenstruktur des übergeordneten n-1-ten Programmobjekts um den n-1-ten Adressenoffset zu einer ersten Speicherstelle des übergeordneten n-1-ten Programmobjekts beabstandet ist, und Identifizieren des untergeordneten Teilprogrammobjekts (TPO) des übergeordneten n-1-ten Programmobjekts als ein übergeordnetes n-2-tes Programmobjekt, das im ersten Speicherbereich (SP1) des Programmzustands (PZ) einen Speicherbereich belegt, der die Zeigeradresse (ZA) des Zeigerelements umfasst in einem n-2-ten Programmobjektidentifizierungsschritt (141);
Falls gilt, n-2>2, Rekursives Ausführen des n-1-ten Adressenoffsetbestimmungsschritt (137), des n-1-ten Datentypbestimmungsschritt (139) und des n-2-ten Programmobjektidentifizierungsschritt (141) in einem Rekursionsschritt (143);
Bestimmen des zweiten Adressenoffsets (AO2) im zweiten Adressenoffsetbestimmungsschritt (119), wobei der zweite Adressenoffset (AO2) durch eine Differenz zwischen dem ersten Adressenoffset (AO1) und einer Summe aus ersten relativen Speicheradressen des n-ten Programmobjekts bis zweiten Programmobjekts (PO2) bestimmt ist;
Bestimmen eines Datentyps des übergeordneten 2-ten Programmobjekts (PO2) im zweiten Datentypbestimmungsschritt (121), wobei der Datentyp eine Datenstruktur des übergeordneten zweiten Programmobjekts (PO2) bestimmt, in der eine Anzahl von untergeordneten Teilprogrammobjekten des übergeordneten 2-ten Programmobjekts (PO2) definiert ist und für jedes untergeordnete Teilprogrammobjekt (TPO) eine Speichergröße (SG) und eine Speicherposition (P) innerhalb der Datenstruktur des übergeordneten zweiten Programmobjekts bestimmt sind;
Identifizieren des untergeordneten Teilprogrammobjekts (TPO) des übergeordneten zweiten Programmobjekts (PO2), das gemäß der Datenstruktur des übergeordneten n-1-ten Programmobjekts um den zweiten Adressenoffset (AO2) zu einer ersten Speicherstelle des übergeordneten zweiten Programmobjekts (PO2) beabstandet ist, und Identifizieren des untergeordneten Teilprogrammobjekts (TPO) des übergeordneten zweiten Programmobjekts (PO2) als das erste Programmobjekt (PO1), dessen Speicheradresse der Zeigeradresse (ZA) des Zeigerelements entspricht.

5. Verfahren (100) nach einem der voranstehenden Ansprüche, ferner umfassend:
Falls die Zeigeradresse (ZA) des Zeigerelements im zweiten Speicherbereich (SP2) des Stacks (ST) angeordnet ist, Bestimmen einer Struktur des Stacks (ST) in einem Stack-Strukturbestimmungsschritt (145), wobei über die Struktur des Stacks jedem im Stack (ST) gespeicherten Stack-Programmobjekt eine Speicherposition (P) und eine Speichergröße (SG) zugeordnet sind, wobei eine Speicherposition (P) eines Stack-Programmobjekts eine Anzahl von Speicherstellen definiert, um die ein Stack-Programmobjekt in einem Speicherbereich zu einer ersten Speicherstelle des Stacks (ST) beabstandet gespeichert ist;
Bestimmen eines ersten Stack-Adressenoffsets der Zeigeradresse (ZA) des Zeigerelements in einem ersten Stack-Adressenoffsetbestimmungsschritt (147), wobei der erste Stack-Adressenoffset eine Anzahl von Speicherstellen definiert, um die die Zeigeradresse (ZA) des Zeigerelements zu einer ersten Speicheradresse des Stacks (ST) im zweiten Speicherbereich (SP2) beabstandet ist;
Identifizieren eines Stack-Programmobjekts, das gemäß einer Anordnungsstruktur des Stacks (ST), in der jedem Stack-Programmobjekt eine Speicherposition (P) und eine Speichergröße (SG) zugewiesen ist, um den ersten Stack-Adressenoffset zu der ersten Speicherstelle des Stacks (ST) beabstandet ist, als ein erstes Stack-Programmobjekt, dessen Speicheradresse im zweiten Speicherbereich (SP2) der Zeigeradresse (ZA) des Zeigerelements entspricht, in einem ersten Stack-Programmobjektidentifizierungsschritt (149); und
Identifizieren des ersten Stack-Programmobjekts mit dem durch das Zeigerelement referenzierten Zeigerobjekt (ZO) im Zeigerobjektidentifizierungsschritt (111).

6. Verfahren (100) nach Anspruch 5, wobei der erste Stack-Programmobjektidentifizierungsschritt (149) umfasst:
Identifizieren unter Berücksichtigung des ersten Stack-Adressenoffsets der Zeigeradresse (ZA) des Zeigerelements und der Anordnungsstruktur des Stacks (ST) eines Frames des Stacks (ST), der im zweiten Speicherbereich (SP2) des Stacks (ST) einen Speicherbereich belegt, der die Speicheradresse der Zeigeradresse (ZA) des Zeigerelements umfasst, in einem Frameidentifizierungsschritt (151);
Identifizieren einer Funktion des identifizierten Frames des Stacks (ST) in einem Funktionsidentifikationsschritt (153); und
Identifizieren einer lokalen Variable der identifizierten Funktion, dessen Speicheradresse der Zeigeradresse (ZA) des Zeigerelements entspricht, als erstes Stack-Programmobjekt des Stacks (ST), dessen Speicheradresse der Zeigeradresse (ZA) des Zeigerelements entspricht.

7. Verfahren (100) nach Anspruch 5 oder 6, wobei ein Stack-Programmobjekt des Stacks (ST) als ein übergeordnetes zweites Stack-Programmobjekt ausgebildet ist, wobei das übergeordnete zweite Stack-Programmobjekt wenigstens ein untergeordnetes Stack-Teilprogrammobjekt umfasst, wobei das erste Stack-Programmobjekt als ein untergeordnetes Stack-Teilprogrammobjekt vom übergeordneten zweiten Stack-Programmobjekt umfasst ist, und wobei der erste Stack-Programmobjektidentifizierungsschritt (149) umfasst:
Identifizieren eines Programmobjekts des Stacks (ST), für das gemäß der jeweiligen Speicherposition (P) und Speichergröße (SG) ein Speicherbereich definiert ist, der eine Speicherstelle umfasst, die um den ersten Stack-Adressenoffset zur ersten Speicherstelle des Stacks (ST) beabstandet ist, als das übergeordnete zweite Stack-Programmobjekt und Identifizieren des übergeordneten zweiten Stack-Programmobjekts als das Programmobjekt, das im zweiten Speicherbereich (SP2) des Stacks (ST) einen Speicherbereich belegt, der die Zeigeradresse (ZA) des Zeigerelements umfasst, in einem zweiten Stack-Programmobjektidentifizierungsschritt (155);
Bestimmen eines zweiten Stack-Adressenoffsets in einem zweiten Stack-Adressenoffsetbestimmungsschritt (157), wobei der zweite Stack-Adressenoffset durch eine Differenz zwischen dem ersten Stack-Adressenoffset und einer ersten relativen Speicheradresse des zweiten Stack-Programmobjekts bestimmt;
Bestimmen eines Datentyps des übergeordneten zweiten Stack-Programmobjekts in einem zweiten Stack-Datentypbestimmungsschritt (159), wobei der Datentyp eine Datenstruktur des übergeordneten zweiten Stack-Programmobjekts bestimmt, in der eine Anzahl von untergeordneten Stack-Teilprogrammobjekten des übergeordneten zweiten Stack-Programmobjekts definiert ist und für jedes untergeordnete Stack-Teilprogrammobjekt eine Speichergröße (SG) und eine Speicherposition (P) innerhalb der Datenstruktur des übergeordneten zweiten Programmobjekts bestimmt sind; Identifizieren eines untergeordneten Stack-Teilprogrammobjekts des übergeordneten zweiten Stack-Programmobjekts, das gemäß der Datenstruktur des übergeordneten zweiten Stack-Programmobjekts um den zweiten Adressenoffset zu einer ersten Speicherstelle des übergeordneten zweiten Stack-Programmobjekts beabstandet ist, und Identifizieren des untergeordneten Stack-Teilprogrammobjekts des übergeordneten zweiten Stack-Programmobjekts als das erste Stack-Programmobjekt, dessen Speicheradresse der Zeigeradresse (ZA) des Zeigerelements entspricht.

8. Verfahren (100) nach Anspruch 7, wobei ein Stack-Programmobjekt des Stacks (ST) als ein übergeordnetes drittes Stack-Programmobjekt ausgebildet ist, wobei das übergeordnete dritte Stack-Programmobjekt wenigstens ein untergeordnetes Stack-Teilprogrammobjekt umfasst, wobei das übergeordnete zweite Stack-Programmobjekt als ein untergeordnetes Stack-Teilprogrammobjekt vom übergeordneten dritten Stack-Programmobjekt umfasst ist, und wobei der zweite Stack-Programmobjektidentifizierungsschritt (155) umfasst:
Identifizieren eines Programmobjekts des Stacks (ST), für das gemäß der jeweiligen Speicherposition (P) und Speichergröße (SG) ein Speicherbereich definiert ist, der eine Speicherstelle umfasst, die um den ersten Stack-Adressenoffset zur ersten Speicherstelle des Stacks (ST) beabstandet ist, als das übergeordnete dritte Stack-Programmobjekt und Identifizieren des übergeordneten dritten Stack-Programmobjekts als das Programmobjekt, das im zweiten Speicherbereich (SP2) des Stacks (ST) einen Speicherbereich belegt, der die Zeigeradresse (ZA) des Zeigerelements umfasst, in einem dritten Stack-Programmobjektidentifizierungsschritt (161);
Bestimmen eines dritten Stack-Adressenoffsets in einem dritten Stack-Adressenoffsetbestimmungsschritt (163), wobei der dritte Stack-Adressenoffset durch eine Differenz zwischen dem ersten Stack-Adressenoffset und einer ersten relativen Speicherdresse des dritten Stack-Programmobjekts bestimmt ist;
Bestimmen eines Datentyps des übergeordneten dritten Stack-Programmobjekts in einem dritten Stack-Datentypbestimmungsschritt (165), wobei der Datentyp eine Datenstruktur des übergeordneten dritten Stack-Programmobjekts bestimmt, in der eine Anzahl von untergeordneten Stack-Teilprogrammobjekten des übergeordneten dritten Stack-Programmobjekts definiert ist und für jedes untergeordnete Stack-Teilprogrammobjekt eine Speichergröße (SG) und eine Speicherposition (P) innerhalb der Datenstruktur des übergeordneten dritten Stack-Programmobjekts bestimmt sind; Identifizieren eines untergeordneten Stack-Teilprogrammobjekts des übergeordneten dritten Stack-Programmobjekts, das gemäß der Datenstruktur des übergeordneten dritten Stack-Programmobjekts um den dritten Stack-Adressenoffset zu einer ersten Speicherstelle des übergeordneten dritten Stack-Programmobjekts beabstandet ist, und Identifizieren des untergeordneten Stack-Teilprogrammobjekts des übergeordneten dritten Stack-Programmobjekts als das übergeordnete zweite Stack-Programmobjekt, das im zweiten Speicherbereich (SP2) des Stacks einen Speicherbereich belegt, der die Zeigeradresse (ZA) des Zeigerelements umfasst; und
wobei der zweite Stack-Adressenoffset durch eine Differenz zwischen dem ersten Stack-Adressenoffset und einer Summe aus der ersten relativen Speicherdresse des dritten Stack-Programmobjekts und der ersten relativen Speicheradresse des zweiten Stack-Programmobjekts bestimmt ist.

9. Verfahren (100) nach Anspruch 7 oder 8, wobei ein Stack-Programmobjekt des Stacks (ST) als ein übergeordnetes n-tes Stack-Programmobjekt ausgebildet ist, wobei das übergeordnete n-te Stack-Programmobjekt in n-1-facher Schachtelungstiefe einander umfassende untergeordnete Stack-Teilprogrammobjekte umfasst, wobei das übergeordnete zweite Stack-Programmobjekt als ein untergeordnetes Stack-Teilprogrammobjekt in n-2-ter Schachtelungstiefe vom übergeordneten n-ten Stack-Programmobjekt umfasst ist, wobei das erste Stack-Programmobjekt als ein untergeordnetes Stack-Teilprogrammobjekt in n-1-ter Schachtelungstiefe vom übergeordneten n-ten Stack-Programmobjekt umfasst ist, wobei n eine natürlich Zahl und größer oder gleich 4 ist, und wobei der erste Stack-Programmobjektidentifizierungsschritt (149) umfasst:
Identifizieren eines Programmobjekts des Stacks (ST), für das gemäß der jeweiligen Speicherposition (P) und Speichergröße (SG) ein Speicherbereich definiert ist, der eine Speicherstelle umfasst, die um den ersten Stack-Adressenoffset zur ersten Speicherstelle des Stacks (ST) beabstandet ist, als das übergeordnete n-te Stack-Programmobjekt und Identifizieren des übergeordneten n-ten Stack-Programmobjekts als das Programmobjekt, das im zweiten Speicherbereich (SP2) des Stacks (ST) einen Speicherbereich belegt, der die Zeigeradresse (ZA) des Zeigerelements umfasst, in einem n-ten Stack-Programmobjektidentifizierungsschritt (167);
Bestimmen eines n-ten Stack-Adressenoffsets in einem n-ten Stack-Adressenoffsetbestimmungsschritt (169), wobei der n-te Stack-Adressenoffset durch eine Differenz zwischen dem ersten Stack-Adressenoffset und einer ersten relativen Speicherdresse des n-ten Stack-Programmobjekts bestimmt ist;
Bestimmen eines Datentyps des übergeordneten n-tten Stack-Programmobjekts in einem n-ten Stack-Datentypbestimmungsschritt (171), wobei der Datentyp eine Datenstruktur des übergeordneten n-ten Stack-Programmobjekts bestimmt, in der eine Anzahl von untergeordneten Stack-Teilprogrammobjekten des übergeordneten n-ten Stack-Programmobjekts definiert ist und für jedes untergeordnete Stack-Teilprogrammobjekt eine Speichergröße (SG) und eine Speicherposition (P) innerhalb der Datenstruktur des übergeordneten n-ten Stack-Programmobjekts bestimmt sind;
Identifizieren eines untergeordneten Stack-Teilprogrammobjekts des übergeordneten n-ten Stack-Programmobjekts, das gemäß der Datenstruktur des übergeordneten n-ten Stack-Programmobjekts um den n-ten Stack-Adressenoffset zu einer ersten Speicherstelle des übergeordneten n-ten Stack-Programmobjekts beabstandet ist, und Identifizieren des untergeordneten Stack-Teilprogrammobjekts des übergeordneten n-ten Stack-Programmobjekts als ein übergeordnetes n-1-tes Stack-Programmobjekt, das im zweiten Speicherbereich (SP2) des Stacks (ST) einen Speicherbereich belegt, der die Zeigeradresse (ZA) des Zeigerelements umfasst in einem n-1-ten Stack-Programmobjektidentifizierungsschritt (173);
wobei der n-1-ten Stack-Programmobjektidentifizierungsschritt (173) umfasst:
Bestimmen eines n-1-ten Stack-Adressenoffsets in einem n-1-ten Stack-Adressenoffsetbestimmungsschritt (175), wobei der n-1-te Stack-Adressenoffset durch eine Differenz zwischen dem ersten Stack-Adressenoffset und einer Summe aus der ersten relativen Speicherdresse des n-ten Stack-Programmobjekts und einer ersten relativen Speicheradresse des n-1-ten Stack-Programmobjekts bestimmt ist;
Bestimmen eines Datentyps des übergeordneten n-ten Stack-Programmobjekts in einem n-1-ten Stack-Datentypbestimmungsschritt (177), wobei der Datentyp eine Datenstruktur des übergeordneten n-1-ten Stack-Programmobjekts bestimmt, in der eine Anzahl von untergeordneten Stack-Teilprogrammobjekten des übergeordneten n-1-ten Stack-Programmobjekts definiert ist und für jedes untergeordnete Stack-Teilprogrammobjekt eine Speichergröße (SG) und eine Speicherposition (P) innerhalb der Datenstruktur des übergeordneten n-1-ten Stack-Programmobjekts bestimmt sind;
Identifizieren eines untergeordneten Stack-Teilprogrammobjekts des übergeordneten n-1-ten Stack-Programmobjekts, das gemäß der Datenstruktur des übergeordneten n-1-ten Stack-Programmobjekts um den n-1-ten Stack-Adressenoffset zu einer ersten Speicherstelle des übergeordneten n-1-ten Stack-Programmobjekts beabstandet ist, und Identifizieren des untergeordneten Stack-Teilprogrammobjekts des übergeordneten n-1-ten Stack-Programmobjekts als ein übergeordnetes n-2-tes Stack-Programmobjekt, das im zweiten Speicherbereich (SP2) des Programmzustands (PZ) einen Speicherbereich belegt, der die Zeigeradresse (ZA) des Zeigerelements umfasst in einem n-2-ten Stack-Programmobjektidentifizierungsschritt (179);
Wobei der n-2-te Stack-Programmobjektidentifizierungsschritt (179) umfassst:
Falls gilt, n-2>2, Rekursives Ausführen des n-1-ten Stack-Adressenoffsetbestimmungsschritt (175) und des n-2-ten Stack-Programmobjektidentifizierungsschritt (179) in einem weiteren Rekursionsschritt (181);
Bestimmen eines zweiten Stack-Adressenoffsets im zweiten Stack-Adressenoffsetbestimmungsschritt (157), wobei der zweite Stack-Adressenoffset durch eine Differenz zwischen dem ersten Stack-Adressenoffset und einer Summe aus ersten relativen Speicherdressen des n-ten Stack-Programmobjekts bis zum zweiten Stack-Programmobjekts bestimmt ist;
Bestimmen eines Datentyps des übergeordneten zweiten Stack-Programmobjekts in einem zweiten Stack-Datentypbestimmungsschritt (159), wobei der Datentyp eine Datenstruktur des übergeordneten zweiten Stack-Programmobjekts bestimmt, in der eine Anzahl von untergeordneten Stack-Teilprogrammobjekten des übergeordneten zweiten Stack-Programmobjekts definiert ist und für jedes untergeordnete Stack-Teilprogrammobjekt eine Speichergröße (SG) und eine Speicherposition (P) innerhalb der Datenstruktur des übergeordneten zweiten Stack-Programmobjekts bestimmt sind;
Identifizieren eines untergeordneten Stack-Teilprogrammobjekts des übergeordneten zweiten Stack-Programmobjekts, das gemäß der Datenstruktur des übergeordneten zweiten Stack-Programmobjekts um den zweiten Adressenoffset zu einer ersten Speicherstelle des übergeordneten zweiten Stack-Programmobjekts beabstandet ist, und Identifizieren des untergeordneten Stack-Teilprogrammobjekts des übergeordneten zweiten Stack-Programmobjekts als das erste Stack-Programmobjekt, dessen Speicheradresse der Zeigeradresse (ZA) des Zeigerelements entspricht.

10. Verfahren (100) nach einem der voranstehenden Ansprüche, ferner umfassend:
Bestimmen eines Datentyps des ersten Programmobjekts (PO1) in einem ersten Datentypbestimmungsschritt (183), wobei der Datentyp des ersten Programmobjekts eine Datenstruktur des ersten Programmobjekts (PO1) bestimmt; und/oder
Bestimmen eines Datentyps des ersten Stack-Programmobjekts in einem ersten Stack-Datentypbestimmungsschritt (185), wobei der Datentyp des ersten Programmobjekts eine Datenstruktur des ersten Programmobjekts (PO1) bestimmt.

11. Verfahren (100) nach einem der voranstehenden Ansprüche, wobei die vollqualifizierte Bezeichnung des durch das Zeigerelement referenzierten Zeigerobjekts (ZO) die Bezeichnungen des ersten Programmobjekts und/oder der übergeordneten Programmobjekte oder die Bezeichnungen des ersten Stack-Programmobjekts und/oder der übergeordneten Stack-Programmobjekte und/oder des identifizierten Frames und/oder einen Namen der identifizierten Funktion umfasst, und wobei ein übergeordnetes Programmobjekt oder ein übergeordnetes Stack-Programmobjekt von einem Verbundtyp, einem Feldtyp oder einem Zeichenkettentyp ist.

12. Verfahren (100) nach einem der voranstehenden Ansprüche, ferner umfassend:
Auswählen einer Mehrzahl von Programmobjekten des Programmzustands (PZ) in einem Auswahlschritt (187), wobei ein ausgewähltes Programmobjekt das Zeigerelement ist;
Bestimmen von vollqualifizierten Bezeichnungen der ausgewählten Programmobjekte im Vollbezeichnungsbestimmungsschritt (113); und
Anzeigen der vollqualifizierten Bezeichnungen der ausgewählten Programmobjekte auf dem mit der Steuerung verbundenen Displayelement im Anzeigeschritt (115).

13. Verfahren (100) nach einem der voranstehenden Ansprüche, wobei im Anzeigeschritt (115) zusätzlich zu der vollqualifizierten Bezeichnung ein Wert des jeweiligen Programmobjekts (PO) angezeigt wird, und wobei das Verfahren (100) ferner umfasst:
Anpassen wenigstens eines Werts eines Programmobjekts (PO) in einem Anpassungsschritt (189); und
Steuern eines Automatisierungsprozesses durch das Steuerprogramm unter Berücksichtigung des wenigstens einen geänderten Werts des wenigstens einen Programmobjekts (PO) in einem Steuerschritt (191).

14. Verfahren (100) nach einem der voranstehenden Ansprüche, wobei das Verfahren (100) in einem Debuggingprozess ausführbar ist und/oder in einem Steuerungspozess des Automatisierungssystems (200) ausgeführt wird, und wobei das Displayelement als eine Mensch-Maschinen-Schnittstelle ausgebildet ist und in die Steuerung integriert ist.

15. Automatisierungssystem (200) mit einer Steuerung und einem mit der Steuerung (201) verbundenen Displayelement (207), wobei die Steuerung (201) ausgebildet ist, das Verfahren (100) nach einem de voranstehenden Ansprüche 1 bis 14 auszuführen.

## Claims

1. Method (100) for controlling an automation system (200) with visualization of program objects of a control program of an automation system (200), wherein a controller (201) of the automation system (200) comprises a control program, wherein a program state (PZ) of the control program is stored in a first memory area (SP1) of the controller, wherein the program state (PZ) comprises a plurality of program objects of the control program, wherein the program objects (PO) are arranged relative to one another in a predetermined arrangement structure of the program state (PZ), wherein a memory position (P) and a memory size (SG) are assigned to each program object (PO) by way of the arrangement structure, wherein a memory position (P) of a program object (PO) defines a number of memory locations separating a program object (PO) stored in a memory area of a first memory location of the program state (PZ), wherein a memory size (SG) of a program object (PO) defines a number of memory locations occupied by a memory object in a memory area, wherein the program state (PZ) comprises at least one pointer element, wherein a pointer object (ZO) is referenced by the pointer element, wherein the pointer object (ZO) is a program object (PO) of the control program, wherein a stack of the control program is set up in a second memory area (SP2) of the controller, and wherein program objects (PO) are storable in the stack during a runtime of the control program, comprising:
executing the control program in an executing step (101);
ascertaining a pointer address (ZA) of the pointer element in a pointer address ascertaining step (103), wherein the pointer address (ZA) corresponds to a memory address referenced by the pointer element;
checking whether the pointer address (ZA) of the pointer element is arranged in the first memory area (SP1) of the program state (PZ) or in the second memory area (SP2) of the stack, in a checking step (105),
**characterized by**,
if the pointer address (ZA) of the pointer element is arranged in the first memory area (SP1) of the program state (PZ) determining a first address offset (AO1) of the pointer address (ZA) of the pointer element in a first address offset determining step (107), wherein the first address offset (AO1) defines a number of memory locations separating the pointer address (ZA) of the pointer element from a first memory address of the program state (PZ) in the first memory area (SP1);
identifying a program object (PO) separated from the first memory location of the program state (PZ) by the first address offset (AO1) in accordance with the arrangement structure of the program state (PZ) as a first program object (PO1), the memory address of which in the first memory area (SP1) corresponds to the pointer address (ZA) of the pointer element, in a first program object identifying step (109);
identifying the first program object (PO1) with the pointer object (ZO) referenced by the pointer element in a pointer object identifying step (111); determining a fully qualified designation of the identified pointer object (ZO) in a full designation determining step (113), wherein the fully qualified designation of the identified pointer object (ZO) comprises a name of the identified first program object (PO1); and
displaying the fully qualified designation of the pointer object (ZO) referenced by the pointer element on a display element connected to the controller in a displaying step (115).

2. Method (100) according to Claim 1, wherein a program object (PO) of the program state (PZ) is configured as a superordinate second program object (PO2), wherein the superordinate second program object (PO2) comprises at least one subordinate partial program object (TPO), wherein the first program object (PO1) is comprised as a subordinate partial program object (TPO) by the superordinate second program object (PO2), and wherein the first program object identifying step (109) comprises:
identifying a program object (PO) of the program state (PZ) for which, in accordance with the respective memory position (P) and memory size (SG), a memory area is defined which comprises a memory location separated from the first memory location of the program state (PZ) by the first address offset (AO1), as the superordinate second program object (PO2), and identifying the superordinate second program object (PO2) as the program object (PO) occupying, in the first memory area (SP1) of the program state (PZ), a memory area comprising the pointer address (ZA) of the pointer element, in a second program object identifying step (117);
determining a second address offset (AO2) in a second address offset determining step (119), wherein the second address offset (AO2) is determined by a difference between the first address offset (AO1) and a first relative memory address (SPO2) of the second program object (PO2);
determining a data type of the superordinate second program object (PO2) in a second data type determining step (121), wherein the data type determines a data structure of the superordinate second program object (PO2) in which a number of subordinate partial program objects (TPO) of the superordinate second program object (PO2) are defined and a memory size (SG) and a memory position (P) within the data structure of the superordinate second program object (PO2) are determined for each subordinate partial program object (TPO);
identifying a subordinate partial program object (TPO) of the superordinate second program object (PO2) which is separated from a first memory location of the superordinate second program object (PO2) by the second address offset (AO2) in accordance with the data structure of the superordinate second program object (PO2), and identifying the subordinate partial program object (TPO) of the superordinate second program object (PO2) as the first program object (PO1), the memory address of which corresponds to the pointer address (ZA) of the pointer element.

3. Method (100) according to Claim 2, wherein a program object (PO) of the program state (PZ) is configured as a superordinate third program object (PO3), wherein the superordinate third program object (PO3) comprises at least one subordinate partial program object (TPO), wherein the superordinate second program object (PO2) is comprised as a subordinate partial program object (TPO) by the superordinate third program object (PO3), and wherein the second program object identifying step (117) comprises:
identifying a program object (PO) of the program state (PZ) for which, in accordance with the respective memory position (P) and memory size (SG), a memory area is defined which comprises a memory location separated from the first memory location of the program state (PZ) by the first address offset (AO1), as the superordinate third program object (PO3), and identifying the superordinate third program object (PO3) as the program object (PO) occupying, in the first memory area (SP1) of the program state (PZ), a memory area comprising the pointer address (ZA) of the pointer element, in a third program object identifying step (123);
determining a third address offset (AO3) in a third address offset determining step (125), wherein the third address offset (AO3) is determined by a difference between the first address offset (AO1) and a first relative memory address (SPO3) of the third program object (PO3);
determining a data type of the superordinate third program object (PO3) in a third data type determining step (127), wherein the data type determines a data structure of the superordinate third program object (PO3) in which a number of subordinate partial program objects (TPO) of the superordinate third program object (PO3) are defined and a memory size (SG) and a memory position (P) within the data structure of the superordinate second program object (PO3) are determined for each subordinate partial program object (TPO);
identifying a subordinate partial program object (TPO) of the superordinate third program object (PO3) which is separated from a first memory location of the superordinate third program object (PO3) by the third address offset (AO3) in accordance with the data structure of the superordinate third program object (PO3), and identifying the subordinate partial program object (TPO) of the superordinate third program object (PO3) as the superordinate second program object (PO2), occupying, in the first memory area (SP1) of the program state (PZ), a memory area comprising the pointer address (ZA) of the pointer element;
and wherein the second address offset (AO2) is determined by a difference between the first address offset (AO1) and a sum of the first relative memory address (SPO3) of the third program object (PO3) and the first relative memory address (SPO2) of the second program object (PO2).

4. Method (100) according to Claim 2, wherein a program object (PO) of the program state (PZ) is configured as a superordinate n-th program object, wherein the superordinate n-th program object comprises, at n-1-times nesting depth, subordinate partial program objects (TPO) comprising one another, wherein the superordinate second program object (PO2) is comprised as a subordinate partial program object (TPO) at n-2-nd nesting depth by the superordinate n-th program object, wherein the first program object (PO1) is comprised as a subordinate partial program object (TPO) at n-1-th nesting depth by the superordinate n-th program object, wherein n is a natural number and greater than or equal to 4, and wherein the first program object identifying step (109) comprises:
identifying a program object (PO) of the program state (PZ) for which, in accordance with the respective memory position (P) and memory size (SG), a memory area is defined which comprises a memory location separated from the first memory location of the program state (PZ) by the first address offset (AO1), as the superordinate n-th program object, and identifying the superordinate n-th program object as the program object (PO) occupying, in the first memory area (SP1) of the program state (PZ), a memory area comprising the pointer address (ZA) of the pointer element, in an n-th program object identifying step (129);
determining an n-th address offset in an n-th address offset determining step (131), wherein the n-th address offset is determined by a difference between the first address offset (AO1) and a first relative memory address of the n-th program object; determining a data type of the superordinate n-th program object in an n-th data type determining step (133), wherein the data type determines a data structure of the superordinate n-th program object in which a number of subordinate partial program objects of the superordinate n-th program object are defined and a memory size (SG) and a memory position (P) within the data structure of the superordinate n-th program object are determined for each subordinate partial program object;
identifying a subordinate partial program object (TPO) of the superordinate n-th program object, which is separated from a first memory location of the superordinate n-th program object by the n-th address offset in accordance with the data structure of the superordinate n-th program object, and identifying the subordinate partial program object (TPO) of the superordinate n-th program object as a superordinate n-1-th program object occupying, in the first memory area (SP1) of the program state (PZ), a memory area comprising the pointer address (ZA) of the pointer element, in an n-1-th program object identifying step (135);
wherein the n-1-th program object identifying step (135) comprises:
determining an n-1-th address offset in an n-1-th address offset determining step (137), wherein the n-1-th address offset is determined by a difference between the first address offset (AO1) and a sum of the first relative memory address of the n-th program object and a first relative address of the n-1-th program object;
determining a data type of the superordinate n-1-th program object in an n-1-th data type determining step (139), wherein the data type determines a data structure of the superordinate n-1-th program object in which a number of subordinate partial program objects of the superordinate n-1-th program object are defined and a memory size (SG) and a memory position (P) within the data structure of the superordinate n-1-th program object are determined for each subordinate partial program object;
identifying a subordinate partial program object (TPO) of the superordinate n-1-th program object which is separated from a first memory location of the superordinate n-1-th program object by the n-1-th address offset in accordance with the data structure of the superordinate n-1-th program object, and identifying the subordinate partial program object (TPO) of the superordinate n-1-th program object as a superordinate n-2-nd program object occupying, in the first memory area (SP1) of the program state (PZ), a memory area comprising the pointer address (ZA) of the pointer element, in an n-2-nd program object identifying step (141);
if it holds true that n-2 > 2, recursively executing the n-1-th address offset determining step (137), the n-1-th data type determining step (139) and the n-2-nd program object identifying step (141) in a recursion step (143);
determining the second address offset (AO2) in the second address offset determining step (119), wherein the second address offset (AO2) is determined by a difference between the first address offset (AO1) and a sum of first relative memory addresses of the n-th program object to second program object (PO2);
determining a data type of the superordinate 2-nd program object (PO2) in the second data type determining step (121), wherein the data type determines a data structure of the superordinate second program object (PO2) in which a number of subordinate partial program objects of the superordinate 2-nd program object (PO2) are defined and a memory size (SG) and a memory position (P) within the data structure of the superordinate second program object are determined for each subordinate partial program object (TPO);
identifying the subordinate partial program object (TPO) of the superordinate second program object (PO2) which is separated from a first memory location of the superordinate second program object (PO2) by the second address offset (AO2) in accordance with the data structure of the superordinate n-1-th program object, and identifying the subordinate partial program object (TPO) of the superordinate second program object (PO2) as the first program object (PO1), the memory address of which corresponds to the pointer address (ZA) of the pointer element.

5. Method (100) according to any one of the preceding claims, further comprising:
if the pointer address (ZA) of the pointer element is arranged in the second memory area (SP2) of the stack (ST), determining a structure of the stack (ST) in a stack structure determining step (145), wherein a memory position (P) and a memory size (SG) are assigned to each stack program object stored in the stack (ST) by way of the structure of the stack, wherein a memory position (P) of a stack program object defines a number of memory areas separating a stack program object stored in a memory area from a first memory location of the stack (ST);
determining a first stack address offset of the pointer address (ZA) of the pointer element in a first stack address offset determining step (147), wherein the first stack address offset defines a number of memory locations separating the pointer address (ZA) of the pointer element from a first memory address of the stack (ST) in the second memory area (SP2);
identifying a stack program object separated from the first memory location of the stack (ST) by the first stack address offset in accordance with an arrangement structure of the stack (ST) in which each stack program object is allocated a memory position (P) and a memory size (SG), as a first stack program object, the memory address of which in the second memory area (SP2) corresponds to the pointer address (ZA) of the pointer element, in a first stack program object identifying step (149); and
identifying the first stack program object with the pointer object (ZO) referenced by the pointer element in the pointer object identifying step (111) .

6. Method (100) according to Claim 5, wherein the first stack program object identifying step (149) comprises:
identifying, taking into account the first stack address offset of the pointer address (ZA) of the pointer element and the arrangement structure of the stack (ST), a frame of the stack (ST) occupying, in the second memory area (SP2) of the stack (ST), a memory area comprising the memory address of the pointer address (ZA) of the pointer element, in a frame identifying step (151);
identifying a function of the identified frame of the stack (ST) in a function identification step (153); and
identifying a local variable of the identified function, the memory address of which corresponds to the pointer address (ZA) of the pointer element, as the first stack program object of the stack (ST), the memory address of which corresponds to the pointer address (ZA) of the pointer element.

7. Method (100) according to Claim 5 or 6, wherein a stack program object of the stack (ST) is configured as a superordinate second stack program object, wherein the superordinate second stack program object comprises at least one subordinate stack partial program object, wherein the first stack program object is comprised as a subordinate stack partial program object by the superordinate second stack program object, and wherein the first stack program object identifying step (149) comprises:
identifying a program object of the stack (ST) for which, in accordance with the respective memory position (P) and memory size (SG), a memory area is defined which comprises a memory location separated from the first memory location of the stack (ST) by the first stack address offset, as the superordinate second stack program object, and identifying the superordinate second stack program object as the program object occupying, in the second memory area (SP2) of the stack (ST), a memory area comprising the pointer address (ZA) of the pointer element, in a second stack program object identifying step (155);
determining a second stack address offset in a second stack address offset determining step (157), wherein the second stack address offset is determined by a difference between the first stack address offset and a first relative memory address of the second stack program object;
determining a data type of the superordinate second stack program object in a second stack data type determining step (159), wherein the data type determines a data structure of the superordinate second stack program object in which a number of subordinate stack partial program objects of the superordinate second stack program object is defined and a memory size (SG) and a memory position (P) within the data structure of the superordinate second program object are determined for each subordinate stack partial program object;
identifying a subordinate stack partial program object of the superordinate second stack program object which is separated from a first memory location of the superordinate second stack program object by the second address offset in accordance with the data structure of the superordinate second stack program object, and identifying the subordinate stack partial program object of the superordinate second stack program object as the first stack program object, the memory address of which corresponds to the pointer address (ZA) of the pointer element.

8. Method (100) according to Claim 7, wherein a stack program object of the stack (ST) is configured as a superordinate third stack program object, wherein the superordinate third stack program object comprises at least one subordinate stack partial program object, wherein the superordinate second stack program object is comprised as a subordinate stack partial program object by the superordinate third stack program object, and wherein the second stack program object identifying step (155) comprises:
identifying a program object of the stack (ST) for which, in accordance with the respective memory position (P) and the memory size (SG), a memory area is defined which comprises a memory location separated from the first memory location of the stack (ST) by the first stack address offset, as the superordinate third stack program object, and identifying the superordinate third stack program object as the program object occupying, in the second memory area (SP2) of the stack (ST), a memory area comprising the pointer address (ZA) of the pointer element, in a third stack program object identifying step (161);
determining a third stack address offset in a third stack address offset determining step (163), wherein the third stack address offset is determined by a difference between the first stack address offset and a first relative memory address of the third stack program object;
determining a data type of the superordinate third stack program object in a third stack data type determining step (165), wherein the data type determines a data structure of the superordinate third stack program object in which a number of subordinate stack partial program objects of the superordinate third stack program object are defined and a memory size (SG) and a memory position (P) within the data structure of the superordinate third stack program object are determined for each subordinate stack partial program object;
identifying a subordinate stack partial program object of the superordinate third stack program object which is separated from a first memory location of the superordinate third stack program object by the third stack address offset in accordance with the data structure of the superordinate third stack program object, and identifying the subordinate stack partial program object of the superordinate third stack program object as the superordinate second stack program object occupying, in the second memory area (SP2) of the stack, a memory area comprising the pointer address (ZA) of the pointer element; and
wherein the second stack address offset is determined by a difference between the first stack address offset and a sum of the first relative memory address of the third stack program object and the first relative memory address of the second stack program object.

9. Method (100) according to Claim 7 or 8, wherein a stack program object of the stack (ST) is configured as a superordinate n-th stack program object, wherein the superordinate n-th stack program object comprises, at n-1-times nesting depth, subordinate stack partial program objects comprising one another, wherein the superordinate second stack program object is comprised as a subordinate stack partial program object at n-2-nd nesting depth by the superordinate n-th stack program object, wherein the first stack program object is comprised as a subordinate stack partial program object at n-1-th nesting depth by the superordinate n-th stack program object, wherein n is a natural number and greater than or equal to 4, and wherein the first stack program object identifying step (149) comprises:
identifying a program object of the stack (ST) for which, in accordance with the respective memory position (P) and memory size (SG), a memory area is defined which comprises a memory location separated from the first memory location of the stack (ST) by the first stack address offset, as the superordinate n-th stack program object, and identifying the superordinate n-th stack program object as the program object occupying, in the second memory area (SP2) of the stack (ST), a memory area comprising the pointer address (ZA) of the pointer element, in an n-th stack program object identifying step (167); determining an n-th stack address offset in an n-th stack address offset determining step (169), wherein the n-th stack address offset is determined by a difference between the first stack address offset and a first relative memory address of the n-th stack program object;
determining a data type of the superordinate n-th stack program object in an n-th stack data type determining step (171), wherein the data type determines a data structure of the superordinate n-th stack program object in which a number of subordinate stack partial program objects of the superordinate n-th stack program object are defined and a memory size (SG) and a memory position (P) within the data structure of the superordinate n-th stack program object are determined for each subordinate stack partial program object;
identifying a subordinate stack partial program object of the superordinate n-th stack program object, which is separated from a first memory location of the superordinate n-th stack program object by the n-th stack address offset in accordance with the data structure of the superordinate n-th stack program object, and identifying the subordinate stack partial program object of the superordinate n-th stack program object as a superordinate n-1-th stack program object occupying, in the second memory area (SP2) of the stack (ST), a memory area comprising the pointer address (ZA) of the pointer element, in an n-1-th stack program object identifying step (173); wherein the n-1-th stack program object identifying step (173) comprises:
determining an n-1-th stack address offset in an n-1-th stack address offset determining step (175), wherein the n-1-th stack address offset is determined by a difference between the first stack address offset and a sum of the first relative memory address of the n-th stack program object and a first relative memory address of the n-1-th stack program object;
determining a data type of the superordinate n-th stack program object in an n-1-th stack data type determining step (177), wherein the data type determines a data structure of the superordinate n-1-th stack program object in which a number of subordinate stack partial program objects of the superordinate n-1-th stack program object are defined and a memory size (SG) and a memory position (P) within the data structure of the superordinate n-1-th stack program object are determined for each subordinate stack partial program object;
identifying a subordinate stack partial program object of the superordinate n-1-th stack program object which is separated from a first memory location of the superordinate n-1-th stack program object by the n-1-th stack address offset in accordance with the data structure of the superordinate n-1-th stack program object, and identifying the subordinate stack partial program object of the superordinate n-1-th stack program object as a superordinate n-2-nd stack program object occupying, in the second memory area (SP2) of the program state (PZ), a memory area comprising the pointer address (ZA) of the pointer element, in an n-2-nd stack program object identifying step (179);
wherein the n-2-nd stack program object identifying step (179) comprises:
if it holds true that n-2 > 2, recursively executing the n-1-th stack address offset determining step (175) and the n-2-nd stack program object identifying step (179) in a further recursion step (181);
determining a second stack address offset in the second stack address offset determining step (157), wherein the second stack address offset is determined by a difference between the first stack address offset and a sum of first relative memory addresses of the n-th stack program object to the second stack program object;
determining a data type of the superordinate second stack program object in a second stack data type determining step (159), wherein the data type determines a data structure of the superordinate second stack program object in which a number of subordinate stack partial program objects of the superordinate second stack program object are defined and a memory size (SG) and a memory position (P) within the data structure of the superordinate second stack program object are determined for each subordinate stack partial program object;
identifying a subordinate stack partial program object of the superordinate second stack program object which is separated from a first memory location of the superordinate second stack program object by the second address offset in accordance with the data structure of the superordinate second stack program object, and identifying the subordinate stack partial program object of the superordinate second stack program object as the first stack program object, the memory address of which corresponds to the pointer address (ZA) of the pointer element.

10. Method (100) according to any one of the preceding claims, furthermore comprising:
determining a data type of the first program object (PO1) in a first data type determining step (183), wherein the data type of the first program object determines a data structure of the first program object (PO1); and/or
determining a data type of the first stack program object in a first stack data type determining step (185), wherein the data type of the first program object determines a data structure of the first program object (PO1).

11. Method (100) according to any one of the preceding claims, wherein the fully qualified designation of the pointer object (ZO) referenced by the pointer element comprises the designations of the first program object and/or of the superordinate program objects or the designations of the first stack program object and/or of the superordinate stack program objects and/or of the identified frame and/or a name of the identified function, and wherein a superordinate program object or a superordinate stack program object is of a composite type, a field type or a character string type.

12. Method (100) according to any one of the preceding claims, furthermore comprising:
selecting a plurality of program objects of the program state (PZ) in a selecting step (187), wherein a selected program object is the pointer element;
determining fully qualified designations of the selected program objects in the full designation determining step (113); and
displaying the fully qualified designations of the selected program objects on the display element, connected to the controller, in the displaying step (115) .

13. Method (100) according to any one of the preceding claims, wherein, in the displaying step (115), a value of the respective program object (PO) is displayed in addition to the fully qualified designation, and wherein the method (100) furthermore comprises:
adapting at least one value of a program object (PO) in an adapting step (189); and
controlling an automation process by means of the control program taking into account the at least one changed value of the at least one program object (PO) in a controlling step (191).

14. Method (100) according to any one of the preceding claims, wherein the method (100) is executable in a debugging process and/or is executed in a control process of the automation system (200), and wherein the display element is configured as a human-machine interface and is integrated into the controller.

15. Automation system (200) comprising a controller and a display element (207) connected to the controller (201), wherein the controller (201) is configured to execute the method (100) according to any one of the preceding Claims 1 to 14.

## Revendications

1. Procédé (100) de commande d'un système d'automatisation (200) avec visualisation d'objets de programme d'un programme de commande d'un système d'automatisation (200), une commande (201) du système d'automatisation (200) comprenant un programme de commande, un état de programme (PZ) du programme de commande étant mémorisé dans une première zone de mémoire (SP1) de la commande, l'état de programme (PZ) comprenant une pluralité d'objets de programme du programme de commande, les objets de programme (PO) étant disposés dans une structure d'agencement prédéterminée de l'état de programme (PZ) les uns par rapport aux autres, une position de mémoire (P) et une taille de mémoire (SG) étant associées à chaque objet de programme (PO) par le biais de la structure d'agencement, une position de mémoire (P) d'un objet de programme (PO) définissant un nombre d'emplacements de mémoire par lesquels un objet de programme (PO) dans une zone de mémoire est mémorisé espacé d'un premier emplacement de mémoire de l'état de programme (PZ), une taille de mémoire (SG) d'un objet de programme (PO) définissant un nombre d'emplacements de mémoire qu'occupe un objet de mémoire dans une zone de mémoire, l'état de programme (PZ) comprenant au moins un élément pointeur, un objet de pointeur (ZO) étant référencé par l'élément pointeur, l'objet de pointeur (ZO) étant un objet de programme (PO) du programme de commande, une pile du programme de commande étant établie dans une deuxième zone de mémoire (SP2) de la commande et des objets de programme (PO) pouvant être mémorisés dans la pile pendant une période d'exécution du programme de commande, comprenant :
exécution du programme de commande dans une étape d'exécution (101) ;
détermination d'une adresse de pointeur (ZA) de l'élément pointeur dans une étape de détermination d'adresse de pointeur (103), l'adresse de pointeur (ZA) correspondant à une adresse de mémoire référencée par l'élément pointeur ;
vérification si l'adresse de pointeur (ZA) de l'élément pointeur est disposée dans la première zone de mémoire (SP1) de l'état de programme (PZ) ou dans la deuxième zone de mémoire (SP2) de la pile, dans une étape de vérification (105),
**caractérisé par**,
dans le cas où l'adresse de pointeur (ZA) de l'élément pointeur est disposée dans la première zone de mémoire (SP1) de l'état de programme (PZ), spécification d'un premier décalage d'adresse (AO1) de l'adresse de pointeur (ZA) de l'élément pointeur dans une étape de spécification de premier décalage d'adresse (107), le premier décalage d'adresse (AO1) définissant un nombre d'emplacements de mémoire par lesquels l'adresse de pointeur (ZA) de l'élément pointeur est espacée d'une première adresse de mémoire de l'état de programme (PZ) dans la première zone de mémoire (SP1) ;
identification d'un objet de programme (PO) qui, selon la structure d'agencement de l'état de programme (PZ), est espacé par le premier décalage d'adresse (AO1) du premier emplacement de mémoire de l'état de programme (PZ), en tant qu'un premier objet de programme (PO1) dont l'adresse de mémoire dans la première zone de mémoire (SP1) correspond à l'adresse de pointeur (ZA) de l'élément pointeur, dans une étape d'identification de premier objet de programme (109) ;
identification du premier objet de programme (PO1) avec l'objet de pointeur (ZO) référencé par l'élément pointeur dans une étape d'identification d'objet de pointeur (111) ;
spécification, dans une étape de spécification de désignation complète (113), d'une désignation pleinement qualifiée de l'objet de pointeur (ZO) identifié, la désignation pleinement qualifiée de l'objet de pointeur (ZO) identifié comprenant un nom du premier objet de programme (PO1) identifié ; et
affichage de la désignation pleinement qualifiée de l'objet de pointeur (ZO) référencé par l'élément pointeur sur un élément d'affichage relié à la commande dans une étape d'affichage (115).

2. Procédé (100) selon la revendication 1, un objet de programme (PO) de l'état de programme (PZ) étant configuré en tant qu'un deuxième objet de programme (PO2) de niveau supérieur, le deuxième objet de programme (PO2) de niveau supérieur comprenant au moins un objet de programme partiel (TPO) de niveau inférieur, le premier objet de programme (PO1) étant compris en tant qu'objet de programme partiel (TPO) de niveau inférieur par le deuxième objet de programme (PO2) de niveau supérieur et l'étape d'identification de premier objet de programme (109) comprenant :
identification d'un objet de programme (PO) de l'état de programme (PZ) pour lequel, selon la position de mémoire (P) et la taille de mémoire (SG) respectives, est définie une zone de mémoire qui comprend un emplacement de mémoire qui est espacé par le premier décalage d'adresse (AO1) du premier emplacement de mémoire de l'état de programme (PZ), en tant que le deuxième objet de programme (PO2) de niveau supérieur et identification du deuxième objet de programme (PO2) de niveau supérieur en tant que l'objet de programme (PO) qui, dans la première zone de mémoire (SP1) de l'état de programme (PZ), occupe une zone de mémoire qui comprend l'adresse de pointeur (ZA) de l'élément pointeur, dans une étape d'identification de deuxième objet de programme (117) ;
spécification d'un deuxième décalage d'adresse (AO2) dans une étape de spécification de deuxième décalage d'adresse (119), le deuxième décalage d'adresse (AO2) étant spécifié par une différence entre le premier décalage d'adresse (AO1) et une première adresse de mémoire relative (SPO2) du deuxième objet de programme (PO2) ;
spécification d'un type de données du deuxième objet de programme (PO2) de niveau supérieur dans une étape de spécification de deuxième type de données (121), le type de données spécifiant une structure de données du deuxième objet de programme (PO2) de niveau supérieur, dans laquelle est défini un certain nombre d'objets de programme partiels (TPO) de niveau inférieur du deuxième objet de programme (PO2) de niveau supérieur et une taille de mémoire (SG) ainsi qu'une position de mémoire (P) au sein de la structure de données du deuxième objet de programme (PO2) de niveau supérieur étant spécifiées pour chaque objet de programme partiel (TPO) de niveau inférieur ;
identification d'un objet de programme partiel (TPO) de niveau inférieur du deuxième objet de programme (PO2) de niveau supérieur qui, selon la structure de données du deuxième objet de programme (PO2) de niveau supérieur, est espacé par le deuxième décalage d'adresse (AO2) d'un premier emplacement de mémoire du deuxième objet de programme (PO2) de niveau supérieur, et identification de l'objet de programme partiel (TPO) de niveau inférieur du deuxième objet de programme (PO2) de niveau supérieur en tant que le premier objet de programme (PO1) dont l'adresse de mémoire correspond à l'adresse de pointeur (ZA) de l'élément pointeur.

3. Procédé (100) selon la revendication 2, un objet de programme (PO) de l'état de programme (PZ) étant configuré en tant qu'un troisième objet de programme (PO3) de niveau supérieur, le troisième objet de programme (PO3) de niveau supérieur comprenant au moins un objet de programme partiel (TPO) de niveau inférieur, le deuxième objet de programme (PO2) de niveau supérieur étant compris en tant qu'un objet de programme partiel (TPO) de niveau inférieur par le troisième objet de programme (PO3) de niveau supérieur, l'étape d'identification de deuxième objet de programme (117) comprenant :
identification d'un objet de programme (PO) de l'état de programme (PZ) pour lequel, selon la position de mémoire (P) et la taille de mémoire (SG) respectives, est définie une zone de mémoire qui comprend un emplacement de mémoire qui est espacé par le premier décalage d'adresse (AO1) du premier emplacement de mémoire de l'état de programme (PZ), en tant que le troisième objet de programme (PO3) de niveau supérieur et identification du troisième objet de programme (PO3) de niveau supérieur en tant que l'objet de programme (PO) qui, dans la première zone de mémoire (SP1) de l'état de programme (PZ), occupe une zone de mémoire qui comprend l'adresse de pointeur (ZA) de l'élément pointeur, dans une étape d'identification de troisième objet de programme (123) ;
spécification d'un troisième décalage d'adresse (AO3) dans une étape de spécification de troisième décalage d'adresse (125), le troisième décalage d'adresse (AO3) étant spécifié par une différence entre le premier décalage d'adresse (AO1) et une première adresse de mémoire relative (SPO3) du troisième objet de programme (PO3) ;
spécification d'un type de données du troisième objet de programme (PO3) de niveau supérieur dans une étape de spécification de troisième type de données (127), le type de données spécifiant une structure de données du troisième objet de programme (PO3) de niveau supérieur, dans laquelle est défini un certain nombre d'objets de programme partiels (TPO) de niveau inférieur du troisième objet de programme (PO3) de niveau supérieur et une taille de mémoire (SG) ainsi qu'une position de mémoire (P) au sein de la structure de données du deuxième objet de programme (PO3) de niveau supérieur étant spécifiées pour chaque objet de programme partiel (TPO) de niveau inférieur ;
identification d'un objet de programme partiel (TPO) de niveau inférieur du troisième objet de programme (PO3) de niveau supérieur qui, selon la structure de données du troisième objet de programme (PO3) de niveau supérieur, est espacé par le troisième décalage d'adresse (AO3) d'un premier emplacement de mémoire du troisième objet de programme (PO3) de niveau supérieur, et identification de l'objet de programme partiel (TPO) de niveau inférieur du troisième objet de programme (PO3) de niveau supérieur en tant que le deuxième objet de programme (PO2) de niveau supérieur qui, dans la première zone de mémoire (SP1) de l'état de programme (PZ), occupe une zone de mémoire qui comprend l'adresse de pointeur (ZA) de l'élément pointeur ;
et le deuxième décalage d'adresse (AO2) étant spécifié par une différence entre le premier décalage d'adresse (AO1) et une somme de la première adresse de mémoire (SPO3) relative du troisième objet de programme (PO3) et de la première adresse de mémoire (SPO2) relative du deuxième objet de programme (PO2).

4. Procédé (100) selon la revendication 2, un objet de programme (PO) de l'état de programme (PZ) étant configuré en tant qu'un n-ième objet de programme de niveau supérieur, le n-ième objet de programme de niveau supérieur comprenant des objets de programme partiels (TPO) de niveau inférieur se comprenant mutuellement en n-1 profondeurs d'imbrication, le deuxième objet de programme (PO2) de niveau supérieur étant compris en tant qu'un objet de programme partiel (TPO) de niveau inférieur dans la n-2-ième profondeur d'imbrication du n-ième objet de programme de niveau supérieur, le premier objet de programme (PO1) étant compris en tant qu'un objet de programme partiel (TPO) de niveau inférieur par le n-ième objet de programme de niveau supérieur dans la n-1-ième profondeur d'imbrication, n étant un nombre naturel et étant égal ou supérieur à 4, et l'étape d'identification de premier objet de programme (109) comprenant :
identification d'un objet de programme (PO) de l'état de programme (PZ) pour lequel, selon la position de mémoire (P) et la taille de mémoire (SG) respectives, est définie une zone de mémoire qui comprend un emplacement de mémoire qui est espacé par le premier décalage d'adresse (AO1) du premier emplacement de mémoire de l'état de programme (PZ), en tant que le n-ième objet de programme de niveau supérieur et identification du n-ième objet de programme de niveau supérieur en tant que l'objet de programme (PO) qui, dans la première zone de mémoire (SP1) de l'état de programme (PZ), occupe une zone de mémoire qui comprend l'adresse de pointeur (ZA) de l'élément pointeur, dans une étape d'identification de n-ième objet de programme (129) ;
spécification d'un n-ième décalage d'adresse dans une étape de spécification de n-ième décalage d'adresse (131), le n-ième décalage d'adresse étant spécifié par une différence entre le premier décalage d'adresse (AO1) et une première adresse de mémoire relative du n-ième objet de programme ;
spécification d'un type de données du n-ième objet de programme de niveau supérieur dans une étape de spécification de n-ième type de données (133), le type de données spécifiant une structure de données du n-ième objet de programme de niveau supérieur dans laquelle est défini un certain nombre d'objets de programme partiels de niveau inférieur du n-ième objet de programme de niveau supérieur, et une taille de mémoire (SG) ainsi qu'une position de mémoire (P) au sein de la structure de données du n-ième objet de programme de niveau supérieur étant spécifiées pour chaque objet de programme partiel de niveau inférieur ; identification d'un objet de programme partiel (TPO) de niveau inférieur du n-ième objet de programme de niveau supérieur qui, selon la structure de données du n-ième objet de programme de niveau supérieur, est espacé par le n-ième décalage d'adresse d'un premier emplacement de mémoire du n-ième objet de programme de niveau supérieur, et identification de l'objet de programme partiel (TPO) de niveau inférieur du n-ième objet de programme de niveau supérieur en tant qu'un n-1-ième objet de programme de niveau supérieur qui, dans la première zone de mémoire (SP1) de l'état de programme (PZ), occupe une zone de mémoire qui comprend l'adresse de pointeur (ZA) de l'élément pointeur dans une étape d'identification de n-1-ième objet de programme (135) ; l'étape d'identification de n-1-ième objet de programme (135) comprenant :
spécification d'un n-1-ième décalage d'adresse dans une étape de spécification de n-1-ième décalage d'adresse (137), le n-1-ième décalage d'adresse étant spécifié par une différence entre le premier décalage d'adresse (AO1) et une somme de la première adresse de mémoire relative du n-ième objet de programme et une première adresse relative du n-1-ième objet de programme ;
spécification d'un type de données du n-1-ième objet de programme de niveau supérieur dans une étape de spécification de n-1-ième type de données (139), le type de données spécifiant une structure de données du n-1-ième objet de programme de niveau supérieur dans laquelle est défini un certain nombre d'objets de programme partiels de niveau inférieur du n-1-ième objet de programme de niveau supérieur, et une taille de mémoire (SG) ainsi qu'une position de mémoire (P) au sein de la structure de données du n-1-ième objet de programme de niveau supérieur étant spécifiées pour chaque objet de programme partiel de niveau inférieur ;
identification d'un objet de programme partiel (TPO) de niveau inférieur du n-1-ième objet de programme de niveau supérieur qui, selon la structure de données du n-1-ième objet de programme de niveau supérieur, est espacé par le n-1-ième décalage d'adresse d'un premier emplacement de mémoire du n-1-ième objet de programme de niveau supérieur, et identification de l'objet de programme partiel (TPO) de niveau inférieur du n-1-ième objet de programme de niveau supérieur en tant qu'un n-2-ième objet de programme de niveau supérieur qui, dans la première zone de mémoire (SP1) de l'état de programme (PZ), occupe une zone de mémoire qui comprend l'adresse de pointeur (ZA) de l'élément pointeur dans une étape d'identification de n-2-ième objet de programme (141) ;
dans le cas où la relation n-2>2 est vérifiée, exécution récursive de l'étape de spécification de n-1-ième décalage d'adresse (137), de l'étape de spécification de n-1-ième type de données (139) et de l'étape d'identification de n-2-ième objet de programme (141) dans une étape de récursion (143) ;
spécification du deuxième décalage d'adresse (AO2) dans l'étape de spécification de deuxième décalage d'adresse (119), le deuxième décalage d'adresse (AO2) étant spécifié par une différence entre le premier décalage d'adresse (AO1) et une somme des premières adresses de mémoire relatives du n-ième objet de programme jusqu'au deuxième objet de programme (PO2) ;
spécification d'un type de données du 2-ième objet de programme (PO2) de niveau supérieur dans l'étape de spécification de deuxième type de données (121), le type de données spécifiant une structure de données du deuxième objet de programme (PO2) de niveau supérieur, dans laquelle est défini un certain nombre d'objets de programme partiels de niveau inférieur du 2-ième objet de programme (PO2) de niveau supérieur, et une taille de mémoire (SG) ainsi qu'une position de mémoire (P) au sein de la structure de données du deuxième objet de programme de niveau supérieur étant spécifiées pour chaque objet de programme partiel (TPO) de niveau inférieur ;
identification de l'objet de programme partiel (TPO) de niveau inférieur du deuxième objet de programme (PO2) de niveau supérieur qui, selon la structure de données du n-1-ième objet de programme de niveau supérieur, est espacé par le deuxième décalage d'adresse (AO2) d'un premier emplacement de mémoire du deuxième objet de programme (PO2) de niveau supérieur, et identification de l'objet de programme partiel (TPO) de niveau inférieur du deuxième objet de programme (PO2) de niveau supérieur en tant que le premier objet de programme (PO1) dont l'adresse de mémoire correspond à l'adresse de pointeur (ZA) de l'élément pointeur.

5. Procédé (100) selon l'une des revendications précédentes, comprenant en outre :
dans le cas où l'adresse de pointeur (ZA) de l'élément pointeur est disposée dans la deuxième zone de mémoire (SP2) de la pile (ST), spécification d'une structure de la pile (ST) dans une étape de spécification de structure de pile (145), une position de mémoire (P) et une taille de mémoire (SG) étant associées par le biais de la structure de la pile à chaque objet de programme de pile mémorisé dans la pile (ST), une position de mémoire (P) d'un objet de programme de pile définissant un nombre d'emplacements de mémoire par lesquels un objet de programme de pile est mémorisé dans une zone de mémoire en étant espacé d'un premier emplacement de mémoire de la pile (ST) ;
spécification d'un premier décalage d'adresse de pile de l'adresse de pointeur (ZA) de l'élément pointeur dans une étape de spécification de premier décalage d'adresse de pile (147), le premier décalage d'adresse de pile définissant un nombre d'emplacements de mémoire par lesquels l'adresse de pointeur (ZA) de l'élément pointeur est espacée d'une première adresse de mémoire de la pile (ST) dans la deuxième zone de mémoire (SP2) ; identification d'un objet de programme de pile qui, selon une structure d'agencement de la pile (ST), dans laquelle une position de mémoire (P) ainsi qu'une taille de mémoire (SG) sont attribuées à chaque objet de programme de pile, est espacé par le premier décalage d'adresse de pile du premier emplacement de mémoire de la pile (ST), en tant qu'un premier objet de programme de pile dont l'adresse de mémoire dans la deuxième zone de mémoire (SP2) correspond à l'adresse de pointeur (ZA) de l'élément pointeur, dans une étape d'identification de premier objet de programme de pile (149) ; et
identification du premier objet de programme de pile avec l'objet de pointeur (ZO) référencé par l'élément pointeur dans l'étape d'identification d'objet de pointeur (111).

6. Procédé (100) selon la revendication 5, l'étape d'identification de premier objet de programme de pile (149) comprenant :
identification, en tenant compte du premier décalage d'adresse de pile de l'adresse de pointeur (ZA) de l'élément pointeur et de la structure d'agencement de la pile (ST), d'une trame de la pile (ST) qui, dans la deuxième zone de mémoire (SP2) de la pile (ST), occupe une zone de mémoire qui comprend l'adresse de mémoire de l'adresse de pointeur (ZA) de l'élément pointeur, dans une étape d'identification de trame (151) ;
identification d'une fonction de la trame identifiée de la pile (ST) dans une étape d'identification de fonction (153) ; et
identification d'une variable locale de la fonction identifiée, dont l'adresse de mémoire correspond à l'adresse de pointeur (ZA) de l'élément pointeur, en tant que premier objet de programme de pile de la pile (ST) dont l'adresse de mémoire correspond à l'adresse de pointeur (ZA) de l'élément pointeur.

7. Procédé (100) selon la revendication 5 ou 6, un objet de programme de pile de la pile (ST) étant configuré comme un deuxième objet de programme de pile de niveau supérieur, le deuxième objet de programme de pile de niveau supérieur comprenant au moins un objet de programme partiel de pile de niveau inférieur, le premier objet de programme de pile étant compris en tant qu'un objet de programme partiel de pile de niveau inférieur par le deuxième objet de programme de pile de niveau supérieur et l'étape d'identification de premier objet de programme de pile (149) comprenant :
identification d'un objet de programme de la pile (ST) pour lequel, selon la position de mémoire (P) et la taille de mémoire (SG) respectives, est définie une zone de mémoire qui comprend un emplacement de mémoire qui est espacé par le premier décalage d'adresse de pile du premier emplacement de mémoire de la pile (ST), en tant que le deuxième objet de programme de pile de niveau supérieur et identification du deuxième objet de programme de pile de niveau supérieur en tant que l'objet de programme qui, dans la deuxième zone de mémoire (SP2) de la pile (ST), occupe une zone de mémoire qui comprend l'adresse de pointeur (ZA) de l'élément pointeur, dans une étape d'identification de deuxième objet de programme de pile (155) ;
spécification d'un deuxième décalage d'adresse de pile dans une étape de spécification de deuxième décalage d'adresse de pile (157), le deuxième décalage d'adresse de pile étant spécifié par une différence entre le premier décalage d'adresse de pile et une première adresse de mémoire relative du deuxième objet de programme de pile ;
spécification d'un type de données du deuxième objet de programme de pile de niveau supérieur dans une étape de spécification de deuxième type de données de pile (159), le type de données spécifiant une structure de données du deuxième objet de programme de pile de niveau supérieur dans laquelle est défini un certain nombre d'objets de programme partiels de pile de niveau inférieur du deuxième objet de programme de pile de niveau supérieur, et une taille de mémoire (SG) ainsi qu'une position de mémoire (P) au sein de la structure de données du deuxième objet de programme de niveau supérieur étant spécifiées pour chaque objet de programme partiel de pile de niveau inférieur ;
identification d'un objet de programme partiel de pile de niveau inférieur du deuxième objet de programme de pile de niveau supérieur qui, selon la structure de données du deuxième objet de programme de pile de niveau supérieur, est espacé par le deuxième décalage d'adresse d'un premier emplacement de mémoire du deuxième objet de programme de pile de niveau supérieur, et identification de l'objet de programme partiel de pile de niveau inférieur du deuxième objet de programme de pile de niveau supérieur en tant que le premier objet de programme de pile dont l'adresse de mémoire correspond à l'adresse de pointeur (ZA) de l'élément pointeur.

8. Procédé (100) selon la revendication 7, un objet de programme de pile de la pile (ST) étant configuré en tant que troisième objet de programme de pile de niveau supérieur, le troisième objet de programme de pile de niveau supérieur comprenant au moins un objet de programme partiel de pile de niveau inférieur, le deuxième objet de programme de pile de niveau supérieur étant compris en tant qu'un objet de programme partiel de pile de niveau inférieur par le troisième objet de programme de pile de niveau supérieur et l'étape d'identification de deuxième objet de programme de pile (155) comprenant :
identification d'un objet de programme de la pile (ST) pour lequel, selon la position de mémoire (P) et la taille de mémoire (SG) respectives, est définie une zone de mémoire qui comprend un emplacement de mémoire qui est espacé par le premier décalage d'adresse de pile du premier emplacement de mémoire de la pile (ST), en tant que le troisième objet de programme de pile de niveau supérieur et identification du troisième objet de programme de pile de niveau supérieur en tant que l'objet de programme qui, dans la deuxième zone de mémoire (SP2) de la pile (ST), occupe une zone de mémoire qui comprend l'adresse de pointeur (ZA) de l'élément pointeur, dans une étape d'identification de troisième objet de programme de pile (161) ;
spécification d'un troisième décalage d'adresse de pile dans une étape de spécification de troisième décalage d'adresse de pile (163), le troisième décalage d'adresse de pile étant spécifié par une différence entre le premier décalage d'adresse de pile et une première adresse de mémoire relative du troisième objet de programme de pile ;
spécification d'un type de données du troisième objet de programme de pile de niveau supérieur dans une étape de spécification de troisième type de données de pile (165), le type de données spécifiant une structure de données du troisième objet de programme de pile de niveau supérieur, dans laquelle est défini un certain nombre d'objets de programme partiels de pile de niveau inférieur du troisième objet de programme de pile de niveau supérieur, et une taille de mémoire (SG) ainsi qu'une position de mémoire (P) au sein de la structure de données du troisième objet de programme de pile de niveau supérieur étant spécifiées pour chaque objet de programme partiel de pile de niveau inférieur ;
identification d'un objet de programme partiel de pile de niveau inférieur du troisième objet de programme de pile de niveau supérieur qui, selon la structure de données du troisième objet de programme de pile de niveau supérieur, est espacé par le troisième décalage d'adresse de pile d'un premier emplacement de mémoire du troisième objet de programme de pile de niveau supérieur, et identification de l'objet de programme partiel de pile de niveau inférieur du troisième objet de programme de pile de niveau supérieur en tant que le deuxième objet de programme de pile de niveau supérieur qui, dans la deuxième zone de mémoire (SP2) de la pile, occupe une zone de mémoire qui comprend l'adresse de pointeur (ZA) de l'élément pointeur ; et
le deuxième décalage d'adresse de pile étant spécifié par une différence entre le premier décalage d'adresse de pile et une somme de la première adresse de mémoire relative du troisième objet de programme de pile et la première adresse de mémoire relative du deuxième objet de programme de pile.

9. Procédé (100) selon la revendication 7 ou 8, un objet de programme de pile de la pile (ST) étant configuré comme un n-ième objet de programme de pile de niveau supérieur, le n-ième objet de programme de pile de niveau supérieur comprenant des objets de programme partiels de pile de niveau inférieur se comprenant mutuellement en n-1 profondeurs d'imbrication, le deuxième objet de programme de pile de niveau supérieur étant compris en tant qu'un objet de programme partiel de pile de niveau inférieur dans la n-2-ième profondeur d'imbrication du n-ième objet de programme de pile de niveau supérieur, le premier objet de programme de pile étant compris en tant qu'un objet de programme partiel de pile de niveau inférieur par le n-ième objet de programme de pile de niveau supérieur dans la n-1-ième profondeur d'imbrication, n étant un nombre naturel et étant égal ou supérieur à 4, et l'étape d'identification de premier objet de programme de pile (149) comprenant :
identification d'un objet de programme de la pile (ST) pour lequel, selon la position de mémoire (P) et la taille de mémoire (SG) respectives, est définie une zone de mémoire qui comprend un emplacement de mémoire qui est espacé par le premier décalage d'adresse de pile du premier emplacement de mémoire de la pile (ST), en tant que le n-ième objet de programme de pile de niveau supérieur et identification du n-ième objet de programme de pile de niveau supérieur en tant que l'objet de programme qui, dans la deuxième zone de mémoire (SP2) de la pile (ST), occupe une zone de mémoire qui comprend l'adresse de pointeur (ZA) de l'élément pointeur, dans une étape d'identification de n-ième objet de programme de pile (167) ;
spécification d'un n-ième décalage d'adresse de pile dans une étape de spécification de n-ième décalage d'adresse de pile (169), le n-ième décalage d'adresse de pile étant spécifié par une différence entre le premier décalage d'adresse de pile et une première adresse de mémoire relative du n-ième objet de programme de pile ;
spécification d'un type de données du n-ième objet de programme de pile de niveau supérieur dans une étape de spécification de n-ième type de données de pile (171), le type de données spécifiant une structure de données du n-ième objet de programme de pile de niveau supérieur, dans laquelle est défini un certain nombre d'objets de programme partiels de pile de niveau inférieur du n-ième objet de programme de pile de niveau supérieur, et une taille de mémoire (SG) ainsi qu'une position de mémoire (P) au sein de la structure de données du n-ième objet de programme de pile de niveau supérieur étant spécifiées pour chaque objet de programme partiel de pile de niveau inférieur ;
identification d'un objet de programme partiel de pile de niveau inférieur du n-ième objet de programme de pile de niveau supérieur qui, selon la structure de données du n-ième objet de programme de pile de niveau supérieur, est espacé par le n-ième décalage d'adresse de pile d'un premier emplacement de mémoire du n-ième objet de programme de pile de niveau supérieur, et identification de l'objet de programme partiel de pile de niveau inférieur du n-ième objet de programme de pile de niveau supérieur en tant qu'un n-1-ième objet de programme de pile de niveau supérieur qui, dans la deuxième zone de mémoire (SP2) de la pile (ST), occupe une zone de mémoire qui comprend l'adresse de pointeur (ZA) de l'élément pointeur dans une étape d'identification de n-1-ième objet de programme de pile (173) ;
l'étape d'identification de n-1-ième objet de programme de pile (173) comprenant :
spécification d'un n-1-ième décalage d'adresse de pile dans une étape de spécification de n-1-ième décalage d'adresse de pile (175), le n-1-ième décalage d'adresse de pile étant spécifié par une différence entre le premier décalage d'adresse de pile et une somme de la première adresse de mémoire relative du n-ième objet de programme de pile et une première adresse de mémoire relative du n-1-ième objet de programme de pile ;
spécification d'un type de données du n-ième objet de programme de pile de niveau supérieur dans une étape de spécification de n-1-ième type de données de pile (177), le type de données spécifiant une structure de données du n-1-ième objet de programme de pile de niveau supérieur, dans laquelle est défini un certain nombre d'objets de programme partiels de pile de niveau inférieur du n-1-ième objet de programme de pile de niveau supérieur, et une taille de mémoire (SG) ainsi qu'une position de mémoire (P) au sein de la structure de données du n-1-ième objet de programme de pile de niveau supérieur étant spécifiées pour chaque objet de programme partiel de pile de niveau inférieur ;
identification d'un objet de programme partiel de pile de niveau inférieur du n-1-ième objet de programme de pile de niveau supérieur qui, selon la structure de données du n-1-ième objet de programme de pile de niveau supérieur, est espacé par le n-1-ième décalage d'adresse de pile d'un premier emplacement de mémoire du n-1-ième objet de programme de pile de niveau supérieur, et identification de l'objet de programme partiel de pile de niveau inférieur du n-1-ième objet de programme de pile de niveau supérieur en tant qu'un n-2-ième objet de programme de pile de niveau supérieur qui, dans la deuxième zone de mémoire (SP2) de l'état de programme (PZ), occupe une zone de mémoire qui comprend l'adresse de pointeur (ZA) de l'élément pointeur dans une étape d'identification de n-2-ième objet de programme de pile (179) ;
l'étape d'identification de n-2-ième objet de programme de pile (179) comprenant :
dans le cas où la relation n-2>2 est vérifiée, exécution récursive de l'étape de spécification de n-1-ième décalage d'adresse de pile (175) et de l'étape d'identification de n-2-ième objet de programme de pile (179) dans une étape de récursion supplémentaire (181) ; spécification d'un deuxième décalage d'adresse de pile dans une étape de spécification de deuxième décalage d'adresse de pile (157), le deuxième décalage d'adresse de pile étant spécifié par une différence entre le premier décalage d'adresse de pile et une somme des premières adresses de mémoire relatives du n-ième objet de programme de pile jusqu'au deuxième objet de programme de pile ;
spécification d'un type de données du deuxième objet de programme de pile de niveau supérieur dans une étape de spécification de deuxième type de données de pile (159), le type de données spécifiant une structure de données du deuxième objet de programme de pile de niveau supérieur, dans laquelle est défini un certain nombre d'objets de programme partiels de pile de niveau inférieur du deuxième objet de programme de pile de niveau supérieur, et une taille de mémoire (SG) ainsi qu'une position de mémoire (P) au sein de la structure de données du deuxième objet de programme de pile de niveau supérieur étant spécifiées pour chaque objet de programme partiel de pile de niveau inférieur ;
identification d'un objet de programme partiel de pile de niveau inférieur du deuxième objet de programme de pile de niveau supérieur qui, selon la structure de données du deuxième objet de programme de pile de niveau supérieur, est espacé par le deuxième décalage d'adresse d'un premier emplacement de mémoire du deuxième objet de programme de pile de niveau supérieur, et identification de l'objet de programme partiel de pile de niveau inférieur du deuxième objet de programme de pile de niveau supérieur en tant que le premier objet de programme de pile dont l'adresse de mémoire correspond à l'adresse de pointeur (ZA) de l'élément pointeur.

10. Procédé (100) selon l'une des revendications précédentes, comprenant en outre :
spécification d'un type de données du premier objet de programme (PO1) dans une étape de spécification de premier type de données (183), le type de données du premier objet de programme spécifiant une structure de données du premier objet de programme (PO1) ; et/ou
spécification d'un type de données du premier objet de programme de pile dans une étape de spécification de premier type de données de pile (185), le type de données du premier objet de programme spécifiant une structure de données du premier objet de programme (PO1) .

11. Procédé (100) selon l'une des revendications précédentes, la désignation pleinement qualifiée de l'objet de pointeur (ZO) référencé par l'élément pointeur comprenant les désignations du premier objet de programme et/ou des objets de programme de niveau supérieur ou les désignations du premier objet de programme de pile et/ou des objets de programme de pile de niveau supérieur et/ou de la trame identifiée et/ou un nom de la fonction identifiée, et un objet de programme de niveau supérieur ou un objet de programme de pile de niveau supérieur étant d'un type composite, d'un type champ ou d'un type chaîne de caractères.

12. Procédé (100) selon l'une des revendications précédentes, comprenant en outre :
sélection d'une pluralité d'objets de programme de l'état de programme (PZ) dans une étape de sélection (187), un objet de programme sélectionné étant l'élément pointeur ;
spécification de désignations pleinement qualifiées des objets de programme sélectionnés dans une étape de spécification de désignation complète (113) ; et
affichage des désignations pleinement qualifiées des objets de programme sélectionnés sur l'élément d'affichage relié à la commande dans l'étape d'affichage (115).

13. Procédé (100) selon l'une des revendications précédentes, une valeur de l'objet de programme (PO) respectif étant affichée dans l'étape d'affichage (115) en plus de la désignation pleinement qualifiée, et le procédé (100) comprenant en outre :
adaptation d'au moins une valeur d'un objet de programme (PO) dans une étape d'adaptation (189) ; et
commande d'un processus d'automatisation par le programme de commande en tenant compte de l'au moins une valeur modifiée de l'au moins un objet de programme (PO) dans une étape de commande (191).

14. Procédé (100) selon l'une des revendications précédentes, le procédé (100) pouvant être mis en oeuvre dans un processus de débogage et/ou étant mis en oeuvre dans un processus de commande du système d'automatisation (200), et l'élément d'affichage étant réalisé sous la forme d'une interface homme-machine et étant intégré dans la commande.

15. Système d'automatisation (200) comprenant une commande et un élément d'affichage (207) relié à la commande (201), la commande (201) étant configurée pour mettre en oeuvre le procédé (100) selon l'une des revendications précédentes 1 à 14.
